# FASCICULE DE BREVET EUROPEEN

(11) **EP 4 045 336 B1**
(45) Date de publication et mention de la délivrance du brevet: **26.07.2023**
(21) Numéro de dépôt: 20799776.8
(22) Date de dépôt: 15.10.2020
(51) Int. Cl.: B60C 5/14, B60C 9/06, B60C 9/08, B60C 9/22, B29D 30/06, B29D 30/00, B60C 9/20, B60C 9/04, B29D 30/30, B29D 30/36

(54) **PNEUMATIQUE A EMISSION DE BRUIT REDUIT ET SON PROCEDE DE FABRICATION**
GERÄUSCHARMER REIFEN UND VERFAHREN ZU SEINER HERSTELLUNG
LOW-NOISE TYRE AND METHOD FOR MANUFACTURING SAME

(30) Priorité: 16.10.2019 FR 1911529
(43) Date de publication de la demande: 24.08.2022
(73) Titulaire: COMPAGNIE GENERALE DES ETABLISSEMENTS MICHELIN, 63000 Clermont-Ferrand (FR)
(72) Inventeur: ROTY, Gael, 63040 CLERMONT-FERRAND Cedex 9 (FR); MERINO LOPEZ, José, 63040 CLERMONT-FERRAND Cedex 9 (FR); MUHLHOFF, Olivier, 63040 CLERMONT-FERRAND Cedex 9 (FR)
(74) Mandataire: Desbordes, Guillaume
(86) Numéro de dépôt international: PCT/FR2020/051837
(87) Numéro de publication internationale: WO 2021/074533

(56) Documents cités:
- EP-A1- 1 623 819
- EP-A1- 1 842 658
- EP-A1- 2 848 430
- WO-A1-2019/122619
- FR-A1- 2 797 213
- JP-A- 2009 040 117
- JP-A- 2013 010 391

## Description

La présente invention est relative à un pneumatique et à des procédés de fabrication d'un tel pneumatique.

On connaît de l'état de la technique des pneumatiques comprenant un sommet, deux flancs, deux bourrelets, chaque flanc reliant chaque bourrelet au sommet. Chaque bourrelet comprend au moins un élément de renfort circonférentiel, généralement sous la forme d'une tringle.

Le pneumatique comprend également une armature de carcasse ancrée dans chaque bourrelet et s'étendant dans chaque flanc et dans le sommet. L'armature de carcasse comprend une couche de carcasse comprenant une portion enroulée autour de chaque élément de renfort circonférentiel.

Le sommet comprend une bande de roulement destinée à venir en contact avec un sol lors du roulage du pneumatique ainsi qu'une armature de sommet agencée radialement entre la bande de roulement et l'armature de carcasse. L'armature de sommet comprend une armature de travail comprenant deux couches de travail.

Généralement, l'armature de sommet comprend également une armature de frettage agencée radialement à l'extérieur de l'armature de travail, l'armature de frettage étant délimitée axialement par deux bords axiaux et comprenant au moins un élément de renfort filaire de frettage enroulé circonférentiellement hélicoïdalement de façon à s'étendre axialement d'un bord axial à l'autre bord axial de l'armature de frettage selon une direction principale du ou de chaque élément de renfort filaire de frettage.

Dans la plupart des cas, le pneumatique comprend une couche d'étanchéité à un gaz de gonflage, la couche d'étanchéité étant destinée à délimiter une cavité interne fermée avec un support de montage du pneumatique une fois le pneumatique monté sur le support de montage, par exemple une jante. La couche d'étanchéité comprend une jonction entre deux bords d'extrémité circonférentielle de la couche d'étanchéité, la jonction formant une superposition radiale entre un des bords d'extrémité circonférentielle de la couche d'étanchéité et l'autre des bords d'extrémité circonférentielle de la couche d'étanchéité, la jonction s'étendant selon une direction principale formant, avec la direction circonférentielle du pneumatique, un angle constant sensiblement égal à 90°.

Une telle jonction est responsable de défaut d'uniformité générant des vibrations susceptibles de créer de l'inconfort, notamment du bruit. Or, il est souhaitable de réduire les vibrations émises par le pneumatique, notamment pour réduire le bruit au roulage émis par le pneumatique.

JP2009040117 divulgue de modifier l'angle formé par la direction principale de la jonction avec la direction circonférentielle du pneumatique. Ainsi, JP2009040117 enseigne qu'un angle significativement inférieur à 90° permet de réduire le bruit émis par le pneumatique. Afin de former une telle jonction, JP2009040117 divulgue une étape de procédé dans laquelle on forme par enroulement de la nappe d'étanchéité autour d'un support, un ensemble d'étanchéité enroulé destiné à former la couche d'étanchéité, l'ensemble d'étanchéité enroulé étant délimité axialement par deux bords axiaux de l'ensemble d'étanchéité enroulé. La direction principale de la jonction forme, avec la direction circonférentielle du support, un angle sensiblement constant, sur l'ensemble de la largeur axiale de l'ensemble d'étanchéité enroulé entre les deux bords axiaux. Plus l'angle est petit, plus la jonction s'étend circonférentiellement selon une longueur circonférentielle importante.

Or, au cours du procédé de fabrication, on réalise une étape de réticulation d'une ébauche crue comprenant l'ensemble d'étanchéité enroulé. Cette étape de réticulation est réalisée dans un moule de réticulation comprenant une membrane déformable destinée à appliquer une pression sur une surface radialement interne de l'ensemble d'étanchéité enroulé.

Préalablement à l'étape de réticulation, on revêt d'une composition anti-adhésive la surface radialement interne de l'ensemble d'étanchéité enroulé destiné à venir au contact d'une surface radialement et axialement externe de la membrane déformable lors de l'étape de réticulation. La composition anti-adhésive permet d'éviter, qu'à l'issue de l'étape de réticulation, la membrane ne reste collée à la couche d'étanchéité alors formée et ne détériore cette dernière. Afin d'éviter que la composition anti-adhésive ne pénètre dans le pneumatique au travers de la jonction, on utilise généralement un moyen de masquage de la jonction, par exemple un cache, qui présente une longueur circonférentielle au moins égale à la longueur circonférentielle de la jonction.

Une autre solution, décrite dans WO2019/158852, consiste à utiliser une membrane présentant un motif de surface spécifique permettant d'éviter l'adhésion de la membrane à la surface radialement interne de l'ensemble d'étanchéité. Néanmoins, même avec une telle membrane, le risque d'adhésion n'est pas totalement écarté et est d'autant plus important que la longueur circonférentielle de la jonction est grande.

Or, dans JP2009040117, la jonction présente une longueur circonférentielle d'autant plus importante que l'angle formé par la direction principale de la jonction avec la direction circonférentielle est petit.

Dans le cas d'utilisation d'un moyen de masquage, il est alors nécessaire d'utiliser un moyen de masquage présentant une longueur circonférentielle relativement importante ou bien de positionner avec un angle sensiblement égal à celui de la direction principale de la jonction, un moyen de masquage de longueur circonférentielle réduite. Dans le cas d'utilisation d'une membrane présentant un motif de surface spécifique, une longueur circonférentielle trop importante laisse subsister un risque d'adhésion.

Dans les deux cas, le positionnement du moyen de masquage s'avère d'autant plus long, fastidieux et risqué que la longueur circonférentielle est importante.

D'autres jonctions sont décrites dans EP1842658A1, JP2013010391A et EP2848430A1.

L'invention a pour but de proposer un pneumatique présentant un compromis amélioré entre la réduction du bruit et la productivité de son procédé de fabrication.

### PNEUMATIQUE SELON L'INVENTION

A cet effet, l'invention a pour objet un pneumatique comprenant un sommet, deux flancs, deux bourrelets, chaque flanc reliant chaque bourrelet au sommet, le pneumatique comprenant une armature de carcasse ancrée dans chaque bourrelet et s'étendant dans chaque flanc et radialement intérieurement au sommet, le sommet comprenant :
- une bande de roulement destinée à venir en contact avec un sol lors du roulage du pneumatique,
- une armature de sommet agencée radialement entre la bande de roulement et l'armature de carcasse, l'armature de carcasse comprenant au moins une couche de carcasse, l'armature de sommet comprenant une armature de travail comprenant au moins une couche de travail,
le pneumatique comprenant une couche d'étanchéité à un gaz de gonflage, la couche d'étanchéité étant destinée à délimiter une cavité interne fermée avec un support de montage du pneumatique une fois le pneumatique monté sur le support de montage, la couche d'étanchéité comprenant une jonction entre deux bords d'extrémité circonférentielle de la couche d'étanchéité, la jonction formant une superposition radiale entre un des bords d'extrémité circonférentielle de la couche d'étanchéité et l'autre des bords d'extrémité circonférentielle de la couche d'étanchéité, la jonction s'étendant selon une direction principale formant, avec la direction circonférentielle du pneumatique :
- dans une portion de la couche d'étanchéité s'étendant axialement à l'aplomb radial de la couche de travail ou de la couche de travail radialement la plus interne et présentant une largeur axiale égale à au moins 40% de la largeur axiale de la couche de travail ou de la couche de travail radialement la plus interne, un angle allant, en valeur absolue, de 20° à 60°,
- dans une portion de la couche d'étanchéité s'étendant radialement dans chaque flanc et présentant une hauteur radiale égale à au moins 5% de la hauteur radiale du pneumatique, un angle, en valeur absolue, strictement supérieur à l'angle de la direction principale de la jonction dans la portion de la couche d'étanchéité s'étendant axialement à l'aplomb radial de la couche de travail ou de la couche de travail radialement la plus interne.

Le pneumatique selon l'invention présente d'une part un bruit significativement réduit du fait de l'angle formé par la direction principale de la jonction avec la direction circonférentielle du pneumatique dans la portion de la couche d'étanchéité s'étendant axialement à l'aplomb radial de la couche de travail ou de la couche de travail radialement la plus interne. En effet, avec un angle, en valeur absolue, inférieur à 60°, on réduit significativement le bruit généré par la jonction. Toutefois, si cet angle devient trop faible, la jonction va s'étendre sur une longueur circonférentielle trop importante. Ainsi, l'invention prévoit que cet angle soit, en valeur absolue, supérieur ou égal à 20° de façon à conserver une longueur circonférentielle relativement réduite.

Une caractéristique essentielle de l'invention est que, pour permettre à la réduction du bruit, il n'est pas nécessaire que la direction principale de la jonction forme avec la direction circonférentielle du pneumatique un angle sur l'ensemble de la largeur axiale de la couche d'étanchéité entre ses deux bords axiaux. En effet, les inventeurs à l'origine de l'invention ont identifié que le bruit généré par la jonction était principalement causé par la jonction dans la portion de la couche d'étanchéité s'étendant axialement à l'aplomb radial de l'aire de contact et dont la plus grande partie s'étend axialement à l'aplomb radial de la couche de travail ou, dans le cas de plusieurs couches de travail, de la couche de travail radialement la plus interne.

Cette découverte leur a alors permis de réduire la longueur circonférentielle de la jonction en donnant un angle relativement élevé à la direction principale de la jonction dans la portion du pneumatique qui ne participait que peu ou pas à la génération du bruit, c'est-à-dire les flancs. Ainsi, l'angle formé par la direction principale de la jonction avec la direction circonférentielle du pneumatique est aussi proche de 90° que possible dans les flancs, et en tout cas supérieur à l'angle formé par la direction principale de la jonction avec la direction circonférentielle du pneumatique à l'aplomb radial de la couche de travail ou, dans le cas de plusieurs couches de travail, de la couche de travail radialement la plus interne, de façon à limiter autant que possible la longueur circonférentielle de la jonction.

Dans la portion de la couche d'étanchéité enroulé s'étendant axialement à l'aplomb radial de la couche de travail ou de la couche de travail radialement la plus interne, la direction principale est confondue avec la courbe de longueur la plus courte passant par :
- un point situé à équidistance selon la direction circonférentielle de chaque premier point de chaque bord d'extrémité circonférentielle situé à une des deux extrémités axiales de la portion de la couche d'étanchéité s'étendant axialement à l'aplomb radial de la couche de travail ou de la couche de travail radialement la plus interne, ces deux premiers points étant en regard l'un de l'autre selon la direction circonférentielle, et
- un point situé à équidistance selon la direction circonférentielle de chaque deuxième point de chaque bord d'extrémité circonférentielle situé à l'autre des deux extrémités axiales de la portion de la couche d'étanchéité s'étendant axialement à l'aplomb radial de la couche de travail ou de la couche de travail radialement la plus interne, ces deux deuxièmes points étant en regard l'un de l'autre selon la direction circonférentielle, les deuxièmes points étant situés de l'autre côté du plan médian du pneumatique par rapport aux premiers points.

Dans la portion de la couche d'étanchéité s'étendant radialement dans chaque flanc, la direction principale est confondue avec la courbe de longueur la plus courte passant par :
- un point situé à équidistance selon la direction circonférentielle de chaque premier point de chaque bord d'extrémité circonférentielle situé à l'une des deux extrémités axiales de la portion de la couche d'étanchéité s'étendant radialement dans chaque flanc, ces deux premiers points étant en regard l'un de l'autre selon la direction circonférentielle, et
- un point situé à équidistance selon la direction circonférentielle de chaque deuxième point de chaque bord d'extrémité circonférentielle situé à l'autre des deux extrémités axiales de la portion de la couche d'étanchéité s'étendant radialement dans chaque flanc, ces deux deuxièmes points étant en regard l'un de l'autre selon la direction circonférentielle, les deuxièmes points étant situés radialement à l'extérieur par rapport aux premiers points.

La couche d'étanchéité est agencée radialement et axialement à l'intérieur de l'armature de carcasse. La surface radialement interne de la couche d'étanchéité est destinée à être au contact du gaz de gonflage ou à être au moins en partie recouverte d'un produit auto-obturant.

Les pneumatiques de l'invention sont préférentiellement destinés à des véhicules de tourisme. Un tel pneumatique présente une section dans un plan de coupe méridien caractérisée par une largeur de section S et une hauteur de section H, au sens de la norme de la European Tyre and Rim Technical Organisation ou « ETRTO », telles que le rapport H/S, exprimé en pourcentage, est au plus égal à 90, de préférence au plus égal à 80 et plus préférentiellement au plus égal à 70 et est au moins égal à 30, de préférence au moins égal à 40, et la largeur de section S est au moins égale à 115 mm, de préférence au moins égale à 155 mm et plus préférentiellement au moins égale à 175 mm et au plus égal à 385 mm, de préférence au plus égal à 315 mm, plus préférentiellement au plus égal à 285 mm et encore plus préférentiellement au plus égal à 255 mm. En outre le diamètre au crochet D, définissant le diamètre de la jante de montage du pneumatique, est au moins égal à 12 pouces, de préférence au moins égal à 16 pouces et au plus égal à 24 pouces, de préférence au plus égal à 20 pouces.

Par direction axiale, on entend la direction sensiblement parallèle à l'axe principal du pneumatique, c'est-à-dire l'axe de rotation du pneumatique.

Par direction circonférentielle, on entend la direction qui est sensiblement perpendiculaire à la fois à la direction axiale et à un rayon du pneumatique (en d'autres termes, tangente à un cercle dont le centre est sur l'axe de rotation du pneumatique).

Par direction radiale, on entend la direction selon un rayon du pneumatique, c'est-à-dire une direction quelconque coupant l'axe de rotation du pneumatique et sensiblement perpendiculaire à cet axe.

Par plan médian du pneumatique (noté M), on entend le plan perpendiculaire à l'axe de rotation du pneumatique qui est situé à mi-distance axiale des deux bourrelets et passe par le milieu axial de l'armature de sommet.

Par plan circonférentiel équatorial du pneumatique (noté E), on entend la surface cylindrique passant par l'équateur du pneumatique, perpendiculaire au plan médian et à la direction radiale. L'équateur du pneumatique est, dans un plan de coupe méridienne (plan perpendiculaire à la direction circonférentielle et parallèle aux directions radiale et axiales) l'axe parallèle à l'axe de rotation du pneumatique et située à équidistance entre le point radialement le plus externe de la bande de roulement destiné à être au contact avec le sol et le point radialement le plus interne du pneumatique destiné à être en contact avec un support, par exemple une jante, la distance entre ces deux points étant égale à H.

Par plan méridien, on entend un plan parallèle à et contenant l'axe de rotation du pneumatique et perpendiculaire à la direction circonférentielle.

Par bourrelet, on entend la portion du pneumatique destiné à permettre l'accrochage du pneumatique sur un support de montage, par exemple une roue comprenant une jante. Ainsi, chaque bourrelet est notamment destiné à être au contact d'un crochet de la jante permettant son accrochage.

Par direction principale selon laquelle un élément de renfort filaire s'étend, on comprend la direction selon laquelle l'élément de renfort filaire s'étend selon sa plus grande longueur. La direction principale selon laquelle un élément de renfort filaire s'étend peut être rectiligne ou courbe, l'élément de renfort pouvant décrire le long de sa direction principale une trajectoire rectiligne ou bien ondulée.

Par portion de l'assemblage, d'une couche ou du pneumatique comprise axialement entre les bords axiaux d'un ensemble enroulé ou d'une couche ou d'une armature, on comprend une portion de l'assemblage, de la couche ou du pneumatique s'étendant axialement et comprise entre les plans radiaux passant par les bords axiaux de l'ensemble enroulé ou de la couche ou de l'armature.

Par portion d'un ensemble enroulé destinée à s'étendre axialement, portion d'un ensemble enroulé s'étendant axialement ou portion d'une couche s'étendant axialement à l'aplomb radial d'un ensemble de référence ou d'une couche de référence, on comprend une portion dudit ensemble ou de ladite couche comprise entre les projections radiale des bords axiaux de l'ensemble de référence ou de la couche de référence sur ledit ensemble ou ladite couche.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Concernant la direction principale de la jonction, dans le pneumatique et le procédé, l'angle considéré est l'angle, en valeur absolue, le plus petit des deux angles définis entre la droite de référence, ici la direction circonférentielle du pneumatique ou du support, et la direction principale selon laquelle la jonction s'étend.

Concernant chaque élément de renfort filaire, dans le pneumatique, l'angle considéré est l'angle, en valeur absolue, le plus petit des deux angles définis entre la droite de référence, ici la direction circonférentielle du pneumatique, et la direction principale selon laquelle l'élément de renfort filaire considéré s'étend.

Concernant chaque élément de renfort filaire, dans le pneumatique et lors du procédé, par orientation d'un angle, on entend le sens, horaire ou anti-horaire, dans lequel il faut tourner depuis la droite de référence, ici la direction circonférentielle du support ou du pneumatique, définissant l'angle pour atteindre la direction principale selon laquelle l'élément de renfort filaire considéré s'étend.

Concernant chaque élément de renfort filaire, lors du procédé, les angles considérés formés par les directions principales selon lesquelles s'étendent les éléments de renfort filaires de travail et de carcasse sont par convention des angles d'orientations opposées et l'angle formé par la direction principale selon laquelle s'étend chaque élément de renfort filaire de travail est, en valeur absolue, le plus petit des deux angles définis entre la droite de référence, ici la direction circonférentielle du support ou du pneumatique et la direction principale selon laquelle l'élément de renfort filaire de travail s'étend. Ainsi, l'angle formé par la direction principale selon laquelle s'étend chaque élément de renfort filaire de travail définit une orientation qui est opposée à celle formée par l'angle de la direction principale selon laquelle s'étend chaque élément de renfort filaire de carcasse.

Conformément à l'invention, la direction principale de la jonction présente, entre les portions, des zones de transition où l'angle est sensiblement variable. La portion de la couche d'étanchéité s'étendant axialement à l'aplomb de la couche de travail ou de la couche de travail radialement la plus interne et dans laquelle la direction principale de la jonction forme, avec la direction circonférentielle du pneumatique, un angle allant, en valeur absolue, de 20° à 60° présente une largeur axiale égale à au moins 40%, de préférence au moins 50% de la largeur axiale de la couche de travail ou de la couche de travail radialement la plus interne.

Dans des modes de réalisation dans lesquels la direction principale de la jonction présente, entre les portions, des zones de transition où l'angle est sensiblement variable, la portion de la couche d'étanchéité s'étendant axialement à l'aplomb de la couche de travail ou de la couche de travail radialement la plus interne et dans laquelle la direction principale de la jonction forme, avec la direction circonférentielle du pneumatique, un angle allant, en valeur absolue, de 20° à 60° présente une largeur axiale égale à au plus 90%, de préférence au plus 80% de la largeur axiale de la couche de travail ou de la couche de travail radialement la plus interne.

Dans des modes de réalisation dans lesquels la direction principale de la jonction présente des zones de transition relativement courtes voire inexistantes, la portion de la couche d'étanchéité s'étendant axialement à l'aplomb de la couche de travail ou de la couche de travail radialement la plus interne et dans laquelle la direction principale de la jonction forme, avec la direction circonférentielle du pneumatique, un angle allant, en valeur absolue, de 20° à 60° présente une largeur axiale égale à au moins 70%, de préférence au moins 80% de la largeur axiale de la couche de travail ou de la couche de travail radialement la plus interne.

De préférence, quel que soit le mode de réalisation, le plan médian du pneumatique coupe cette portion de la couche d'étanchéité s'étendant axialement à l'aplomb de la couche de travail ou de la couche de travail radialement la plus interne. Plus préférentiellement, cette portion de la couche d'étanchéité s'étendant axialement à l'aplomb de la couche de travail ou de la couche de travail radialement la plus interne est centrée axialement sur le plan médian du pneumatique.

Conformément à l'invention, la direction principale de la jonction présente, entre les portions, des zones de transition où l'angle est sensiblement variable. Chaque portion de la couche d'étanchéité s'étendant radialement dans chaque flanc et dans laquelle la direction principale de la jonction forme, avec la direction circonférentielle du pneumatique, un angle strictement supérieur à celui de la direction principale de la jonction dans la portion de la couche d'étanchéité s'étendant axialement à l'aplomb de la couche de travail ou de la couche de travail radialement la plus interne, présente une hauteur radiale égale à au moins 5%, de préférence au moins 15% et plus préférentiellement au moins 30% de la hauteur radiale du pneumatique.

Dans des modes de réalisation dans lesquels la direction principale de la jonction présente, entre les portions, des zones de transition où l'angle est sensiblement variable, chaque portion de la couche d'étanchéité s'étendant radialement dans chaque flanc et dans laquelle la direction principale de la jonction forme, avec la direction circonférentielle du pneumatique, un angle strictement supérieur à celui de la direction principale de la jonction dans la portion de la couche d'étanchéité s'étendant axialement à l'aplomb de la couche de travail ou de la couche de travail radialement la plus interne, présente une hauteur radiale égale à au plus 80%, de préférence au plus 70% et plus préférentiellement au plus 60% de la hauteur radiale du pneumatique.

Dans des modes de réalisation dans lesquels la direction principale de la jonction présente des zones de transition relativement courtes voire inexistantes, chaque portion de la couche d'étanchéité s'étendant radialement dans chaque flanc et dans laquelle la direction principale de la jonction forme, avec la direction circonférentielle du pneumatique, un angle strictement supérieur à celui de la direction principale de la jonction dans la portion de la couche d'étanchéité s'étendant axialement à l'aplomb de la couche de travail ou de la couche de travail radialement la plus interne, présente une hauteur radiale égale à au moins 60%, de préférence au moins 70% de la hauteur radiale du pneumatique.

De préférence, quel que soit le mode de réalisation, le plan circonférentiel équatorial du pneumatique coupe chacune de ces portions de la couche d'étanchéité située dans chaque flanc.

Avantageusement, la direction principale de la jonction forme, avec la direction circonférentielle du pneumatique, un angle, en valeur absolue, supérieur ou égal à 25°, de préférence supérieur ou égal à 30°, dans la portion de la couche d'étanchéité s'étendant axialement à l'aplomb radial de la couche de travail ou de la couche de travail radialement la plus interne. Ainsi, on réduit autant que possible la longueur circonférentielle de la jonction en limitant l'angle dans la portion de la couche d'étanchéité s'étendant axialement à l'aplomb de la couche de travail ou de la couche de travail radialement la plus interne.

Avantageusement, la direction principale de la jonction forme, avec la direction circonférentielle du pneumatique, un angle, en valeur absolue, inférieur ou égal à 50°, de préférence inférieur ou égal à 40°, dans la portion de la couche d'étanchéité s'étendant axialement à l'aplomb radial de la couche de travail ou de la couche de travail radialement la plus interne. Ainsi, on réduit autant que possible le bruit généré par la jonction en limitant l'angle dans la portion de la couche d'étanchéité s'étendant axialement à l'aplomb de la couche de travail ou de la couche de travail radialement la plus interne.

Avantageusement, la direction principale de la jonction forme, avec la direction circonférentielle du pneumatique, un angle, en valeur absolue, allant de 80° à 90° dans la portion de la couche d'étanchéité s'étendant radialement dans chaque flanc. Ainsi, on réduit autant que possible la longueur circonférentielle de la jonction en limitant l'angle dans la portion de la couche d'étanchéité s'étendant radialement dans chaque flanc.

Dans des modes de réalisation avantageux, la distance moyenne entre chaque bord d'extrémité circonférentielle, va de 1 à 15 mm, de préférence de 2 à 8 mm, dans la portion de la couche d'étanchéité s'étendant axialement à l'aplomb radial de la couche de travail ou de la couche de travail radialement la plus interne. Ainsi, on minimise le balourd créé par la superposition radiale, donc les vibrations susceptibles de créer de l'inconfort et au final le bruit émis par la jonction tout en assurant une jonction suffisamment résistante.

De préférence, la distance moyenne entre chaque bord d'extrémité circonférentielle, va de 1 à 15 mm, de préférence de 2 à 8 mm, sur l'ensemble de la largeur axiale de la couche d'étanchéité entre les bords axiaux de la couche d'étanchéité.

Par distance moyenne, on entend la moyenne de dix distances mesurées de façon équiréparties sur la largeur axiale de la portion de la couche d'étanchéité s'étendant axialement à l'aplomb radial de la couche de travail ou de la couche de travail radialement la plus interne ou sur l'ensemble de la largeur axiale de la couche d'étanchéité entre les bords axiaux de la couche d'étanchéité. Chaque distance est la distance curviligne, et donc prenant en compte la courbure du pneumatique, et mesurée selon la direction circonférentielle.

Dans des modes de réalisation avantageux, l'épaisseur moyenne de la couche d'étanchéité va de 0,4 à 1,6 mm, de préférence de 0,9 à 1,4 mm, dans la portion de la couche d'étanchéité s'étendant axialement à l'aplomb radial de la couche de travail ou de la couche de travail radialement la plus interne. Ainsi, en minimisant l'épaisseur moyenne de la couche d'étanchéité, on minimise le balourd créé par la superposition radiale donc les vibrations susceptibles de créer de l'inconfort et au final le bruit émis par la jonction.

De préférence, l'épaisseur moyenne de la couche d'étanchéité va de 0,4 à 1,6 mm, de préférence de 0,9 à 1,4 mm sur l'ensemble de la largeur axiale de la couche d'étanchéité entre les bords axiaux de la couche d'étanchéité.

Par épaisseur moyenne, on entend la moyenne d'une part, de cinq épaisseurs mesurées de façon équiréparties sur la largeur axiale de la portion de la couche d'étanchéité s'étendant axialement à l'aplomb radial de la couche de travail ou de la couche de travail radialement la plus interne ou sur l'ensemble de la largeur axiale de la couche d'étanchéité entre les bords axiaux de la couche d'étanchéité à un premier azimut et, d'autre part, de cinq épaisseurs mesurées de façon équiréparties sur la largeur axiale de la portion de la couche d'étanchéité s'étendant axialement à l'aplomb radial de la couche de travail ou de la couche de travail radialement la plus interne ou sur l'ensemble de la largeur axiale de la couche d'étanchéité entre les bords axiaux de la couche d'étanchéité à un deuxième azimut situé à 180° du premier azimut. Chaque épaisseur est la distance droite entre la surface radialement externe de la couche d'étanchéité et la surface radialement interne de la couche d'étanchéité et est mesurée selon la direction radiale du pneumatique. Bien entendu, chaque épaisseur est mesurée en dehors de la jonction.

Dans des modes de réalisation permettant d'assurer une étanchéité relativement élevée, la couche d'étanchéité comprend une composition élastomérique comprenant une matrice élastomérique comprenant au moins 50 pce d'un ou de plusieurs élastomères butyles.

On entend par partie pour cent d'élastomère ou pce, la partie en poids d'un constituant pour 100 parties en poids du ou des élastomères c'est-à-dire du poids total du ou des élastomères. Ainsi, un constituant à 50 pce signifiera par exemple 50 g de ce constituant pour 100 g d'élastomère.

Par matrice élastomérique, on entend l'ensemble des élastomères de la composition élastomérique. Ainsi, la matrice élastomérique peut notamment être constituée d'un seul élastomère mais aussi d'un coupage de deux ou de plusieurs élastomères.

Par élastomère butyle, on entend un homopolymère d'isobutylène ou un copolymère d'isobutylène et d'isoprène, ainsi que les dérivés halogénés, en particulier généralement bromés ou chlorés, de ces homopolymères d'isobutylène et copolymères d'isobutylène et d'isoprène.

De manière particulièrement préférée, le ou les élastomères butyles utilisables dans la couche d'étanchéité sont choisis parmi les caoutchoucs isobutylène, les copolymères d'isobutylène et d'isoprène (IIR), les caoutchoucs bromobutyles tels que le copolymère bromoisobutylène-isoprène (BIIR) et les caoutchoucs chlorobutyles tels que le copolymère chloroisobutylène-isoprène (CIIR).

Par extension de la définition précédente, on incluera également dans les élastomères butyles, des copolymères d'isobutylène et de dérivés de styrène tels que les copolymères d'isobutylène et méthylstyrène bromé (BIMS) dont fait notamment partie l'élastomère nommé EXXPRO commercialisé par la société Exxon.

Le ou les élastomères butyles utilisables dans la couche d'étanchéité représentent au moins 50 pce, c'est-à-dire qu'ils représentent au moins 50% en poids du poids total de la matrice élastomérique.

D'autres élastomères, par exemple des élastomères diéniques, peuvent également être présents dans la matrice élastomérique. Par élastomère diénique, doit être compris, de manière connue, un ou plusieurs élastomères issus au moins en partie (i.e ; un homopolymère ou un copolymère) de monomères diènes (monomères porteurs de deux doubles liaisons carbone-carbone, conjuguées ou non).

Dans certains modes de réalisation, on pourra envisager une composition élastomérique comprenant une matrice élastomérique comprenant un élastomère thermoplastique, notamment un copolymère d'isobutylène et de styrène (SIBS) et ses dérivés.

La composition élastomérique pourra comprendre d'autres constituants. Ainsi, la composition élastomérique comprendra, dans un mode de réalisation préféré, une charge renforçante, par exemple au moins un noir de carbone.

De façon avantageuse, la ou chaque couche de travail est délimitée axialement par deux bords axiaux de la ou chaque couche de travail et comprend des éléments de renfort filaires de travail s'étendant axialement d'un bord axial à l'autre bord axial de la ou chaque couche de travail les uns sensiblement parallèlement aux autres selon une direction principale de chaque élément de renfort filaire de travail, la direction principale de chaque élément de renfort filaire de travail de la ou de chaque couche de travail formant, avec la direction circonférentielle du pneumatique, un angle, en valeur absolue, strictement supérieur à 10°, de préférence allant de 15° à 50° et plus préférentiellement de 18° à 30°.

Dans un mode de réalisation, l'armature de travail comprend une unique couche de travail. La présence d'une unique couche de travail permet notamment d'alléger le pneumatique, donc de réduire l'énergie dissipée par l'hystérèse du sommet et donc de réduire la résistance au roulement du pneumatique. Dans ce mode de réalisation, l'armature de travail est, à l'exception de la couche de travail, dépourvue de toute couche renforcée par des éléments de renfort filaires. Les éléments de renfort filaires de telles couches renforcées exclues de l'armature de travail du pneumatique comprennent les éléments de renfort filaires métalliques et les éléments de renfort filaires textiles. De façon très préférentielle, l'armature de travail est constituée par l'unique couche de travail.

Dans un autre mode de réalisation, l'armature de travail comprend deux couches de travail. Dans cet autre mode de réalisation, la direction principale selon laquelle s'étend chaque élément de renfort filaire de travail d'une des couches de travail et la direction principale selon laquelle s'étend chaque élément de renfort filaire de travail de l'autre des couches de travail forment, avec la direction circonférentielle du pneumatique, dans la portion du pneumatique délimitée axialement par les bords axiaux de la couche de travail radialement la plus interne, des angles d'orientations opposées.

Dans un mode de réalisation pris avantageusement en combinaison avec le mode de réalisation dans lequel l'armature de travail comprend une unique couche de travail, la ou chaque couche de carcasse est délimitée axialement par deux bords axiaux de la ou chaque couche de carcasse et comprend des éléments de renfort filaires de carcasse s'étendant axialement d'un bord axial à l'autre bord axial de la ou chaque couche de carcasse, chaque élément de renfort filaire de carcasse s'étendant selon une direction principale de chaque élément de renfort filaire de carcasse, la direction principale de chaque élément de renfort filaire de carcasse de la ou chaque couche de carcasse formant, avec la direction circonférentielle du pneumatique:
- un angle, en valeur absolue, strictement inférieur à 80° dans une portion de la couche de carcasse s'étendant axialement à l'aplomb radial de la couche de travail ou de la couche de travail radialement la plus interne,
- un angle, en valeur absolue, allant de 80° à 90° dans au moins une portion de la couche de carcasse s'étendant radialement dans chaque flanc.

Dans une variante de ce mode de réalisation dans lequel l'angle de chaque élément de renfort filaire de carcasse diffère entre le flanc et à l'aplomb radial de la couche de travail ou de la couche de travail radialement la plus interne, l'armature de carcasse comprend une unique couche de carcasse.

Dans une autre variante de ce mode de réalisation dans lequel l'angle de chaque élément de renfort filaire de carcasse diffère entre le flanc et à l'aplomb radial de la couche de travail ou de la couche de travail radialement la plus interne, l'armature de carcasse comprend deux couches de carcasse, les directions principales des éléments de renfort filaires de carcasse des deux couches de carcasse étant sensiblement parallèles les unes aux autres.

Dans des modes de réalisation dans lesquels la direction principale de chaque élément de renfort filaire de carcasse présente, entre les portions, des zones de transition où l'angle est sensiblement variable, la portion de la ou chaque couche de carcasse s'étendant axialement à l'aplomb de la couche de travail ou de la couche de travail radialement la plus interne et dans laquelle la direction principale de chaque élément de renfort filaire de carcasse forme, avec la direction circonférentielle du pneumatique, un angle, en valeur absolue, strictement inférieur à 80° présente une largeur axiale égale à au moins 40%, de préférence au moins 50% de la largeur axiale de la couche de travail ou de la couche de travail radialement la plus interne.

Dans des modes de réalisation dans lesquels la direction principale de chaque élément de renfort filaire de carcasse présente, entre les portions, des zones de transition où l'angle est sensiblement variable, la portion de la ou chaque couche de carcasse s'étendant axialement à l'aplomb de la couche de travail ou de la couche de travail radialement la plus interne et dans laquelle la direction principale de chaque élément de renfort filaire de carcasse forme, avec la direction circonférentielle du pneumatique, un angle, en valeur absolue, strictement inférieur à 80° présente une largeur axiale égale à au plus 90%, de préférence au plus 80% de la largeur axiale de la couche de travail ou de la couche de travail radialement la plus interne.

De préférence, le plan médian du pneumatique coupe cette portion de la ou chaque couche de carcasse s'étendant axialement à l'aplomb de la couche de travail ou de la couche de travail radialement la plus interne. Plus préférentiellement, cette portion de la ou chaque couche de carcasse s'étendant axialement à l'aplomb de la couche de travail ou de la couche de travail radialement la plus interne est centrée axialement sur le plan médian du pneumatique.

Dans des modes de réalisation dans lesquels la direction principale de chaque élément de renfort filaire de carcasse présente, entre les portions, des zones de transition où l'angle est sensiblement variable, chaque portion de la ou chaque couche de carcasse s'étendant radialement dans chaque flanc et dans laquelle la direction principale de chaque élément de renfort filaire de carcasse forme, avec la direction circonférentielle du pneumatique, un angle, en valeur absolue, allant de 80° à 90° présente une hauteur radiale égale à au moins 5%, de préférence au moins 15% et plus préférentiellement au moins 30% de la hauteur radiale du pneumatique.

Dans des modes de réalisation dans lesquels la direction principale de chaque élément de renfort filaire de carcasse présente, entre les portions, des zones de transition où l'angle est sensiblement variable, chaque portion de la ou chaque couche de carcasse s'étendant radialement dans chaque flanc et dans laquelle la direction principale de chaque élément de renfort filaire de carcasse forme, avec la direction circonférentielle du pneumatique, un angle, en valeur absolue, allant de 80° à 90° une hauteur radiale égale à au plus 80%, de préférence au plus 70% et plus préférentiellement au plus 60% de la hauteur radiale du pneumatique.

De préférence, le plan circonférentiel équatorial du pneumatique coupe chacune de ces portions de la ou chaque couche de carcasse située dans chaque flanc.

Dans ce mode de réalisation dans lequel l'angle de chaque élément de renfort filaire de carcasse diffère entre le flanc et à l'aplomb radial de la couche de travail ou de la couche de travail radialement la plus interne, un compromis préférentiel de performances du pneumatique est obtenu lorsque la direction principale de chaque élément de renfort filaire de carcasse forme, avec la direction circonférentielle du pneumatique, un angle, en valeur absolue, supérieur ou égal à 10°, de préférence allant de 20° à 75° et plus préférentiellement allant de 35° à 70°, dans la portion de la couche de carcasse s'étendant axialement à l'aplomb radial de la couche de travail ou de la couche de travail radialement la plus interne.

Dans un autre mode de réalisation pris avantageusement en combinaison avec le mode de réalisation dans lequel l'armature de travail comprend deux couches de travail, la ou chaque couche de carcasse est délimitée axialement par deux bords axiaux de la ou chaque couche de carcasse et comprend des éléments de renfort filaires de carcasse s'étendant axialement d'un bord axial à l'autre bord axial de la ou chaque couche de carcasse, chaque élément de renfort filaire de carcasse s'étendant selon une direction principale de chaque élément de renfort filaire de carcasse, la direction principale de chaque élément de renfort filaire de carcasse de la ou chaque couche de carcasse formant, avec la direction circonférentielle du pneumatique un angle sensiblement constant sur l'ensemble de la largeur axiale de la ou chaque couche de carcasse entre les bords axiaux de la ou chaque couche de carcasse, de préférence allant, en valeur absolue, de 80° à 90°.

Dans une variante de ce mode de réalisation dans lequel l'angle de chaque élément de renfort filaire de carcasse est sensiblement constant sur l'ensemble de la largeur axiale de la ou chaque couche de carcasse entre les bords axiaux de la ou chaque couche de carcasse, l'armature de carcasse comprend une unique couche de carcasse.

Dans une autre variante de ce mode de réalisation dans lequel l'angle de chaque élément de renfort filaire de carcasse est sensiblement constant sur l'ensemble de la largeur axiale de la ou chaque couche de carcasse entre les bords axiaux de la ou chaque couche de carcasse, l'armature de carcasse comprend deux couches de carcasse, les directions principales des éléments de renfort filaires de carcasse des deux couches de carcasse étant sensiblement parallèles les unes aux autres.

Quel que soit le mode de réalisation décrit précédemment, dans chaque variante dans laquelle l'armature de carcasse comprend une unique couche de carcasse, l'armature de carcasse est, à l'exception de l'unique couche de carcasse, dépourvue de toute couche renforcée par des éléments de renfort filaires. Les éléments de renfort filaires de telles couches renforcées exclues de l'armature de carcasse du pneumatique comprennent les éléments de renfort filaires métalliques et les éléments de renfort filaires textiles. De façon très préférentielle, l'armature de carcasse est constituée par l'unique couche de carcasse.

Avantageusement, afin d'améliorer l'uniformité du pneumatique et de répartir au mieux les jonctions de la couche de d'étanchéité et de la ou chaque couche de carcasse, la ou chaque couche de carcasse comprend une jonction entre deux bords d'extrémité circonférentielle de la ou chaque couche de carcasse, la jonction formant une superposition radiale entre un des bords d'extrémité circonférentielle de la ou de chaque couche de carcasse et l'autre des bords d'extrémité circonférentielle de la ou de chaque couche de carcasse, tout point de la jonction de la couche d'étanchéité est situé à un azimut décalé d'au moins 60° et d'au plus 300° par rapport à tout point de la jonction de la ou chaque couche de carcasse.

Afin d'améliorer les performances du pneumatique, notamment en rigidité de dérive et à haute vitesse, un mode de réalisation très avantageux prévoit que l'armature de sommet comprend une armature de frettage agencée radialement à l'extérieur de l'armature de travail, l'armature de frettage étant délimitée axialement par deux bords axiaux de l'armature de frettage et comprenant au moins un élément de renfort filaire de frettage enroulé circonférentiellement hélicoïdalement de façon à s'étendre axialement d'un bord axial à l'autre bord axial de l'armature de frettage . L'armature de frettage est ainsi radialement intercalée entre l'armature de travail et la bande de roulement.

Des éléments de renfort filaires de frettage convenant pour mettre en oeuvre le procédé selon l'invention sont notamment décrits dans les documents WO2016166056, WO2016166057, WO2019122620, WO2016091809, WO2016091810, WO2016091811 et WO2016091812.

Avantageusement, le ou chaque élément de renfort filaire de frettage s'étendant selon une direction principale du ou de chaque élément de renfort filaire de frettage, la direction principale du ou de chaque élément de renfort filaire de frettage forme, avec la direction circonférentielle du pneumatique, un angle, en valeur absolue, inférieur ou égal à 10°, de préférence inférieur ou égal à 7° et plus préférentiellement inférieur ou égal à 5°.

Dans le pneumatique selon l'invention, le sommet comprend la bande de roulement et l'armature de sommet. On entend par bande de roulement une bande de matériau polymérique, de préférence élastomérique, délimitée :
- radialement vers l'extérieur, par une surface destinée à être au contact d'un sol et
- radialement vers l'intérieur, par l'armature de sommet.

La bande de matériau polymérique est constituée d'une couche d'un matériau polymérique, de préférence élastomérique ou bien constituée d'un empilement de plusieurs couches, chaque couche étant constituée d'un matériau polymérique, de préférence élastomérique.

Dans un mode de réalisation avantageux, l'armature de sommet comprend une unique armature de frettage et une unique armature de travail. Ainsi, l'armature de sommet est, à l'exception de l'armature de frettage et de l'armature de travail, dépourvue de toute armature renforcée par des éléments de renfort filaires. Les éléments de renfort filaires de telles armatures exclues de l'armature de sommet du pneumatique comprennent les éléments de renfort filaires métalliques et les éléments de renfort filaires textiles. De façon très préférentielle, l'armature de sommet est constituée de l'armature de frettage et de l'armature de travail.

Dans un mode de réalisation très préférentiel, le sommet est, à l'exception, de l'armature de sommet, dépourvue de toute armature renforcée par des éléments de renfort filaires. Les éléments de renfort filaires de telles armatures exclues du sommet du pneumatique comprennent les éléments de renfort filaires métalliques et les éléments de renfort filaires textiles. De façon très préférentielle, le sommet est constitué par la bande de roulement et l'armature de sommet.

Dans un mode de réalisation très préférentiel, l'armature de carcasse est agencée directement radialement au contact de l'armature de sommet et l'armature de sommet est agencée directement radialement au contact de la bande de roulement. Dans ce mode de réalisation très préférentiel, l'armature de frettage et la couche de travail ou la couche de travail radialement la plus externe sont avantageusement agencées directement radialement au contact l'une de l'autre.

Par directement radialement au contact, on comprend que les objets considérés directement radialement au contact l'un de l'autre, ici les couches, armatures ou la bande de roulement, ne sont séparés radialement par aucun objet, par exemple par aucune couche, armature ni bande qui serait interposé radialement entre les objets considérés directement radialement au contact l'un de l'autre.

De façon à garantir préférentiellement une triangulation efficace du sommet du pneumatique dans le mode de réalisation dans lequel l'angle de chaque élément de renfort filaire de carcasse diffère entre le flanc et à l'aplomb radial de la couche de travail ou de la couche de travail radialement la plus interne, la direction principale du ou de chaque élément de renfort filaire de frettage, la direction principale de chaque élément de renfort filaire de travail et la direction principale de chaque élément de renfort filaire de carcasse forment, avec la direction circonférentielle du pneumatique, dans une portion du pneumatique comprise axialement entre les bords axiaux de la couche ou de l'armature axialement la moins large parmi la couche de travail, la couche de travail radialement la plus interne et l'armature de frettage, des angles deux à deux différents en valeur absolue. On parle également de maillage triangulaire formé par les éléments de renfort filaires de frettage, de travail et de carcasse.

En d'autres termes, le ou chaque élément de renfort filaire de frettage s'étendant selon une direction principale de frettage, chaque élément de renfort filaire de travail s'étendant selon une direction principale de travail, chaque élément de renfort filaire de carcasse s'étendant selon une direction principale de carcasse, ces directions de frettage, de travail et de carcasse sont deux à deux différentes dans la portion du pneumatique délimitée axialement par les bords axiaux de la couche ou de l'armature axialement la moins large parmi la couche de travail, la couche de travail radialement la plus interne et l'armature de frettage.

Dans des modes de réalisation dans lesquels la direction principale de chaque élément de renfort filaire de carcasse présente, entre les portions, des zones de transition où l'angle est sensiblement variable, la portion du pneumatique comprise axialement entre les bords axiaux de la couche ou de l'armature axialement la moins large parmi la couche de travail, la couche de travail radialement la plus interne et l'armature de frettage et dans laquelle la direction principale du ou de chaque élément de renfort filaire de frettage, la direction principale de chaque élément de renfort filaire de travail et la direction principale de chaque élément de renfort filaire de carcasse forment, avec la direction circonférentielle du pneumatique, des angles deux à deux différents en valeur absolue, présente une largeur axiale égale à au moins 40%, de préférence au moins 50% de la largeur axiale de la couche de travail ou de la couche de travail radialement la plus interne.

Dans des modes de réalisation dans lesquels la direction principale de chaque élément de renfort filaire de carcasse présente, entre les portions, des zones de transition où l'angle est sensiblement variable, la portion du pneumatique comprise axialement entre les bords axiaux de la couche ou de l'armature axialement la moins large parmi la couche de travail, la couche de travail radialement la plus interne et l'armature de frettage et dans laquelle la direction principale du ou de chaque élément de renfort filaire de frettage, la direction principale de chaque élément de renfort filaire de travail et la direction principale de chaque élément de renfort filaire de carcasse forment, avec la direction circonférentielle du pneumatique, des angles deux à deux différents en valeur absolue, présente une largeur axiale égale à au plus 90%, de préférence au plus 80% de la largeur axiale de la couche de travail ou de la couche de travail radialement la plus interne.

De préférence, le plan médian du pneumatique coupe cette portion du pneumatique comprise axialement entre les bords axiaux de la couche ou de l'armature axialement la moins large parmi la couche de travail, la couche de travail radialement la plus interne et l'armature de frettage. Plus préférentiellement, cette portion du pneumatique comprise axialement entre les bords axiaux de la couche ou de l'armature axialement la moins large parmi la couche de travail, la couche de travail radialement la plus interne et l'armature de frettage est centrée axialement sur le plan médian du pneumatique.

Afin d'améliorer encore davantage la triangulation du sommet du pneumatique dans le mode de réalisation dans lequel l'angle de chaque élément de renfort filaire de carcasse diffère entre le flanc et à l'aplomb radial de la couche de travail ou de la couche de travail radialement la plus interne, la direction principale de chaque élément de renfort filaire de travail et la direction principale de chaque élément de renfort filaire de carcasse forment, avec la direction circonférentielle du pneumatique, dans une portion du pneumatique comprise axialement entre les bords axiaux de la couche de travail ou de la couche de travail radialement la plus interne, des angles d'orientations opposées.

Dans des modes de réalisation dans lesquels la direction principale de chaque élément de renfort filaire de carcasse présente, entre les portions, des zones de transition où l'angle est sensiblement variable, la portion du pneumatique comprise axialement entre les bords axiaux de la couche de travail ou de la couche de travail radialement la plus interne et dans laquelle la direction principale de chaque élément de renfort filaire de travail et la direction principale de chaque élément de renfort filaire de carcasse forment, avec la direction circonférentielle du pneumatique, des angles d'orientations opposées, présente une largeur axiale égale à au moins 40%, de préférence au moins 50% de la largeur axiale de la couche de travail ou de la couche de travail radialement la plus interne.

Dans des modes de réalisation dans lesquels la direction principale de chaque élément de renfort filaire de carcasse présente, entre les portions, des zones de transition où l'angle est sensiblement variable, la portion du pneumatique comprise axialement entre les bords axiaux de la couche de travail ou de la couche de travail radialement la plus interne et dans laquelle la direction principale de chaque élément de renfort filaire de travail et la direction principale de chaque élément de renfort filaire de carcasse forment, avec la direction circonférentielle du pneumatique, des angles d'orientations opposées, présente une largeur axiale égale à au plus 90%, de préférence au plus 80% de la largeur axiale de la couche de travail ou de la couche de travail radialement la plus interne.

De préférence, le plan médian du pneumatique coupe cette portion du pneumatique comprise axialement entre les bords axiaux de la couche de travail ou de la couche de travail radialement la plus interne. Plus préférentiellement, cette portion du pneumatique comprise axialement entre les bords axiaux de la couche de travail ou de la couche de travail radialement la plus interne est centrée axialement sur le plan médian du pneumatique.

Dans un mode de réalisation permettant d'ancrer facilement l'armature de carcasse dans chaque bourrelet, chaque bourrelet comprend au moins un élément de renfort circonférentiel, la ou au moins une des couche(s) de carcasse comprenant une portion de la ou d'au moins une des couches(s) de carcasse enroulée autour de chaque élément de renfort circonférentiel, la direction principale de chaque élément de renfort filaire de carcasse forme, avec la direction circonférentielle du pneumatique :
- dans le mode de réalisation dans lequel l'angle de chaque élément de renfort filaire de carcasse diffère entre le flanc et à l'aplomb radial de la couche de travail ou de la couche de travail radialement la plus interne, un angle de chaque élément de renfort filaire de carcasse, en valeur absolue, strictement supérieur à 0°, de préférence allant de 27° à 150° et plus préférentiellement allant de 56° à 123°, dans la portion enroulée de la ou d'au moins une des couche(s) de carcasse,
- dans le mode de réalisation dans lequel l'angle de chaque élément de renfort filaire de carcasse est sensiblement constant sur l'ensemble de la largeur axiale de la ou chaque couche de carcasse entre les bords axiaux de la ou chaque couche de carcasse, un angle de chaque élément de renfort filaire de carcasse allant, en valeur absolue, de 80° à 90°.

Avantageusement, les éléments de renfort filaires de chaque couche sont noyés dans une matrice élastomérique. Les différentes couches peuvent comprendre la même matrice élastomérique ou bien des matrices élastomériques distinctes.

Par matrice élastomérique, on entend une matrice présentant, à l'état réticulé, un comportement élastomérique. Une telle matrice est avantageusement obtenue par réticulation d'une composition comprenant au moins un élastomère et au moins un autre composant. De préférence, la composition comprenant au moins un élastomère et au moins un autre composant comprend un élastomère, un système de réticulation et une charge. Les compositions utilisées pour ces couches sont des compositions conventionnelles pour calandrage de renforts, typiquement à base de caoutchouc naturel ou autre élastomère diénique, d'une charge renforçante telle que du noir de carbone, d'un système de vulcanisation et des additifs usuels. L'adhésion entre les éléments de renfort filaires et la matrice dans laquelle ils sont noyés est assurée par exemple par une composition adhésive usuelle, par exemple une colle du type RFL ou colle équivalente.

Avantageusement, chaque élément de renfort filaire de travail est métallique. Par élément filaire métallique, on entend par définition un élément filaire formé d'un ou d'un assemblage de plusieurs monofilaments élémentaires constitués intégralement (pour 100% des fils) d'un matériau métallique. Un tel élément filaire métallique est préférentiellement mis en oeuvre avec un ou des fils en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer). Mais il est bien entendu possible d'utiliser d'autres aciers ou d'autres alliages. Lorsqu'un acier au carbone est avantageusement utilisé, sa teneur en carbone (% en poids d'acier) va de préférence de 0,05% à 1,2%, notamment de 0,5% à 1,1% ; ces teneurs représentent un bon compromis entre les propriétés mécaniques requises pour le pneumatique et la faisabilité des fils. Le métal ou l'acier utilisé, qu'il s'agisse en particulier d'un acier au carbone ou d'un acier inoxydable, peut être lui-même revêtu d'une couche métallique améliorant par exemple les propriétés de mise en oeuvre du câble métallique et/ou de ses éléments constitutifs, ou les propriétés d'usage du câble et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc. Chaque monofilament élémentaire métallique est, comme décrit ci-dessus, de préférence en acier au carbone, et présente une résistance mécanique allant de 1000 MPa à 5000 MPa. De telles résistances mécaniques correspondent aux grades d'acier couramment rencontrés dans le domaine du pneumatique, à savoir, les grades NT (Normal Tensile), HT (High Tensile), ST (Super Tensile), SHT (Super High Tensile), UT (Ultra Tensile), UHT (Ultra High Tensile) et MT (Mega Tensile), l'utilisation de résistances mécaniques élevées permettant éventuellement un renforcement amélioré de la matrice dans laquelle le câble est destiné à être noyé et un allègement de la matrice ainsi renforcée.. Le ou l'assemblage de plusieurs monofilaments élémentaires peut être revêtu d'un matériau polymérique, par exemple comme cela est décrit dans US20160167438.

### PREMIER PROCEDE SELON L'INVENTION

Un autre objet de l'invention est un premier procédé de fabrication d'un pneumatique tel que décrit ci-dessus dans lequel :
- on forme par enroulement d'une nappe d'étanchéité ou de plusieurs nappes d'étanchéité autour d'un support présentant une forme sensiblement cylindrique autour d'un axe principal, un ensemble d'étanchéité enroulé destiné à former la couche d'étanchéité, l'ensemble d'étanchéité enroulé comprenant une jonction entre deux bords d'extrémité circonférentielle de l'ensemble d'étanchéité enroulé, la jonction formant une superposition radiale entre un des bords d'extrémité circonférentielle de l'ensemble d'étanchéité enroulé et l'autre des bords d'extrémité circonférentielle de l'ensemble d'étanchéité enroulé, la direction principale de la jonction formant, avec la direction circonférentielle du support, un angle initial sensiblement constant, sur l'ensemble de la largeur axiale de l'ensemble d'étanchéité enroulé entre les deux bords axiaux de l'ensemble d'étanchéité enroulé;
- on forme par enroulement d'une nappe de carcasse ou de plusieurs nappes de carcasse, radialement à l'extérieur de l'ensemble d'étanchéité enroulé, un ou plusieurs ensemble(s) de carcasse enroulé(s), le ou les ensemble(s) de carcasse enroulé(s) étant destiné(s) à former la ou les couche(s) de carcasse,
- on forme par enroulement d'une nappe de travail ou de plusieurs nappes de travail, radialement à l'extérieur du ou des ensemble(s) de carcasse enroulé(s), un ou plusieurs ensemble(s) de travail enroulé(s), le ou les ensemble(s) de travail enroulé(s) étant destiné(s) à former la ou les couche(s) de travail, l'ensemble d'étanchéité enroulé, le ou les ensemble(s) de carcasse enroulé(s) et le ou les ensemble(s) de travail enroulé(s) formant un assemblage de forme sensiblement cylindrique autour de l'axe principal du support,
- on déforme l'assemblage de forme sensiblement cylindrique autour de l'axe principal du support de façon à obtenir un assemblage de forme sensiblement torique autour de l'axe principal du support de sorte que, postérieurement à l'étape de déformation, la direction principale de la jonction forme, avec la direction circonférentielle du support :
   - dans une portion de l'ensemble d'étanchéité enroulé s'étendant axialement à l'aplomb radial de l'ensemble de travail enroulé ou de l'ensemble de travail enroulé radialement le plus interne et présentant une largeur axiale égale à au moins 40% de la largeur axiale de l'ensemble de travail enroulé ou de l'ensemble de travail enroulé radialement le plus interne, un angle final allant, en valeur absolue, de 20° à 60°,
   - dans une portion de l'ensemble d'étanchéité enroulé destinée à s'étendre radialement dans chaque flanc et présentant une hauteur radiale égale à au moins 5% de la hauteur radiale du pneumatique fabriqué, un angle final, en valeur absolue, strictement supérieur à l'angle final de la direction principale de la jonction dans la portion de l'ensemble d'étanchéité enroulé s'étendant axialement à l'aplomb radial de l'ensemble de travail enroulé ou de l'ensemble de travail enroulé radialement le plus interne.

Au cours du procédé, préalablement à l'étape de déformation, la direction principale est confondue avec la courbe de longueur la plus courte passant par :
- un point situé à équidistance selon la direction circonférentielle de chaque premier point de chaque bord d'extrémité circonférentielle situé à l'une des deux extrémités axiale de l'ensemble d'étanchéité enroulé, ces deux premiers points étant en regard l'un de l'autre selon la direction circonférentielle,
- un point situé à équidistance selon la direction circonférentielle de chaque deuxième point de chaque bord d'extrémité circonférentielle situé à l'autre des deux extrémités axiale de l'ensemble d'étanchéité enroulé, ces deux deuxièmes points étant en regard l'un de l'autre selon la direction circonférentielle, les deuxièmes points étant situés de l'autre côté du plan médian du support par rapport aux premiers points, et
- un point situé à équidistance selon la direction circonférentielle de chaque troisième point situé sur le plan médian du support et sur chaque bord d'extrémité circonférentielle de l'ensemble d'étanchéité enroulé, ces deux troisièmes points étant en regard l'un de l'autre selon la direction circonférentielle.

Au cours du procédé, postérieurement à l'étape de déformation, dans la portion de l'ensemble d'étanchéité enroulé s'étendant axialement à l'aplomb radial de l'ensemble de travail enroulé ou de l'ensemble de travail enroulé radialement le plus interne, la direction principale est confondue avec la courbe de longueur la plus courte passant par :
- un point situé à équidistance selon la direction circonférentielle de chaque premier point de chaque bord d'extrémité circonférentielle situé à l'une des deux extrémités axiales de la portion de l'ensemble d'étanchéité enroulé s'étendant axialement à l'aplomb radial de l'ensemble de travail ou de l'ensemble de travail radialement la plus interne, ces deux premiers points étant en regard l'un de l'autre selon la direction circonférentielle, et
- un point situé à équidistance selon la direction circonférentielle de chaque deuxième point de chaque bord d'extrémité circonférentielle situé à l'autre des deux extrémités axiale de la portion de l'ensemble d'étanchéité enroulé s'étendant axialement à l'aplomb radial de l'ensemble de travail ou de l'ensemble de travail radialement la plus interne, ces deux deuxièmes points étant en regard l'un de l'autre selon la direction circonférentielle, les deuxièmes points étant situés de l'autre côté du plan médian du support par rapport aux premiers points.

Au cours du procédé, postérieurement à l'étape de déformation, dans la portion de l'ensemble d'étanchéité destinée à s'étendre radialement dans chaque flanc, la direction principale est confondue avec la courbe de longueur la plus courte passant par :
- un point situé à équidistance selon la direction circonférentielle de chaque premier point de chaque bord d'extrémité circonférentielle situé à l'une des deux extrémités axiales de la portion de l'ensemble d'étanchéité destinée à s'étendre radialement dans chaque flanc, ces deux premiers points étant en regard l'un de l'autre selon la direction circonférentielle, et
- un point situé à équidistance selon la direction circonférentielle de chaque deuxième point de chaque bord d'extrémité circonférentielle situé à l'autre des deux extrémités axiales de la portion de l'ensemble d'étanchéité destinée à s'étendre radialement dans chaque flanc, ces deux deuxièmes points étant en regard l'un de l'autre selon la direction circonférentielle, les deuxièmes points étant situés radialement à l'extérieur par rapport aux premiers points.

Dans le premier procédé selon l'invention, les angles initiaux formés avec la direction circonférentielle du support par les directions principales des éléments de renfort filaires de carcasse et de travail varient lors de l'étape de déformation pour atteindre leurs angles finaux, à l'exception de la portion enroulée de l'ensemble de carcasse enroulé autour des éléments de renfort circonférentiels dans laquelle la direction principale des éléments de renfort filaires de carcasse reste sensiblement identique par rapport à la direction circonférentielle du support et donc du pneumatique. La variation de l'angle formé avec la direction circonférentielle du support par les directions principales des éléments de renfort filaires de carcasse entraine également une variation de l'angle formé par la direction principale de la jonction avec la direction circonférentielle du support, cette variation étant différente selon que l'on se trouve dans la portion de l'ensemble d'étanchéité enroulé s'étendant axialement à l'aplomb radial de l'ensemble de travail enroulé ou de l'ensemble de travail enroulé radialement le plus interne ou que l'on se trouve dans la portion de l'ensemble d'étanchéité enroulé destinée à s'étendre radialement dans chaque flanc.

En effet, d'une part, la direction principale de la jonction va suivre la variation de l'angle de chaque élément de renfort filaire de carcasse et donc se radialiser dans chaque flanc de sorte que l'angle final dans la portion de l'ensemble d'étanchéité enroulé destinée à s'étendre radialement dans chaque flanc va croitre et permet ainsi de réduire la longueur circonférentielle de la jonction. D'autre part, la direction principale de la jonction va suivre la variation de l'angle de chaque élément de renfort filaire de carcasse dans la portion de l'ensemble d'étanchéité enroulé s'étendant axialement à l'aplomb radial de l'ensemble de travail enroulé ou de l'ensemble de travail enroulé radialement le plus interne de sorte que l'angle final atteint dans cette portion de l'ensemble d'étanchéité enroulé s'étendant axialement à l'aplomb radial de l'ensemble de travail enroulé ou de l'ensemble de travail enroulé radialement le plus interne permet d'obtenir une réduction du bruit.

On notera que, grâce à ce premier procédé selon l'invention, il est suffisant, lors de l'étape de formation de la jonction, d'avoir une direction principale de la jonction formant, avec la direction circonférentielle du support, un angle initial sensiblement constant en raison de la variation différente de l'angle de la direction principale de la jonction lors de l'étape de déformation.

La variation de l'angle de la direction principale de la jonction est déterminable par l'homme du métier en fonction du taux de déformation utilisé lors du procédé. Le taux de déformation est déterminé de façon connue par l'homme du métier en fonction du rapprochement axial des bords axiaux du ou des ensemble(s) de carcasse enroulé(s) et de l'agrandissement radial de l'assemblage entre sa forme cylindrique et sa forme torique. La détermination des angles initiaux en fonction des angles finaux dépend, de façon connue de l'homme du métier, du taux de déformation comme cela est expliqué dans FR2797213 et dans FR1413102.

Conformément à l'invention, la direction principale de la jonction présente, entre les portions, des zones de transition où l'angle est sensiblement variable. La portion de l'ensemble d'étanchéité enroulé s'étendant axialement à l'aplomb de l'ensemble de travail enroulé ou de l'ensemble de travail enroulé radialement le plus interne et dans laquelle la direction principale de la jonction forme, avec la direction circonférentielle du pneumatique, un angle allant, en valeur absolue, de 20° à 60° présente une largeur axiale égale à au moins 40%, de préférence au moins 50% de la largeur axiale de l'ensemble de travail enroulé ou de l'ensemble de travail enroulé radialement le plus interne.

Dans des modes de réalisation dans lesquels la direction principale de la jonction présente, entre les portions, des zones de transition où l'angle est sensiblement variable, la portion de l'ensemble d'étanchéité enroulé s'étendant axialement à l'aplomb de l'ensemble de travail enroulé ou de l'ensemble de travail enroulé radialement le plus interne et dans laquelle la direction principale de la jonction forme, avec la direction circonférentielle du support, un angle allant, en valeur absolue, de 20° à 60° présente une largeur axiale égale à au plus 90%, de préférence au plus 80% de la largeur axiale de l'ensemble de travail enroulé ou de l'ensemble de travail enroulé radialement le plus interne.

De préférence, le plan médian de l'assemblage coupe cette portion de l'ensemble d'étanchéité enroulé s'étendant axialement à l'aplomb radial de l'ensemble de travail enroulé ou de l'ensemble de travail enroulé radialement le plus interne. Plus préférentiellement, cette portion de l'ensemble d'étanchéité enroulé s'étendant axialement à l'aplomb radial de l'ensemble de travail enroulé ou de l'ensemble de travail enroulé radialement le plus interne est centrée axialement sur le plan médian de l'assemblage.

La largeur axiale de la portion de l'ensemble d'étanchéité enroulé dépend notamment du taux de déformation ainsi que de l'angle initial. L'homme du métier saura en faisant varier l'un et ou l'autre de ces paramètres, faire varier la largeur axiale de la portion de l'ensemble d'étanchéité enroulé concernée.

Conformément à l'invention, la direction principale de la jonction présente, entre les portions, des zones de transition où l'angle est sensiblement variable. Chaque portion de l'ensemble d'étanchéité destiné à s'étendre radialement dans chaque flanc et dans laquelle la direction principale de la jonction forme, avec la direction circonférentielle du support, un angle final strictement supérieur à l'angle final de la direction principale de la jonction dans la portion de l'ensemble d'étanchéité enroulé s'étendant axialement à l'aplomb radial de l'ensemble de travail enroulé ou de l'ensemble de travail enroulé radialement le plus interne, présente une hauteur radiale égale à au moins 5%, de préférence au moins 15% et plus préférentiellement au moins 30% de la hauteur radiale du pneumatique fabriqué.

Dans des modes de réalisation dans lesquels la direction principale de la jonction présente, entre les portions, des zones de transition où l'angle est sensiblement variable, chaque portion de l'ensemble d'étanchéité destiné à s'étendre radialement dans chaque flanc et dans laquelle la direction principale de la jonction forme, avec la direction circonférentielle du support, un angle final strictement supérieur à l'angle final de la direction principale de la jonction dans la portion de l'ensemble d'étanchéité enroulé s'étendant axialement à l'aplomb radial de l'ensemble de travail enroulé ou de l'ensemble de travail enroulé radialement le plus interne, présente une hauteur radiale égale à au plus 80%, de préférence au plus 70% et plus préférentiellement au plus 60% de la hauteur radiale du pneumatique fabriqué.

De préférence, le plan circonférentiel équatorial de l'assemblage coupe chaque portion de l'ensemble d'étanchéité destiné à être situé dans chaque flanc.

De façon analogue, la hauteur radiale de la portion de l'ensemble d'étanchéité enroulé dépend notamment du taux de déformation ainsi que de l'angle initial. L'homme du métier saura en faisant varier l'un et ou l'autre de ces paramètres, faire varier hauteur radiale de chaque portion de l'ensemble d'étanchéité enroulé concernée.

Par plan médian de l'assemblage (noté m), on entend le plan perpendiculaire à l'axe principal du support qui est situé à mi-distance axiale, entre chaque bord axial de l'assemblage.

Par plan circonférentiel équatorial de l'assemblage (noté e), on entend la surface cylindrique théorique passant par l'équateur de l'assemblage, perpendiculaire au plan médian et à la direction radiale. L'équateur de l'assemblage est, dans un plan de coupe méridienne (plan perpendiculaire à la direction circonférentielle et parallèle aux directions radiale et axiales) l'axe parallèle à l'axe principal du support et situé à équidistance entre le point radialement le plus externe de l'assemblage et le point radialement le plus interne de l'assemblage, la distance entre ces deux points étant égale à h.

Avantageusement, la direction principale de la jonction forme, avec la direction circonférentielle du support, un angle final, en valeur absolue, supérieur ou égal à 25°, de préférence supérieur ou égal à 30°, dans la portion de l'ensemble d'étanchéité enroulé s'étendant axialement à l'aplomb radial de l'ensemble de travail enroulé ou de l'ensemble de travail enroulé radialement le plus interne.

Avantageusement, la direction principale de la jonction forme, avec la direction circonférentielle du support, un angle final, en valeur absolue, inférieur ou égal à 50°, de préférence inférieur ou égal à 40°, dans la portion de l'ensemble d'étanchéité enroulé s'étendant axialement à l'aplomb radial de l'ensemble de travail enroulé ou de l'ensemble de travail enroulé radialement le plus interne.

Afin d'obtenir les angles finaux précédemment décrits en mettant en oeuvre des procédés présentant des taux de déformation relativement modérés, on aura avantageusement l'angle initial formé par la direction principale de la jonction avec la direction circonférentielle du support allant, en valeur absolue, de 35° à 80°.

Avantageusement, l'angle final formé par la direction principale de la jonction avec la direction circonférentielle du support va, en valeur absolue, de 80° à 90° dans la portion de l'ensemble d'étanchéité enroulé destinée à s'étendre radialement dans chaque flanc. Ainsi, on limite autant que possible la longueur circonférentielle de la jonction en limitant l'angle final dans chaque portion de l'ensemble d'étanchéité destiné à s'étendre radialement dans chaque flanc.

Dans un mode de réalisation permettant de conserver les propriétés d'un pneumatique radial conférées par les éléments de renfort filaires de carcasse radiaux dans les flancs et les propriétés d'un pneumatique comprenant une armature de sommet triangulée, le ou chaque ensemble de carcasse enroulé étant délimité axialement par deux bords axiaux du ou de chaque ensemble de carcasse enroulé et comprenant des éléments de renfort filaires de carcasse s'étendant sensiblement parallèlement les uns aux autres axialement d'un bord axial à l'autre bord axial du ou de chaque ensemble de carcasse enroulé, chaque élément de renfort filaire de carcasse s'étendant, dans le ou chaque nappe de carcasse, selon une direction principale de chaque élément de renfort filaire de carcasse dans la ou chaque nappe de carcasse, la direction principale de chaque élément de renfort filaire de carcasse formant, avec la direction circonférentielle du support, un angle initial de chaque élément de renfort filaire de carcasse, on déforme l'assemblage de forme sensiblement cylindrique de façon à obtenir l'assemblage de forme sensiblement torique de sorte que la direction principale de chaque élément de renfort filaire de carcasse forme, avec la direction circonférentielle du support:
- un angle final de chaque élément de renfort filaire de carcasse, en valeur absolue, strictement inférieur à 80°, dans une portion du ou de chaque ensemble de carcasse enroulé s'étendant axialement à l'aplomb radial de l'ensemble de travail enroulé ou de l'ensemble de travail enroulé radialement le plus interne,
- un angle final de chaque élément de renfort filaire de carcasse allant, en valeur absolue, de 80° à 90°, dans une portion du ou de chaque ensemble de carcasse enroulé destiné à s'étendre radialement dans chaque flanc.

Dans des modes de réalisation dans lesquels la direction principale de chaque élément de renfort filaire de carcasse présente, entre les portions, des zones de transition où l'angle est sensiblement variable, la portion du ou de chaque ensemble de carcasse enroulé s'étendant axialement à l'aplomb radial de l'ensemble de travail enroulé ou de l'ensemble de travail enroulé radialement le plus interne et dans laquelle la direction principale de chaque élément de renfort filaire de carcasse forme, avec la direction circonférentielle du support un angle final, en valeur absolue, strictement inférieur à 80°, présente une largeur axiale égale à au moins 40%, de préférence au moins 50% de la largeur axiale de l'ensemble de travail enroulé ou de l'ensemble de travail enroulé radialement le plus interne.

Dans des modes de réalisation dans lesquels la direction principale de chaque élément de renfort filaire de carcasse présente, entre les portions, des zones de transition où l'angle est sensiblement variable, la portion du ou de chaque ensemble de carcasse enroulé s'étendant axialement à l'aplomb radial de l'ensemble de travail enroulé ou de l'ensemble de travail enroulé radialement le plus interne et dans laquelle la direction principale de chaque élément de renfort filaire de carcasse forme, avec la direction circonférentielle du support un angle final, en valeur absolue, strictement inférieur à 80°, présente une largeur axiale égale à au plus 90%, de préférence au plus 80% de la largeur axiale de l'ensemble de travail enroulé ou de l'ensemble de travail enroulé radialement le plus interne.

De préférence, le plan médian de l'assemblage coupe cette portion du ou de chaque ensemble de carcasse enroulé s'étendant axialement à l'aplomb radial de l'ensemble de travail enroulé ou de l'ensemble de travail enroulé radialement le plus interne. Plus préférentiellement, cette portion du ou de chaque ensemble de carcasse enroulé s'étendant axialement à l'aplomb radial de l'ensemble de travail enroulé ou de l'ensemble de travail enroulé radialement le plus interne est centrée axialement sur le plan médian de l'assemblage.

La largeur axiale de la portion du ou de chaque ensemble de carcasse enroulé dépend notamment du taux de déformation ainsi que des angles initiaux. L'homme du métier saura en faisant varier l'un et ou l'autre de ces paramètres, faire varier la largeur axiale de la portion du ou de chaque ensemble de carcasse enroulé concernée.

Dans des modes de réalisation dans lesquels la direction principale de chaque élément de renfort filaire de carcasse présente, entre les portions, des zones de transition où l'angle est sensiblement variable, chaque portion du ou de chaque ensemble de carcasse enroulé destinée à s'étendre radialement dans chaque flanc et dans laquelle la direction principale de chaque élément de renfort filaire de carcasse forme, avec la direction circonférentielle du support un angle final allant, en valeur absolue, de 80° à 90°, présente une hauteur radiale égale à au moins 5%, de préférence au moins 15% et encore plus préférentiellement au moins 30% de la hauteur radiale du pneumatique fabriqué.

Dans des modes de réalisation dans lesquels la direction principale de chaque élément de renfort filaire de carcasse présente, entre les portions, des zones de transition où l'angle est sensiblement variable, chaque portion du ou de chaque ensemble de carcasse enroulé destinée à s'étendre radialement dans chaque flanc et dans laquelle la direction principale de chaque élément de renfort filaire de carcasse forme, avec la direction circonférentielle du support un angle final allant, en valeur absolue, de 80° à 90°, présente une hauteur radiale égale à au plus 80%, de préférence au plus 70% et encore plus préférentiellement au plus 60% de la hauteur radiale du pneumatique fabriqué.

De préférence, le plan circonférentiel équatorial de l'assemblage coupe chaque portion du ou de chaque ensemble de carcasse enroulé destinée à être située dans chaque flanc.

De façon analogue, la hauteur radiale de la portion du ou de chaque ensemble de carcasse enroulé dépend notamment du taux de déformation ainsi que des angles initiaux. L'homme du métier saura en faisant varier l'un et ou l'autre de ces paramètres, faire varier hauteur radiale de chaque portion du ou de chaque ensemble de carcasse enroulé concernée.

Afin d'obtenir, à l'issue de l'étape de déformation des angles finaux permettant un compromis préférentiel de performances du pneumatique, l'angle initial formé par la direction principale de chaque élément de renfort filaire de carcasse avec la direction circonférentielle du support est, en valeur absolue, strictement supérieur à 0°, de préférence va de 27° à 150° et plus préférentiellement va de 56° à 123°.

Un tel compromis préférentiel de performances du pneumatique est obtenu lorsqu'on a l'angle final formé par la direction principale de chaque élément de renfort filaire de carcasse avec la direction circonférentielle du support étant, en valeur absolue, supérieur ou égal à 10°, de préférence va de 20° à 75° et plus préférentiellement va de 35 à 70°, dans la portion du ou de chaque ensemble de carcasse enroulé s'étendant axialement à l'aplomb radial de l'ensemble de travail enroulé ou de l'ensemble de travail enroulé radialement le plus interne.

Dans un mode de réalisation permettant de conserver les propriétés d'un pneumatique comprenant une armature de sommet triangulée, le ou chaque ensemble de travail enroulé étant délimité axialement par deux bords axiaux du ou de chaque ensemble de travail enroulé et comprenant des éléments de renfort filaires de travail s'étendant sensiblement parallèlement les uns aux autres axialement d'un bord axial à l'autre bord axial du ou de chaque ensemble de travail enroulé, chaque élément de renfort filaire de travail s'étendant, dans la ou chaque nappe de travail, selon une direction principale de chaque élément de renfort filaire de travail dans la ou chaque nappe de travail, la direction principale de chaque élément de renfort filaire de travail dans la ou chaque nappe de travail formant, avec la direction circonférentielle du support, un angle initial de chaque élément de renfort filaire de travail, on déforme l'assemblage de forme sensiblement cylindrique de façon à obtenir l'assemblage de forme sensiblement torique de sorte que la direction principale de chaque élément de renfort filaire de travail forme, avec la direction circonférentielle du support, un angle final de chaque élément de renfort filaire de travail, en valeur absolue, strictement supérieur à 10°, de préférence allant de 15° à 50° et plus préférentiellement de 18° à 30°.

Afin d'obtenir, à l'issue de l'étape de déformation des angles finaux permettant un compromis préférentiel de performances du pneumatique, l'angle initial formé par la direction principale de chaque élément de renfort filaire de travail avec la direction circonférentielle du support est, en valeur absolue, strictement supérieur à 0°, de préférence va de 4° à 60° et plus préférentiellement va de 16° à 47°.

Dans certains modes de réalisation, l'angle final formé par la direction principale de chaque élément de renfort filaire de travail avec la direction circonférentielle du support est sensiblement égal à l'angle formé par la direction principale de chaque élément de renfort filaire de travail de la ou les couche(s) de travail avec la direction circonférentielle du pneumatique une fois ce dernier fabriqué. De façon analogue, dans ces mêmes modes de réalisation, l'angle final formé par la direction principale de chaque élément de renfort filaire de carcasse avec la direction circonférentielle du support dans la portion de l'ensemble de carcasse enroulé s'étendant axialement à l'aplomb radial de l'ensemble de travail enroulé ou de l'ensemble de travail enroulé radialement la plus interne est sensiblement égal à l'angle formé par la direction principale de chaque élément de renfort filaire de carcasse de la ou des couche(s) de carcasse avec la direction circonférentielle du pneumatique dans la portion de la ou des couche(s) de carcasse s'étendant axialement à l'aplomb radial de la couche de travail ou de la couche de travail radialement la plus interne une fois le pneumatique fabriqué.

Dans d'autres modes de réalisation, une légère diminution des angles finaux peut intervenir lors de l'étape de moulage de l'ébauche crue dans un moule durant laquelle l'ébauche crue est plaquée contre des surfaces de moulage du moule et subit une déformation radiale de moulage non négligeable par rapport à la déformation subie lors de l'étape de déformation pour faire passer l'assemblage de l'ensemble de carcasse enroulé et de l'ensemble de travail enroulé de la forme sensiblement cylindrique à la forme sensiblement torique.

Un mode de réalisation très préférentiel prévoit que l'on agence, radialement à l'extérieur du ou des ensemble(s) de travail enroulé(s), un ensemble de frettage enroulé destiné à former une armature de frettage, l'ensemble de frettage enroulé étant formé par enroulement hélicoïdal d'au moins un élément de renfort filaire de frettage ou d'une nappe de frettage obtenue par noyage d'un ou de plusieurs éléments de renfort filaires de frettage dans une matrice élastomérique, de façon à s'étendre axialement d'un bord axial à l'autre bord axial de l'ensemble de frettage enroulé.

Avantageusement, le ou chaque élément de renfort filaire de frettage s'étendant selon une direction principale du ou de chaque élément de renfort filaire de frettage, l'angle formé par la direction principale du ou de chaque élément de renfort filaire de frettage avec la direction circonférentielle du support est, en valeur absolue, inférieur ou égal à 10°, de préférence inférieur ou égal à 7° et plus préférentiellement inférieur ou égal à 5°.

Dans des modes de réalisation préférés permettant d'obtenir une triangulation efficace, la direction principale du ou de chaque élément de renfort filaire de frettage, la direction principale de chaque élément de renfort filaire de travail et la direction principale de chaque élément de renfort filaire de carcasse forment, avec la direction circonférentielle du support, dans une portion de l'assemblage et de l'ensemble de frettage enroulé comprise axialement entre les bords axiaux de l'ensemble enroulé axialement le moins large parmi l'ensemble de travail enroulé, l'ensemble de travail enroulé radialement le plus interne et l'ensemble de frettage enroulé, des angles deux à deux différents en valeur absolue.

La portion de l'assemblage et de l'ensemble de frettage enroulé comprise axialement entre les bords axiaux de l'ensemble enroulé axialement le moins large parmi l'ensemble de travail enroulé, l'ensemble de travail enroulé radialement le plus interne et l'ensemble de frettage enroulé et dans laquelle la direction principale du ou de chaque élément de renfort filaire de frettage, la direction principale de chaque élément de renfort filaire de travail et la direction principale de chaque élément de renfort filaire de carcasse forment, avec la direction circonférentielle du support, des angles deux à deux différents en valeur absolue, présente une largeur axiale égale à au moins 40%, de préférence au moins 50% de la largeur axiale de l'ensemble de travail enroulé ou de l'ensemble de travail enroulé radialement le plus interne.

La portion de l'assemblage et de l'ensemble de frettage enroulé comprise axialement entre les bords axiaux de l'ensemble enroulé axialement le moins large parmi l'ensemble de travail enroulé, l'ensemble de travail enroulé radialement le plus interne et l'ensemble de frettage enroulé et dans laquelle la direction principale du ou de chaque élément de renfort filaire de frettage, la direction principale de chaque élément de renfort filaire de travail et la direction principale de chaque élément de renfort filaire de carcasse forment, avec la direction circonférentielle du support, des angles deux à deux différents en valeur absolue, présente une largeur axiale égale à au plus 90%, de préférence au plus 80% de la largeur axiale de l'ensemble de travail enroulé ou de l'ensemble de travail enroulé radialement le plus interne.

De préférence, le plan médian de l'assemblage coupe cette portion de l'assemblage et de l'ensemble de frettage enroulé comprise axialement entre les bords axiaux de l'ensemble enroulé axialement le moins large parmi l'ensemble de travail enroulé, l'ensemble de travail enroulé radialement le plus interne et l'ensemble de frettage enroulé. Plus préférentiellement, cette portion de l'assemblage et de l'ensemble de frettage enroulé comprise axialement entre les bords axiaux de l'ensemble enroulé axialement le moins large parmi l'ensemble de travail enroulé, l'ensemble de travail enroulé radialement le plus interne et l'ensemble de frettage enroulé est centrée axialement sur le plan médian de l'assemblage.

### DEUXIEME PROCEDE SELON L'INVENTION

Un autre objet de l'invention est un deuxième procédé permettant de fabriquer un pneumatique tel que décrit ci-dessus et dans lequel
- on forme par enroulement d'une nappe d'étanchéité ou de plusieurs nappes d'étanchéité autour d'un support présentant une forme sensiblement cylindrique autour d'un axe principal, un ensemble d'étanchéité enroulé destiné à former la couche d'étanchéité, l'ensemble d'étanchéité enroulé comprenant une jonction entre deux bords d'extrémité circonférentielle de l'ensemble d'étanchéité enroulé, la jonction formant une superposition radiale entre un des bords d'extrémité circonférentielle de l'ensemble d'étanchéité enroulé et l'autre des bords d'extrémité circonférentielle de l'ensemble d'étanchéité enroulé,
- on forme par enroulement d'une nappe de carcasse ou de plusieurs nappes de carcasse, radialement à l'extérieur de l'ensemble d'étanchéité enroulé, un ou plusieurs ensemble(s) de carcasse enroulé(s), le ou les ensemble(s) de carcasse enroulé(s) étant destiné(s) à former la ou les couche(s) de carcasse,
   l'ensemble d'étanchéité enroulé et le ou les ensemble(s) de carcasse enroulé(s) formant un assemblage de forme sensiblement cylindrique autour de l'axe principal du support,
- on déforme l'assemblage de forme sensiblement cylindrique autour de l'axe principal du support de façon à obtenir un assemblage de forme sensiblement torique autour de l'axe principal du support,
- puis, postérieurement à l'étape de déformation de l'assemblage, on forme par enroulement d'une nappe de travail ou de plusieurs nappes de travail, radialement à l'extérieur du ou des ensemble(s) de carcasse enroulé(s), un ou plusieurs ensemble(s) de travail enroulé(s) destiné(s) à former la ou les couche(s) de travail,
procédé dans lequel :
- lors de l'étape de formation de l'ensemble d'étanchéité enroulé, on forme la jonction de sorte que la direction principale de la jonction forme, avec la direction circonférentielle du support :
   - dans une portion de l'ensemble d'étanchéité enroulé destinée à s'étendre axialement à l'aplomb radial de l'ensemble de travail enroulé ou de l'ensemble de travail enroulé radialement le plus interne, un angle initial, en valeur absolue, strictement inférieur à 80°,
   - dans une portion de l'ensemble d'étanchéité enroulé destinée à s'étendre radialement dans chaque flanc, un angle initial, en valeur absolue, strictement supérieur à l'angle initial de la direction principale de la jonction dans la portion de l'ensemble d'étanchéité enroulé destinée à s'étendre axialement à l'aplomb radial de l'ensemble de travail enroulé ou de l'ensemble de travail enroulé radialement le plus interne, et
- on déforme l'assemblage de forme sensiblement cylindrique de façon à obtenir l'assemblage de forme sensiblement torique de sorte que, postérieurement à l'étape de déformation, la direction principale de la jonction forme, avec la direction circonférentielle du support :
   - dans la portion de l'ensemble d'étanchéité enroulé destinée à s'étendre axialement à l'aplomb radial de l'ensemble de travail enroulé ou de l'ensemble de travail enroulé radialement le plus interne et présentant une largeur axiale égale à au moins 70% de la largeur axiale de l'ensemble de travail enroulé ou de l'ensemble de travail enroulé radialement le plus interne, un angle final, en valeur absolue, allant de 20° à 60°,
   - dans la portion de l'ensemble d'étanchéité enroulé destinée à s'étendre radialement dans chaque flanc et présentant une hauteur radiale égale à au moins 60% de la hauteur radiale du pneumatique fabriqué, un angle final, en valeur absolue, strictement supérieur à l'angle final de la direction principale de la jonction dans la portion de l'ensemble d'étanchéité enroulé destinée à s'étendre axialement à l'aplomb radial de l'ensemble de travail enroulé ou de l'ensemble de travail enroulé radialement le plus interne.

Contrairement au premier procédé selon l'invention, le deuxième procédé de l'invention ne permet pas de bénéficier de la radialisation de la direction principale de la jonction dans la portion de l'ensemble d'étanchéité destinée à s'étendre radialement dans chaque flanc. Il est donc nécessaire de former, dès l'étape de formation de l'ensemble d'étanchéité enroulé, une jonction dont la direction principale présente des angles différents selon que l'on se trouve dans la portion de l'ensemble d'étanchéité enroulé destinée à s'étendre axialement à l'aplomb radial de l'ensemble de travail enroulé ou de l'ensemble de travail enroulé radialement le plus interne ou que l'on se trouve dans la portion de l'ensemble d'étanchéité enroulé destinée à s'étendre radialement dans chaque flanc.

Au cours du procédé, dans la portion de l'ensemble d'étanchéité enroulé destinée à s'étendre axialement à l'aplomb radial de l'ensemble de travail enroulé ou de l'ensemble de travail enroulé radialement le plus interne, la direction principale est confondue avec la courbe de longueur la plus courte passant par :
- un point situé à équidistance selon la direction circonférentielle de chaque premier point de chaque bord d'extrémité circonférentielle situé à l'une des deux extrémités axiales de la portion de l'ensemble d'étanchéité enroulé destinée à s'étendre axialement à l'aplomb radial de l'ensemble de travail ou de l'ensemble de travail radialement la plus interne, ces deux premiers points étant en regard l'un de l'autre selon la direction circonférentielle, et
- un point situé à équidistance selon la direction circonférentielle de chaque deuxième point de chaque bord d'extrémité circonférentielle situé à l'autre des deux extrémités axiales de l'ensemble d'étanchéité enroulé destinée à s'étendre axialement à l'aplomb radial de l'ensemble de travail ou de l'ensemble de travail radialement la plus interne, ces deux deuxièmes points étant en regard l'un de l'autre selon la direction circonférentielle, les deuxièmes points étant situés de l'autre côté du plan médian du support par rapport aux premiers points.

Au cours du procédé, dans la portion de l'ensemble d'étanchéité destinée à s'étendre radialement dans chaque flanc, la direction principale est confondue avec la courbe de longueur la plus courte passant par :
- un point situé à équidistance selon la direction circonférentielle de chaque premier point de chaque bord d'extrémité circonférentielle situé à l'une des deux extrémités axiales de la portion de l'ensemble d'étanchéité destinée à s'étendre radialement dans chaque flanc, ces deux premiers points étant en regard l'un de l'autre selon la direction circonférentielle, et
- un point situé à équidistance selon la direction circonférentielle de chaque deuxième point de chaque bord d'extrémité circonférentielle situé à l'autre des deux extrémités axiales de la portion de l'ensemble d'étanchéité destinée à s'étendre radialement dans chaque flanc, ces deux deuxièmes points étant en regard l'un de l'autre selon la direction circonférentielle, les deuxièmes points étant situés radialement à l'extérieur par rapport aux premiers points.

Ainsi, dans le deuxième mode de réalisation, on prévoit que l'angle de la direction principale de la jonction soit, préalablement à l'étape de déformation, non constant. Ainsi, on différencie cet angle préalablement à l'étape de déformation de sorte qu'à l'issue de l'étape de déformation, cette différentiation soit conservée, permettant ainsi d'obtenir le meilleur compromis entre le bruit émis et la longueur circonférentielle de la jonction.

Dans des modes de réalisation dans lesquels la direction principale de la jonction présente des zones de transition relativement courtes voire inexistantes, la portion de l'ensemble d'étanchéité enroulé destinée à s'étendre axialement à l'aplomb de l'ensemble de travail enroulé ou de l'ensemble de travail enroulé radialement le plus interne et dans laquelle la direction principale de la jonction forme, avec la direction circonférentielle du pneumatique, un angle initial, en valeur absolue, strictement inférieur à 80°, présente une largeur axiale égale à au moins 70%, de préférence au moins 80% de la largeur axiale de l'ensemble de travail enroulé ou de l'ensemble de travail enroulé radialement le plus interne.

Conformément à l'invention, la direction principale de la jonction présente des zones de transition relativement courtes voire inexistantes. La portion de l'ensemble d'étanchéité enroulé destinée à s'étendre axialement à l'aplomb de l'ensemble de travail enroulé ou de l'ensemble de travail enroulé radialement le plus interne et dans laquelle la direction principale de la jonction forme, avec la direction circonférentielle du pneumatique, un angle final allant, en valeur absolue, de 20° à 60° présente une largeur axiale égale à au moins 70%, de préférence au moins 80% de la largeur axiale de l'ensemble de travail enroulé ou de l'ensemble de travail enroulé radialement le plus interne.

De préférence, le plan médian de l'assemblage coupe cette portion de l'ensemble d'étanchéité enroulé destinée à s'étendre axialement à l'aplomb radial de l'ensemble de travail enroulé ou de l'ensemble de travail enroulé radialement le plus interne. Plus préférentiellement, cette portion de l'ensemble d'étanchéité enroulé s'étendant axialement à l'aplomb radial de l'ensemble de travail enroulé ou de l'ensemble de travail enroulé radialement le plus interne est centrée axialement sur le plan médian de l'assemblage.

Dans des modes de réalisation dans lesquels la direction principale de la jonction présente des zones de transition relativement courtes voire inexistantes, chaque portion de l'ensemble d'étanchéité enroulé destinée à s'étendre radialement dans chaque flanc et dans laquelle la direction principale de la jonction forme, avec la direction circonférentielle du support, un angle initial strictement supérieur à l'angle initial de la direction principale de la jonction dans la portion de l'ensemble d'étanchéité enroulé s'étendant axialement à l'aplomb radial de l'ensemble de travail enroulé ou de l'ensemble de travail enroulé radialement le plus interne, présente une hauteur radiale égale à au moins 60%, de préférence au moins 70% de la hauteur radiale du pneumatique fabriqué.

Conformément à l'invention, la direction principale de la jonction présente des zones de transition relativement courtes voire inexistantes. Chaque portion de l'ensemble d'étanchéité enroulé destinée à s'étendre radialement dans chaque flanc et dans laquelle la direction principale de la jonction forme, avec la direction circonférentielle du support, un angle final strictement supérieur à l'angle final de la direction principale de la jonction dans la portion de l'ensemble d'étanchéité enroulé s'étendant axialement à l'aplomb radial de l'ensemble de travail enroulé ou de l'ensemble de travail enroulé radialement le plus interne, présente une hauteur radiale égale à au moins 60%, de préférence au moins 70% de la hauteur radiale du pneumatique fabriqué.

De préférence, le plan circonférentiel équatorial de l'assemblage coupe chaque portion de l'ensemble d'étanchéité destiné à être situé dans chaque flanc.

Dans un mode de réalisation permettant d'atteindre facilement l'angle final désiré dans la portion de l'ensemble d'étanchéité enroulé destinée à s'étendre axialement à l'aplomb radial de l'ensemble de travail enroulé ou de l'ensemble de travail enroulé radialement le plus interne, l'angle initial formé par la direction principale de la jonction avec la direction circonférentielle du support va, en valeur absolue, de 23° à 75°, dans la portion de l'ensemble d'étanchéité enroulé destinée à s'étendre axialement à l'aplomb radial de l'ensemble de travail enroulé ou de l'ensemble de travail enroulé radialement le plus interne. L'homme du métier saura déterminer l'angle initial en fonction de l'angle final qu'il souhaite atteindre en fonction du taux de conformation utilisé lors du procédé.

Avantageusement, postérieurement à l'étape de déformation, la direction principale de la jonction forme, avec la direction circonférentielle du pneumatique, un angle final, en valeur absolue, supérieur ou égal à 25°, de préférence supérieur ou égal à 30°, dans la portion de l'ensemble d'étanchéité destinée à s'étendre axialement à l'aplomb radial de l'ensemble de travail ou de l'ensemble de travail radialement la plus interne.

Avantageusement, postérieurement à l'étape de déformation, la direction principale de la jonction forme, avec la direction circonférentielle du pneumatique, un angle final, en valeur absolue, inférieur ou égal à 50°, de préférence inférieur ou égal à 40°, dans la portion de l'ensemble d'étanchéité destinée à s'étendre axialement à l'aplomb radial de l'ensemble de travail ou de l'ensemble de travail radialement la plus interne.

Dans un mode de réalisation permettant de réduire au maximum la longueur circonférentielle de la jonction, l'angle initial formé par la direction principale de la jonction avec la direction circonférentielle du support va, en valeur absolue, de 80° à 90° dans la portion de l'ensemble d'étanchéité enroulé destinée à s'étendre radialement dans chaque flanc.

Dans un mode de réalisation permettant de réduire au maximum la longueur circonférentielle de la jonction, l'angle final formé par la direction principale de la jonction avec la direction circonférentielle du support va, en valeur absolue, de 80° à 90° dans la portion de l'ensemble d'étanchéité enroulé destinée à s'étendre radialement dans chaque flanc.

Dans un mode de réalisation permettant d'obtenir les propriétés d'un pneumatique radial conférées par éléments de renfort filaire de carcasse radiaux dans les flancs, le ou chaque ensemble de carcasse enroulé étant délimité axialement par deux bords axiaux du ou de chaque ensemble de carcasse enroulé et comprenant des éléments de renfort filaires de carcasse s'étendant sensiblement parallèlement les uns aux autres axialement d'un bord axial à l'autre bord axial du ou de chaque ensemble de carcasse enroulé, chaque élément de renfort filaire de carcasse s'étendant, dans le ou chaque nappe de carcasse, selon une direction principale de chaque élément de renfort filaire de carcasse dans la ou chaque nappe de carcasse, la direction principale de chaque élément de renfort filaire de carcasse dans la ou chaque nappe de carcasse formant, avec la direction circonférentielle du support, un angle initial de chaque élément de renfort filaire de carcasse allant, en valeur absolue, de 80° à 90°, on déforme l'assemblage de forme sensiblement cylindrique de façon à obtenir l'assemblage de forme sensiblement torique de sorte que la direction principale de chaque élément de renfort filaire de carcasse forme, avec la direction circonférentielle du support, un angle final de chaque élément de renfort filaire de carcasse allant, en valeur absolue, de 80° à 90° sur l'ensemble du ou de chaque ensemble de carcasse enroulé entre les deux bords axiaux de ou de chaque ensemble de carcasse enroulé.

Dans un mode de réalisation permettant d'obtenir les propriétés d'un pneumatique comprenant une armature de sommet triangulée, le ou chaque ensemble de travail enroulé étant délimité axialement par deux bords axiaux du ou de chaque ensemble de travail enroulé et comprenant des éléments de renfort filaires de travail s'étendant sensiblement parallèlement les uns aux autres axialement d'un bord axial à l'autre bord axial du ou de chaque ensemble de travail enroulé, chaque élément de renfort filaire de travail s'étendant, dans la ou chaque nappe de travail, selon une direction principale de chaque élément de renfort filaire de travail dans la ou chaque nappe de travail, la direction principale de chaque élément de renfort filaire de travail dans la ou chaque nappe de travail forme, avec la direction circonférentielle du support, un angle de chaque élément de renfort filaire de travail, en valeur absolue, strictement supérieur à 10°, de préférence allant de 15° à 50° et plus préférentiellement de 18° à 30°.

Dans un mode de réalisation du premier ou du deuxième procédé selon l'invention, comprenant, postérieurement à l'étape de déformation, une étape de réticulation d'une ébauche crue formée à partir de l'assemblage, dans un moule de réticulation comprenant une membrane déformable destinée à appliquer une pression sur une surface radialement interne de l'ensemble d'étanchéité enroulé, procédé dans lequel, postérieurement à l'étape de déformation et préalablement à l'étape de réticulation, on revêt d'une composition anti-adhésive:
- une surface radialement et axialement externe de la membrane déformable destinée à venir au contact de la surface radialement interne de l'ensemble d'étanchéité enroulé lors de l'étape de réticulation, ou
- la surface radialement interne de l'ensemble d'étanchéité enroulé destinée à venir au contact d'une surface radialement et axialement externe de la membrane déformable lors de l'étape de réticulation.

De préférence, la composition adhésive comprend un silicone. De tels compositions présentent d'excellentes propriétés anti-adhésives. Les silicones sont également appelées polysiloxanes.

Tout comme dans le premier procédé selon l'invention, un mode de réalisation très préférentiel prévoit que l'on agence, radialement à l'extérieur du ou des ensemble(s) de travail enroulé(s), un ensemble de frettage enroulé destiné à former une armature de frettage, l'ensemble de frettage enroulé étant formé par enroulement hélicoïdal d'au moins un élément de renfort filaire de frettage ou d'une nappe de frettage obtenue par noyage d'un ou de plusieurs éléments de renfort filaires de frettage dans une matrice élastomérique, de façon à s'étendre axialement d'un bord axial à l'autre bord axial de l'ensemble de frettage enroulé..

Avantageusement, le ou chaque élément de renfort filaire de frettage s'étendant selon une direction principale du ou de chaque élément de renfort filaire de frettage, l'angle formé par la direction principale du ou de chaque élément de renfort filaire de frettage avec la direction circonférentielle du support est, en valeur absolue, inférieur ou égal à 10°, de préférence inférieur ou égal à 7° et plus préférentiellement inférieur ou égal à 5°.

Dans des modes de réalisation préférés permettant d'obtenir une triangulation efficace, la direction principale du ou de chaque élément de renfort filaire de frettage, la direction principale de chaque élément de renfort filaire de travail et la direction principale de chaque élément de renfort filaire de carcasse forment, avec la direction circonférentielle du support, dans une portion de l'assemblage et de l'ensemble de frettage enroulé comprise axialement entre les bords axiaux de l'ensemble enroulé axialement le moins large parmi l'ensemble de travail enroulé, l'ensemble de travail enroulé radialement le plus interne et l'ensemble de frettage enroulé, des angles deux à deux différents en valeur absolue à l'exception des angles des éléments élément de renfort filaire de travail de chaque ensemble de travail lorsque le procédé utilise deux ensembles de travail. Dans ce cas, les angles des éléments élément de renfort filaire de travail de chaque ensemble de travail présentent la même valeur absolue et sont d'orientations opposées.

Que ce soit dans le premier ou le deuxième procédé selon l'invention, un ensemble de carcasse peut être destiné à former une seule couche de carcasse ou bien être destiné à former deux couches de carcasse en enroulant cet ensemble de carcasse sur deux tours autour de l'ensemble d'étanchéité. Ainsi, dans un mode de réalisation dans lequel le pneumatique comprend deux couches de carcasse, on pourra former un seul ensemble de carcasse enroulé sur deux tours autour de l'ensemble d'étanchéité ou bien former un premier ensemble de carcasse radialement interne enroulé autour de l'ensemble d'étanchéité et un deuxième ensemble de carcasse radialement externe enroulé autour du premier ensemble de carcasse radialement interne, chaque premier et deuxième ensemble de carcasse formant chaque couche de carcasse.

De façon analogue, un ensemble de travail peut être destiné à former une seule couche de travail ou bien être destiné à former deux couches de travail en enroulant cet ensemble de travail sur deux tours autour du ou des ensemble(s) de carcasse. Ainsi, dans un mode de réalisation dans lequel le pneumatique comprend deux couches de travail, on pourra former un seul ensemble de travail enroulé sur deux tours autour de l'ensemble de carcasse ou bien former un premier ensemble de travail radialement interne enroulé autour de l'ensemble de carcasse et un deuxième ensemble de travail radialement externe enroulé autour du premier ensemble de travail radialement interne, chaque premier et deuxième ensemble de travail formant chaque couche de travail.

Que ce soit dans le premier ou le deuxième procédé selon l'invention, dans un procédé simplifié dans lequel on n'a à manipuler qu'une nappe de carcasse pour former chaque ensemble de carcasse enroulé et dans lequel on éviterait des jonctions circonférentielles entre plusieurs nappes de carcasse de largeurs axiales inférieures à la largeur axiale de chaque ensemble de carcasse enroulé destiné à être formé, chaque ensemble de carcasse enroulé est constitué d'une nappe de carcasse qui est destinée à former chaque couche de carcasse. En d'autres termes, chaque nappe de carcasse est axialement continue.

Dans le cas où on forme l'ensemble de carcasse enroulé avec plusieurs nappes de carcasse, on utilisera préférentiellement plusieurs nappes de carcasse dans lesquelles les directions principales des éléments de renfort filaires de carcasse sont toutes parallèles les unes aux autres.

De façon analogue, dans un procédé simplifié dans lequel on n'a à manipuler qu'une nappe de travail pour former chaque ensemble de travail enroulé et dans lequel on éviterait des jonctions circonférentielles entre plusieurs nappes de travail de largeurs axiales inférieures à la largeur axiale de chaque ensemble de travail enroulé destiné à être formé, chaque ensemble de travail enroulé est constitué d'une nappe de travail qui est destinée à former chaque couche de travail. En d'autres termes, chaque nappe de travail est axialement continue.

Dans le cas où on forme l'ensemble de travail enroulé avec plusieurs nappes de travail, on utilisera préférentiellement plusieurs nappes de travail dans lesquelles les directions principales des éléments de renfort filaires de travail sont toutes parallèles les unes aux autres. Bien entendu, on pourra envisager des directions principales des éléments de renfort filaires de travail non parallèles les unes aux autres d'une nappe travail à l'autre.

Dans un mode de réalisation permettant d'ancrer facilement l'armature de carcasse dans chaque bourrelet, postérieurement à l'étape de formation du ou d'au moins un des ensemble(s) de carcasse enroulé(s) :
- on agence deux éléments de renfort circonférentiels autour du ou d'au moins un des ensemble(s) de carcasse enroulé(s),
- on retourne axialement vers l'intérieur chaque bord axial du ou d'au moins un des ensemble(s) de carcasse enroulé(s) de façon à recouvrir radialement chaque élément de renfort circonférentiel par un des bords axiaux du ou d'au moins un des ensemble(s) de carcasse enroulé(s) et à former une portion du ou d'au moins un des ensemble(s) de carcasse enroulé(s) enroulée autour de chaque élément de renfort circonférentiel,
- on déforme l'assemblage de forme sensiblement cylindrique de façon à obtenir l'assemblage de forme sensiblement torique de sorte que la direction principale de chaque élément de renfort filaire de carcasse forme, avec la direction circonférentielle du support, un angle final de chaque élément de renfort filaire de carcasse :
- en valeur absolue, strictement inférieur à 80° dans la portion enroulée du ou d'au moins un des ensemble(s) de carcasse enroulé(s) dans le premier procédé selon l'invention, et
- en valeur absolue, allant de 80° à 90° dans la portion enroulée du ou d'au moins un des ensemble(s) de carcasse enroulé(s) dans le deuxième procédé selon l'invention.

Dans le premier procédé selon l'invention, l'angle final formé par la direction principale de chaque élément de renfort filaire de carcasse, avec la direction circonférentielle du support, dans la portion enroulée du ou d'au moins un des ensemble(s) de carcasse enroulé(s), est sensiblement identique à l'angle initial formé par la direction principale de chaque élément de renfort filaire de carcasse avant l'étape de déformation du fait de l'ancrage de cette portion autour de l'élément de renfort circonférentiel.

L'invention ainsi que ses avantages seront aisément compris à la lumière de la description détaillée et des exemples de réalisation non limitatifs qui suivent, ainsi que des figures 1 à 28 relatives à ces exemples dans lesquels :
- la figure 1 est une vue en coupe dans un plan de coupe méridien d'un pneumatique selon un premier mode de réalisation de l'invention;
- la figure 2 est une vue schématique en arraché du pneumatique de la figure 1 illustrant l'agencement des éléments de renfort filaires à l'aplomb radial et en surplomb radial de la couche de travail;
- la figure 3 est une vue schématique des éléments de renfort filaires de carcasse agencés dans le flanc du pneumatique de la figure 1,
- la figure 4 est une vue dans un plan de coupe perpendiculaire à la direction axiale d'une portion du sommet du pneumatique de la figure 1;
- la figure 5 est une vue schématique du pneumatique de la figure 1 ;

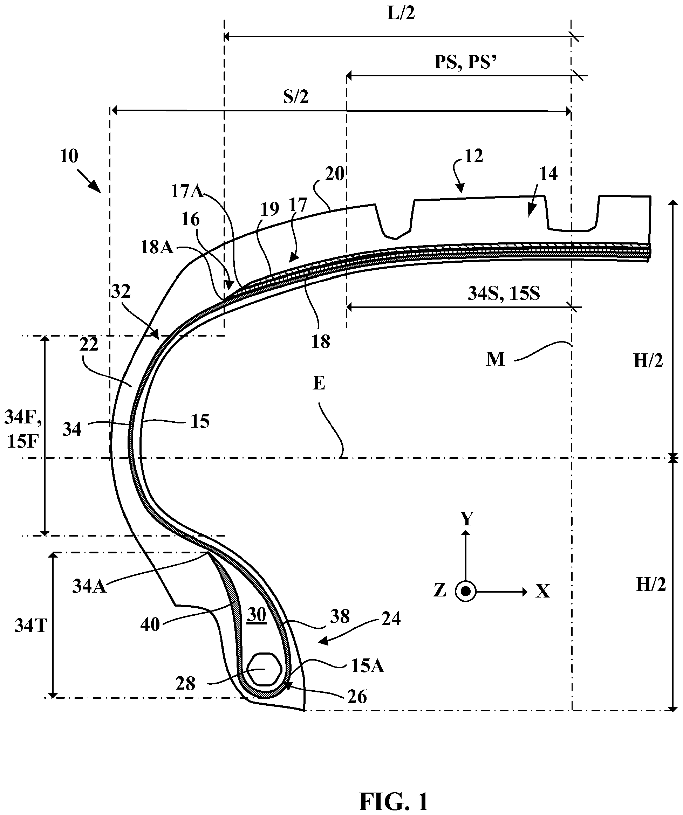

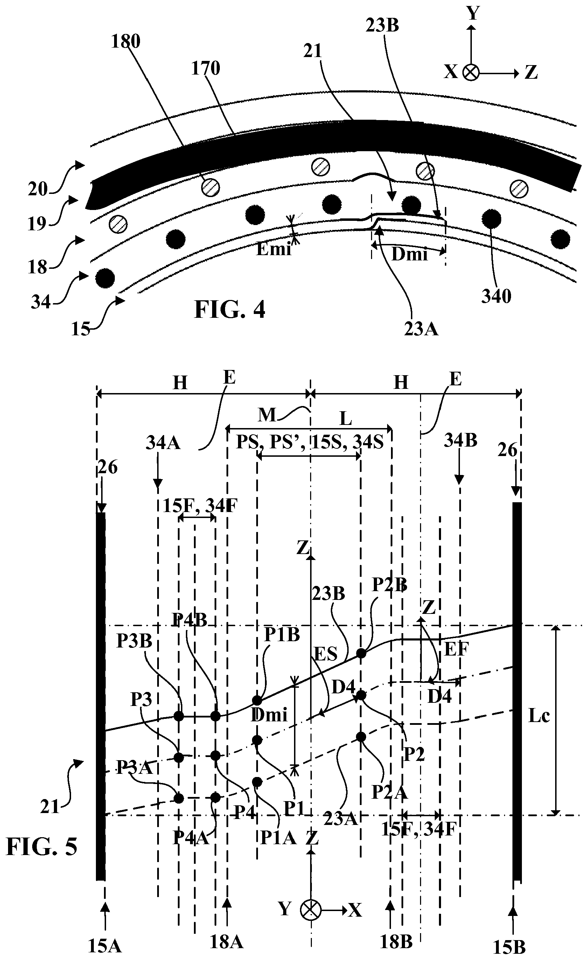

- les figures 5 à 19 illustrent les différentes étapes du premier procédé selon l'invention permettant de fabriquer le pneumatique de la figure 1;

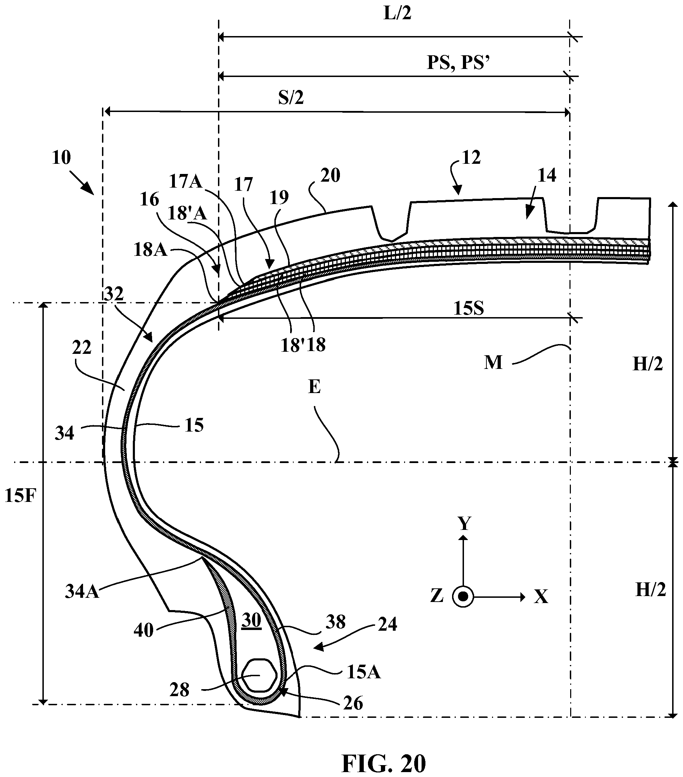

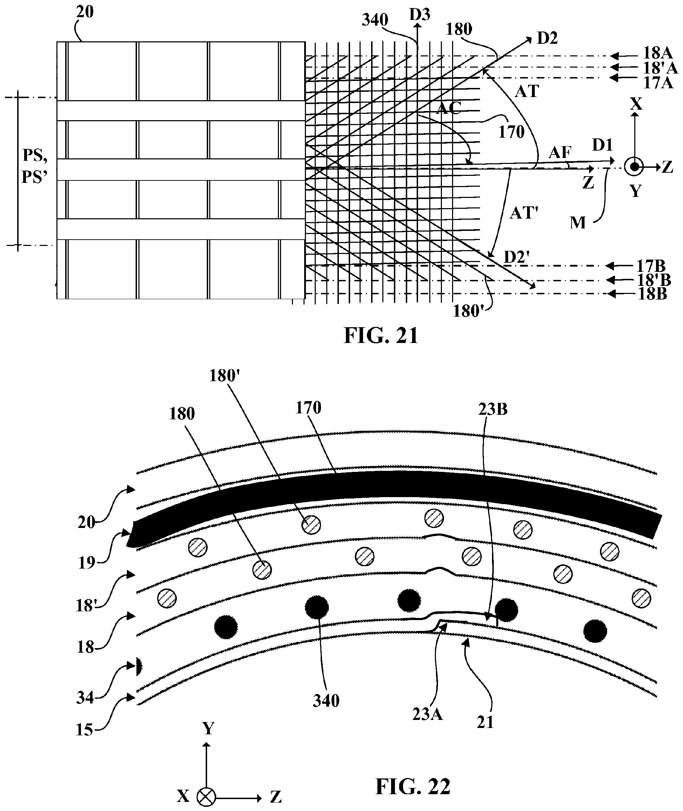

- les figures 20, 21 et 22 sont des vues analogues à celle des figures 1, 2 et 4 d'un pneumatique selon un deuxième mode de réalisation de l'invention ;

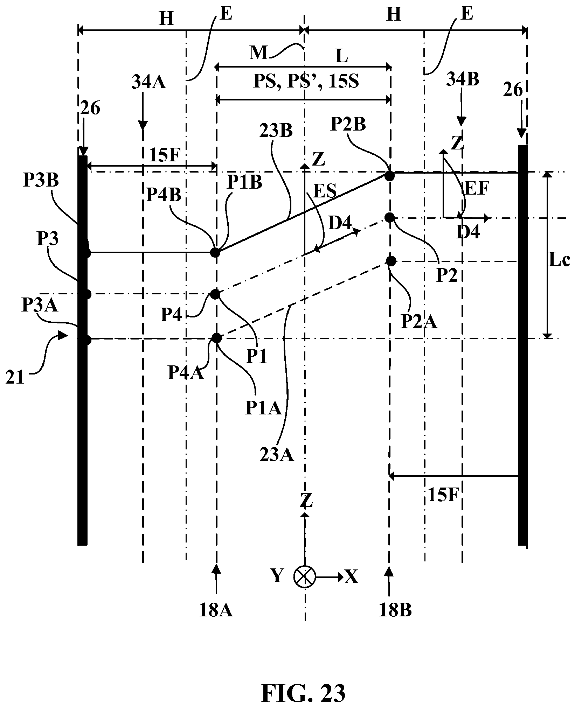

- les figures 23 à 27 illustrent les différentes étapes du deuxième procédé selon l'invention permettant de fabriquer le pneumatique de la figure 20, et

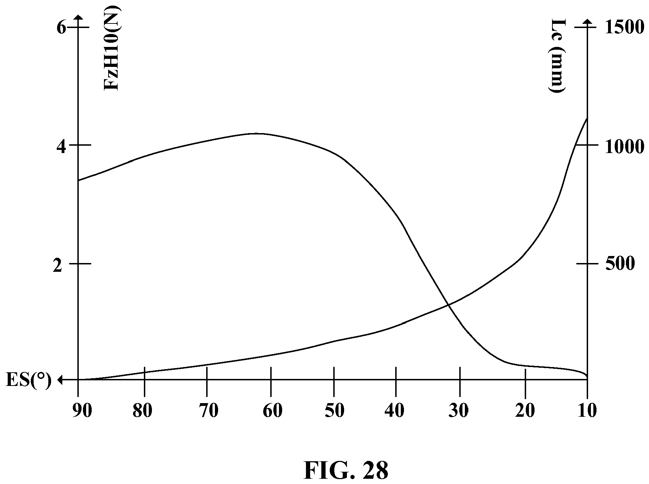

- la figure 28 illustre l'influence de l'angle de la jonction sur le bruit émis par le pneumatique et la longueur circonférentielle de la jonction.

Dans les figures relatives au pneumatique, on a représenté un repère X, Y, Z correspondant aux directions habituelles respectivement axiale (X), radiale (Y) et circonférentielle (Z) d'un pneumatique. Dans les figures relatives au procédé, on a représenté un repère x, y, z correspondant aux directions habituelles respectivement axiale (x), radiale (y) et circonférentielle (z) d'un support de fabrication déformable entre une forme sensiblement cylindrique et une forme torique autour de l'axe x.

On a représenté sur la figure 1 un pneumatique, conforme à l'invention et désigné par la référence générale 10. Le pneumatique 10 est sensiblement de révolution autour d'un axe sensiblement parallèle à la direction axiale X. Le pneumatique 10 est ici destiné à un véhicule de tourisme et présente des dimensions 245/45R18.

Le pneumatique 10 comprend un sommet 12 comprenant une bande de roulement 20 destinée à venir en contact avec un sol lors du roulage et une armature de sommet 14 s'étendant dans le sommet 12 selon la direction circonférentielle Z. Le pneumatique 10 comprend également une couche d'étanchéité 15 à un gaz de gonflage étant destiné à délimiter une cavité interne fermée avec un support de montage du pneumatique 10 une fois le pneumatique 10 monté sur le support de montage, par exemple une jante. La couche d'étanchéité 15 comprend une composition élastomérique comprenant une matrice élastomérique comprenant au moins 50 pce d'un ou de plusieurs élastomères butyles.

L'armature de sommet 14 comprend une armature de travail 16 comprenant une couche de travail 18 et une armature de frettage 17 comprenant une unique couche de frettage 19. Ici, l'armature de travail 16 comprend une unique couche de travail 18 et est, en l'espèce, constituée de l'unique couche de travail 18. Dans ce premier mode de réalisation, on parlera, par soucis de simplification de la couche de travail 18 sans rappeler à chaque fois que cette couche est unique. L'armature de frettage 17 est constituée de la couche de frettage 19.

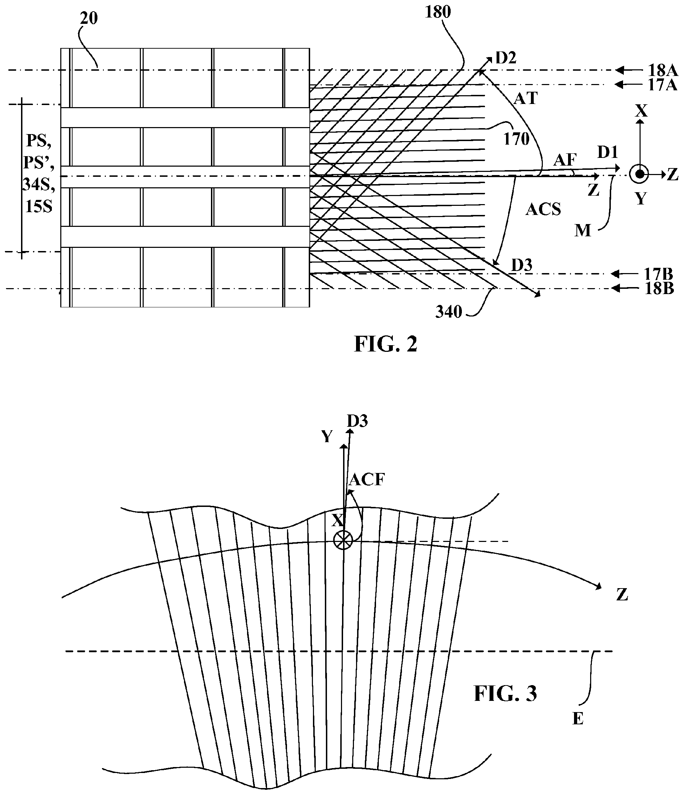

L'armature de sommet 14 est surmontée radialement de la bande de roulement 20. Ici, l'armature de frettage 17, ici la couche de frettage 19, est agencée radialement à l'extérieur de l'armature de travail 16 et est donc radialement intercalée entre l'armature de travail 16 et la bande de roulement 20. Dans le mode de réalisation illustré à la figure 2, l'armature de frettage 17 présente une largeur axiale plus petite que la largeur axiale de la couche de travail 18. Ainsi, l'armature de frettage est axialement la moins large de la couche de travail 18 et de l'armature de frettage 17.

Le pneumatique 10 comprend deux flancs 22 prolongeant le sommet 12 radialement vers l'intérieur. Le pneumatique 10 comporte en outre deux bourrelets 24 radialement intérieurs aux flancs 22. Chaque flanc 22 relie chaque bourrelet 24 au sommet 12.

Chaque bourrelet 24 comprend au moins un élément de renfort circonférentiel 26, en l'occurrence une tringle 28 surmontée radialement d'une masse de gomme 30 de bourrage.

Le pneumatique 10 comprend une armature 32 de carcasse ancrée dans chaque bourrelet 24. L'armature 32 de carcasse s'étend dans chaque flanc 22 et radialement intérieurement au sommet 12. L'armature de sommet 14 est agencée radialement entre la bande de roulement 20 et l'armature de carcasse 32.

L'armature de carcasse 32 comprend une couche de carcasse 34. Ici, l'armature de carcasse 32 comprend une unique couche de carcasse 34, et en l'espèce est constituée de l'unique couche de carcasse 34. Dans ce premier mode de réalisation, on parlera, par soucis de simplification de la couche de carcasse 34 sans rappeler à chaque fois que cette couche est unique.

La couche de carcasse 34 comprend une portion 34T de la couche de carcasse 34 enroulée autour de chaque élément de renfort circonférentiel 26 de manière à former dans chaque bourrelet 24 une portion 38 axialement intérieure et une portion axialement extérieure 40. La masse de gomme 30 de bourrage est intercalée entre les portions 38, 40 axialement intérieure et extérieure. D'autres modes d'ancrage de la couche de carcasse 34 sont possibles, par exemple comme décrit dans US5702548.

Chaque couche de travail 18, de frettage 19 et de carcasse 34 comprend une matrice élastomérique dans laquelle sont noyés un ou des éléments de renfort filaires de la couche correspondante. On va maintenant décrire ces couches en référence aux figures 1 à 4.

L'armature de frettage 17, ici la couche de frettage 19, est délimitée axialement par deux bords axiaux 17A, 17B de l'armature de frettage 17. L'armature de frettage 17 comprend plusieurs éléments de renfort filaires de frettage 170 enroulés circonférentiellement hélicoïdalement de façon à s'étendre axialement du bord axial 17A à l'autre bord axial 17B de la couche de frettage 17 selon une direction principale D1 de chaque élément de renfort filaire de frettage 170. La direction principale D1 forme, avec la direction circonférentielle Z du pneumatique 10, un angle AF, en valeur absolue, inférieur ou égal à 10°, de préférence inférieur ou égal à 7° et plus préférentiellement inférieur ou égal à 5°. Ici, AF=-5°.

La couche de travail 18 est délimitée axialement par deux bords axiaux 18A, 18B de la couche de travail 18. La couche de travail 18 comprend des éléments de renfort filaires de travail 180 s'étendant axialement du bord axial 18A à l'autre bord axial 18B de la couche de travail 18 les uns sensiblement parallèlement aux autres. Chaque élément de renfort filaire de travail 180 s'étend selon une direction principale D2 de chaque élément de renfort filaire de travail 180. La direction D2 forme, avec la direction circonférentielle Z du pneumatique 10, un angle AT, en valeur absolue, strictement supérieur à 10°, de préférence allant de 15° à 50° et plus préférentiellement allant de 18° à 30°. Ici, AT=24°.

La couche de carcasse 34 est délimitée axialement par deux bords axiaux 34A, 34B de la couche de carcasse 34. La couche de carcasse 34 comprend des éléments de renfort filaires de carcasse 340 s'étendant axialement du bord axial 34A à l'autre bord axial 34B de la couche de carcasse 34.

Chaque élément de renfort filaire de carcasse 340 s'étend selon une direction principale D3 de chaque élément de renfort filaire de carcasse 340 formant, avec la direction circonférentielle Z du pneumatique 10 un angle ACS, en valeur absolue, strictement inférieur à 80° dans une portion 34S de la couche de carcasse 34 s'étendant axialement à l'aplomb radial de la couche de travail 18. Avantageusement, dans cette portion 34S de la couche de carcasse 34 s'étendant axialement à l'aplomb radial de la couche de travail 18, la direction principale D3 de chaque élément de renfort filaire de carcasse 340 forme, avec la direction circonférentielle Z du pneumatique 10, un angle ACS, en valeur absolue, supérieur ou égal à 10°, de préférence allant de 20° à 75° et plus préférentiellement allant de 35° à 70°. Ici, ACS=43°.

La portion 34S de la couche de carcasse 34 s'étendant axialement à l'aplomb de la couche de travail 18 présente une largeur axiale égale à au moins 40%, de préférence au moins 50% de la largeur axiale L de la couche de travail 18 et égale à au plus 90%, de préférence au plus 80% de la largeur axiale L de la couche de travail 18 et en l'espèce égale à 60% de la couche de travail 18. Le plan médian M du pneumatique 10 coupe cette portion 34S. Plus préférentiellement, cette portion 34S est centrée axialement sur le plan médian M du pneumatique 10.

Comme illustré sur les figures 1 et 3, la direction principale D3 de chaque élément de renfort filaire de carcasse 340 forme, avec la direction circonférentielle Z du pneumatique 10, un angle ACF, en valeur absolue, allant de 80° à 90° dans au moins une portion 34F de la couche de carcasse 34 s'étendant radialement dans chaque flanc 22. Ici, ACF=90°.

Chaque portion 34F de la couche de carcasse 34 s'étendant radialement dans chaque flanc 22 présente une hauteur radiale égale à au moins 5%, de préférence au moins 15% et plus préférentiellement au moins 30% de la hauteur radiale H du pneumatique 10 et égale à au plus 80%, de préférence au plus 70% et plus préférentiellement au plus 60% de la hauteur radiale H du pneumatique 10 et en l'espèce égale à 41% de la hauteur radiale H du pneumatique 10. Le plan circonférentiel équatorial E du pneumatique 10 coupe chaque portion 34F de la couche de carcasse 34 située dans chaque flanc 22.

La direction principale D3 de chaque élément de renfort filaire de carcasse 340 forme, avec la direction circonférentielle Z du pneumatique 10, un angle ACT, en valeur absolue, strictement supérieur à 0°, de préférence allant de 27° à 150° et plus préférentiellement allant de 56° à 123°, dans la portion enroulée 34T de la couche de carcasse 34.

Comme illustré sur la figure 2, la direction principale D1 de chaque élément de renfort filaire de frettage 170, la direction principale D2 de chaque élément de renfort filaire de travail 180 et la direction principale D3 de chaque élément de renfort filaire de carcasse 340 forment, avec la direction circonférentielle Z du pneumatique 10, dans une portion PS' du pneumatique 10 comprise axialement entre les bords axiaux 17A, 17B de l'armature de frettage 17, des angles deux à deux différents en valeur absolue. En outre, la direction principale D2 de chaque élément de renfort filaire de travail 180 et la direction principale D3 de chaque élément de renfort filaire de carcasse 340 forment, avec la direction circonférentielle Z du pneumatique 10, dans une portion PS du pneumatique 10 comprise axialement entre les bords axiaux 18A, 18B de la couche de travail 18, des angles AT et ACS d'orientations opposées. En l'espèce, AT=-24° et ACS=+43°.

Dans le mode de réalisation décrit, chaque portion PS, PS' du pneumatique 10 présente une largeur axiale égale à au moins 40%, de préférence au moins 50% de la largeur axiale L de la couche de travail 18 et égale à au plus 90%, de préférence au plus 80% de la largeur axiale L de la couche de travail 18 et en l'espèce égale à 60% de la largeur axiale L de la couche de travail 18. Le plan médian M du pneumatique 10 coupe chaque portion PS, PS' du pneumatique 10. Plus préférentiellement, chaque portion PS, PS' du pneumatique 10 est centrée axialement sur le plan médian M du pneumatique 10.

Chaque élément de renfort filaire de travail 180 est un assemblage de deux monofilaments en acier présentant chacun un diamètre égal à 0,30 mm, les deux monofilaments en acier étant enroulés l'un avec l'autre au pas de 14 mm.

Chaque élément de renfort filaire de carcasse 340 comprend classiquement deux brins multifilamentaires, chaque brin multifilamentaire étant constitué d'un filé de monofilaments de polyesters, ici de PET, ces deux brins multifilamentaires étant surtordus individuellement à 240 tours par mètre dans un sens puis retordus ensemble à 240 tours par mètre dans le sens opposé. Ces deux brins multifilamentaires sont enroulés en hélice l'un autour de l'autre. Chacun de ces brins multifilamentaires présente un titre égal à 220 tex.

Chaque élément de renfort filaire de frettage 170 est formé par exemple par un câblé tel que décrit dans WO2016166056, WO2016166057, WO2019122620, WO2016091809, WO2016091810, WO2016091811 ou WO2016091812.

En référence aux figures 1, 4 et 5, la couche d'étanchéité 15 est délimitée axialement par deux bords axiaux 15A, 15B de la couche d'étanchéité 15. L'épaisseur moyenne Em de la couche d'étanchéité 15 va de 0,4 à 1,6 mm, de préférence de 0,9 à 1,4 mm, dans une portion 15S de la couche d'étanchéité 15 s'étendant axialement à l'aplomb radial de la couche de travail 18 et ici sur l'ensemble de la largeur axiale de la couche d'étanchéité 15 entre les bords axiaux 15A, 15B. Sur la figure 4, on a illustré une des mesures Emi permettant de déterminer Em comme décrit précédemment. En l'espèce, Em=0,6 mm.

La couche d'étanchéité 15 comprend une jonction 21 entre deux bords d'extrémité circonférentielle 23A, 23B de la couche d'étanchéité 15. La jonction 21 forme une superposition radiale 25 entre le bord d'extrémité circonférentielle 23A et l'autre bord d'extrémité circonférentielle 23B. La distance moyenne Dm entre chaque bord d'extrémité circonférentielle 23A, 23B va de 1 à 15 mm, de préférence de 2 à 8 mm, dans la portion 15S de la couche d'étanchéité 15 et ici sur l'ensemble de la largeur axiale de la couche d'étanchéité 15 entre les bords axiaux 15A, 15B. Sur la figure 4, on a illustré une des mesures Dmi permettant de déterminer Dm comme décrit précédemment. En l'espèce, Dm=2 mm.

En référence à la figure 5, la jonction 21 s'étend selon une direction principale D4 formant, avec la direction circonférentielle Z du pneumatique 10, un angle ES allant, en valeur absolue, de 20° à 60°, dans la portion 15S de la couche d'étanchéité s'étendant axialement à l'aplomb radial de la couche de travail 18. Plus précisément, dans la portion 15S, l'angle ES est, en valeur absolue, supérieur ou égal à 25°, de préférence supérieur ou égal à 30° et inférieur ou égal à 50°, de préférence inférieur ou égal à 40°. En l'espèce, ES=37°.

Comme illustré sur la figure 5, la direction principale D4 est confondue avec la courbe de longueur la plus courte (la figure 5 étant schématique, il s'agit d'une droite), passant par :
- un point P1 situé à équidistance selon la direction circonférentielle Z de chaque premier point P1A, P1B de chaque bord d'extrémité circonférentielle 23A, 23B situé à une des deux extrémités axiales de la portion 15S de la couche d'étanchéité 15, ces deux premiers points P1A, P1B étant en regard l'un de l'autre selon la direction circonférentielle Z, et
- un point P2 situé à équidistance selon la direction circonférentielle Z de chaque deuxième point P2A, P2B de chaque bord d'extrémité circonférentielle 23A, 23B situé à l'autre des deux extrémités axiales de la portion 15S de la couche d'étanchéité 15, ces deux deuxièmes points P2A, P2B étant en regard l'un de l'autre selon la direction circonférentielle Z.
Les deuxièmes points P2A, P2B sont situés de l'autre côté du plan médian M du pneumatique 10 par rapport aux premiers points P1A, P1B.

La portion 15S de la couche d'étanchéité 15 s'étendant axialement à l'aplomb de la couche de travail 18 présente une largeur axiale égale à au moins 40%, de préférence au moins 50% de la largeur axiale L de la couche de travail 18 et égale à au plus 90%, de préférence au plus 80% de la largeur axiale L de la couche de travail 18 et en l'espèce égale à 60% de la couche de travail 18. Le plan médian M du pneumatique 10 coupe cette portion 15S. Plus préférentiellement, cette portion 15S est centrée axialement sur le plan médian M du pneumatique 10.

La direction principale D4 forme, avec la direction circonférentielle Z du pneumatique 10, un angle EF allant, en valeur absolue, de 80° à 90°, dans une portion 15F de la couche d'étanchéité 15 s'étendant radialement dans chaque flanc 22. En l'espèce, EF=90°.

Dans la portion 15S de la couche d'étanchéité 15 s'étendant radialement dans chaque flanc 22, la direction principale D4 est confondue avec la courbe de longueur la plus courte (la figure 5 étant schématique, il s'agit d'une droite), passant par :
- un point P3 situé à équidistance selon la direction circonférentielle Z de chaque premier point P3A, P3B de chaque bord d'extrémité circonférentielle 23A, 23B situé à l'une des deux extrémités axiales de la portion 15S de la couche d'étanchéité 15 s'étendant radialement dans chaque flanc 22, ces deux premiers points P3A, P3B étant en regard l'un de l'autre selon la direction circonférentielle Z, et
- un point P4 situé à équidistance selon la direction circonférentielle Z de chaque deuxième point P4A, P4B de chaque bord d'extrémité circonférentielle 23A, 23B situé à l'autre des deux extrémités axiales de la portion 15S de la couche d'étanchéité 15 s'étendant radialement dans chaque flanc 22, ces deux deuxièmes points P4A, P4B étant en regard l'un de l'autre selon la direction circonférentielle Z.
Les deuxièmes points P4A, P4B sont situés radialement à l'extérieur par rapport aux premiers points P3A, P3B.

Chaque portion 15F de la couche d'étanchéité 15 s'étendant radialement dans chaque flanc 22 présente une hauteur radiale égale à au moins 5%, de préférence au moins 15% et plus préférentiellement au moins 30% de la hauteur radiale H du pneumatique 10 et égale à au plus 80%, de préférence au plus 70% et plus préférentiellement au plus 60% de la hauteur radiale H du pneumatique 10 et en l'espèce égale à 41% de la hauteur radiale H du pneumatique 10. Le plan circonférentiel équatorial E du pneumatique 10 coupe chaque portion 15F de la couche d'étanchéité 15 située dans chaque flanc 22.

Conformément à l'invention, l'angle EF est, en valeur absolue, strictement supérieur à l'angle ES. Sur la figure 5, on a par ailleurs illustré la longueur circonférentielle Le de la jonction 21 correspondant à la distance circonférentielle séparant les points circonférentiellement les plus éloignés d'entre les deux bords d'extrémité circonférentielle 23A, 23B.

La couche de carcasse 34 comprend une jonction (non illustrée) entre deux bords d'extrémité circonférentielle de la couche de carcasse 34. La jonction forme, de façon analogue à la couche d'étanchéité 15, une superposition radiale entre un des bords d'extrémité circonférentielle de la couche de carcasse 34 et l'autre des bords d'extrémité circonférentielle de la couche de carcasse 34. Tout point de la jonction de la couche d'étanchéité 15 est situé à un azimut décalé d'au moins 60° et d'au plus 300° par rapport à tout point de la jonction de la couche de carcasse 34, en l'espèce décalé d'au moins 150° et d'au plus 210°.

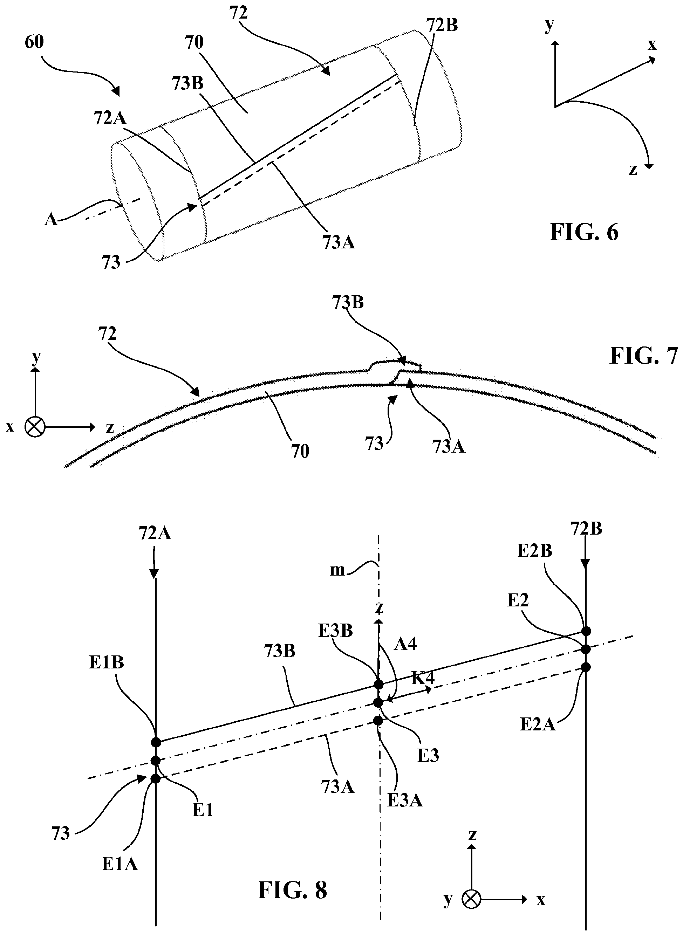

Le pneumatique 10 est obtenu par un premier procédé selon l'invention que l'on va décrire en référence aux figures 6 à 19.

Tout d'abord, on fabrique un ensemble de travail enroulé 50 et un ensemble de carcasse enroulé 52 en agençant parallèlement les uns aux autres les éléments de renfort filaires 180 et 340 de chaque ensemble 50 et 52 et en les noyant, par exemple par calandrage, dans une composition non réticulée comprenant au moins un élastomère, la composition étant destinée à former une matrice élastomérique une fois réticulée. On obtient une nappe dite droite, dans laquelle les éléments de renfort filaires sont parallèles les uns aux autres et sont parallèles à la direction principale de la nappe. Puis, on découpe des portions de chaque nappe droite selon un angle de découpe et on aboute ces portions les unes aux autres de façon à obtenir une nappe dite à angle, dans laquelle les éléments de renfort filaires de la nappe sont parallèles les uns aux autres et forment un angle avec la direction principale de la nappe égal à l'angle de découpe.

Dans le mode de réalisation décrit, on obtient d'une part une unique nappe de travail 49 et une unique nappe de carcasse 51 dont la largeur axiale de chacune, c'est-à-dire la dimension selon une direction perpendiculaire aux bords longitudinaux de chaque nappe, est égale à la largeur axiale respectivement de chaque ensemble de travail enroulé 50 et de carcasse 52 qui seront formés ultérieurement.

En référence aux figures 6 et 7, dans une première étape d'assemblage d'une ébauche crue, on forme par enroulement d'une nappe d'étanchéité 70 autour d'un support 60 présentant une forme sensiblement cylindrique autour de son axe principal A, un ensemble d'étanchéité enroulé 72 destiné à former la couche d'étanchéité 15. Le support 60 présente une surface de pose sensiblement cylindrique de rayon égal à 235 mm. L'ensemble d'étanchéité enroulé 72 est délimité axialement par deux bords axiaux 72A, 72B de l'ensemble d'étanchéité enroulé 72. Chaque bord axial 72A, 72B de l'ensemble d'étanchéité enroulé 72 est destiné à former chaque bord axial 15A, 15B de la couche d'étanchéité 15. L'ensemble d'étanchéité enroulé 72 comprend une jonction 73 entre deux bords d'extrémité circonférentielle 73A, 73B de l'ensemble d'étanchéité enroulé 72. La jonction 73, destiné à former la jonction 21 une fois le pneumatique fabriqué, forme une superposition radiale entre le bord d'extrémité circonférentielle 73A et l'autre bord d'extrémité circonférentielle 73B.

En référence à la figure 8 illustrant de façon schématique l'ensemble d'étanchéité 72, la direction principale K4 de la jonction 73 forme, avec la direction circonférentielle z du support 60, un angle initial A4 sensiblement constant, sur l'ensemble de la largeur axiale de l'ensemble d'étanchéité enroulé 72 entre les deux bords axiaux 72A, 72B de l'ensemble d'étanchéité enroulé 72. Chaque bord d'extrémité circonférentielle 73A, 73B est destiné à former chaque bord d'extrémité circonférentielle 23A, 23B une fois le pneumatique fabriqué. La direction principale K4 est confondue avec la courbe de longueur la plus courte (la figure 8 étant schématique, il s'agit d'une droite), passant par:
- un point E1 situé à équidistance selon la direction circonférentielle z de chaque premier point E1A, E1A d'extrémité axiale de chaque bord d'extrémité circonférentielle 73A, 73B de l'ensemble d'étanchéité enroulé 72, ces deux premiers points E1A, E1B étant en regard l'un de l'autre selon la direction circonférentielle z,
- un point E2 situé à équidistance selon la direction circonférentielle z de chaque deuxième point E2A, E2B d'extrémité axiale de chaque bord d'extrémité circonférentielle 73A, 73B de l'ensemble d'étanchéité enroulé 72, ces deux deuxièmes points E2A, E2B étant en regard l'un de l'autre selon la direction circonférentielle z, et
- un point E3 situé à équidistance selon la direction circonférentielle z de chaque troisième point E3A, E3B situé sur le plan médian m du support 60 et sur chaque bord d'extrémité circonférentielle 73A, 73B de l'ensemble d'étanchéité enroulé 72, ces deux troisièmes points E3A, E3B étant en regard l'un de l'autre selon la direction circonférentielle z.
Les deuxièmes points E2A, E2B sont situés de l'autre côté du plan médian m du support 60 par rapport aux premiers points E1A, E1B.

L'angle initial A4 va, en valeur absolue, de 35° à 80° et est ici égal à 73°.

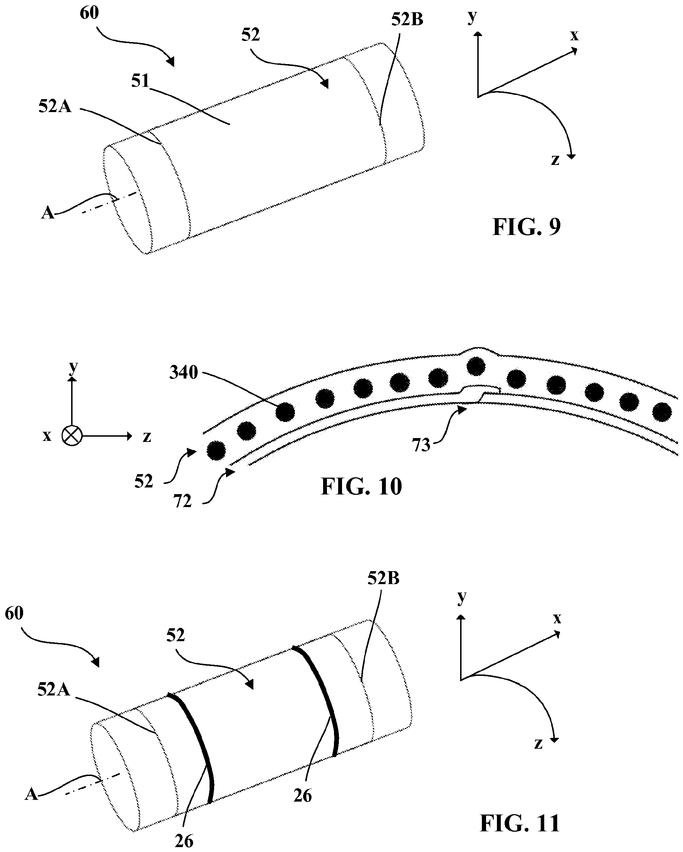

Puis, en référence aux figures 9 et 10, radialement à l'extérieur de l'ensemble d'étanchéité enroulé 72, on forme par enroulement de la nappe de carcasse 51 autour du support 60, l'ensemble de carcasse enroulé 52 destiné à former la couche de carcasse 34. L'ensemble de carcasse enroulé 52 est délimité axialement par deux bords axiaux 52A, 52B de l'ensemble de carcasse 52 et comprend les éléments de renfort filaires de carcasse 340 s'étendant sensiblement parallèlement les uns aux autres axialement du bord axial 52A à l'autre bord axial 52B de l'ensemble de carcasse 52 enroulé. Chaque élément de renfort filaire de carcasse 340 s'étend, dans la nappe de carcasse 51, selon une direction principale K3 de chaque élément de renfort filaire de carcasse 340 dans la nappe de carcasse 51. La direction principale K3 forme, avec la direction circonférentielle z du support 60, un angle initial A3 de chaque élément de renfort filaire de carcasse 340, en valeur absolue, strictement supérieur à 0°, de préférence allant de 27° à 150° et plus préférentiellement allant de 56° à 123°. Ici A3=75°.

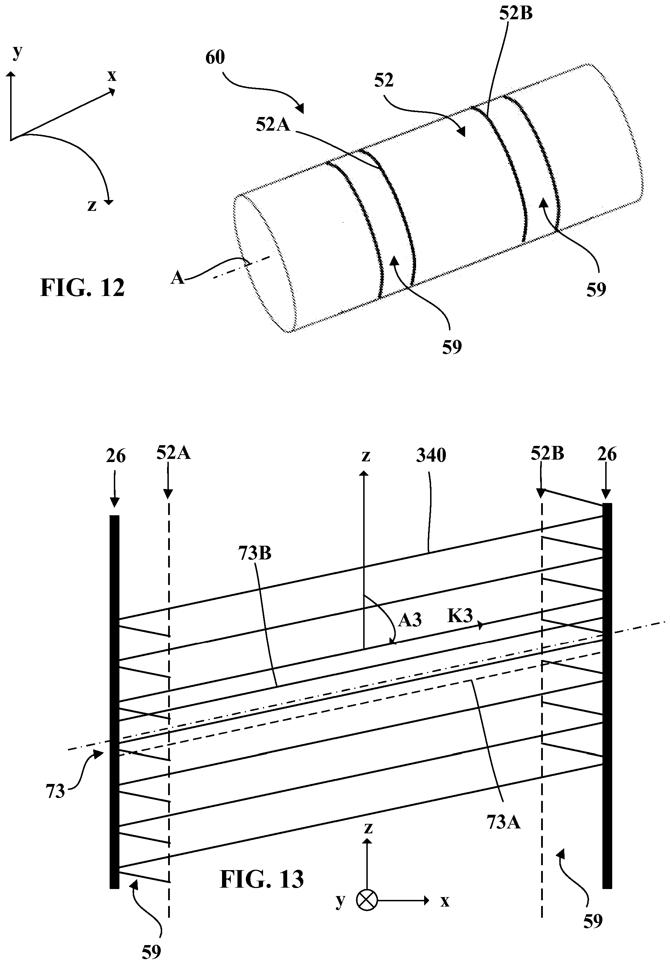

En référence aux figures 11 et 12, ensuite, on agence les deux éléments de renfort circonférentiels 26 autour de l'ensemble de carcasse enroulé 52 et on retourne axialement vers l'intérieur chaque bord axial 52A, 52B de l'ensemble de carcasse enroulé 52 de façon à recouvrir radialement chaque élément de renfort circonférentiel 26 par chaque bord axial 52A, 52B de l'ensemble de carcasse enroulé 52 et à former une portion 59 de l'ensemble de carcasse enroulé 52 enroulée autour de chaque élément de renfort circonférentiel 26. La portion 59 de l'ensemble de carcasse enroulé 52 est destinée à former la portion 34T de la couche de carcasse 34 enroulée autour de chaque élément de renfort circonférentiel 26 dans le pneumatique.

On a représenté sur la figure 13 un schéma illustrant l'agencement des éléments de renfort filaires 340 de carcasse à l'issue de l'étape de retournement axial des bords axiaux 52A, 52B de l'ensemble de carcasse enroulé 52 autour des éléments de renfort circonférentiel 26. Sur cette figure 13, on a représenté l'angle initial A3 décrit ci-dessus ainsi que chaque portion 59.

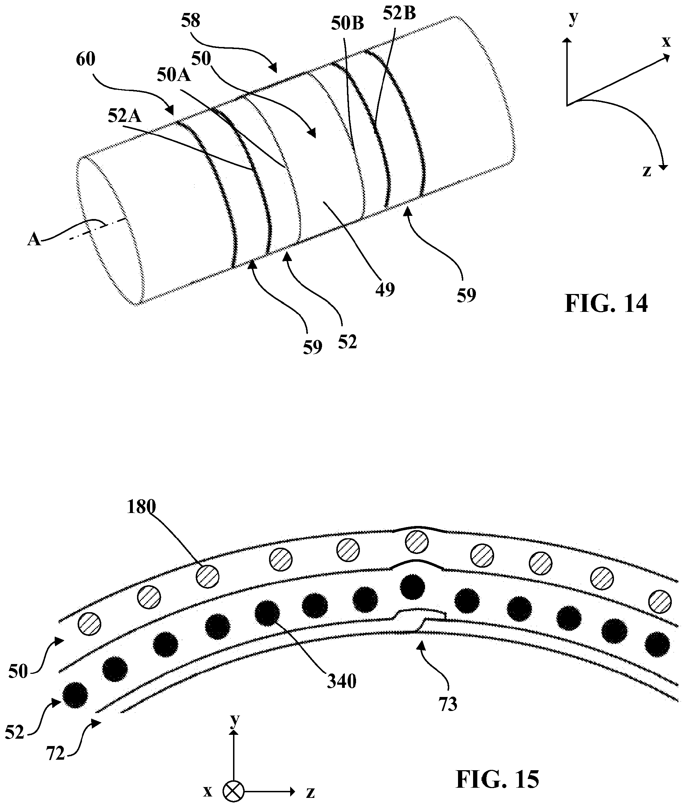

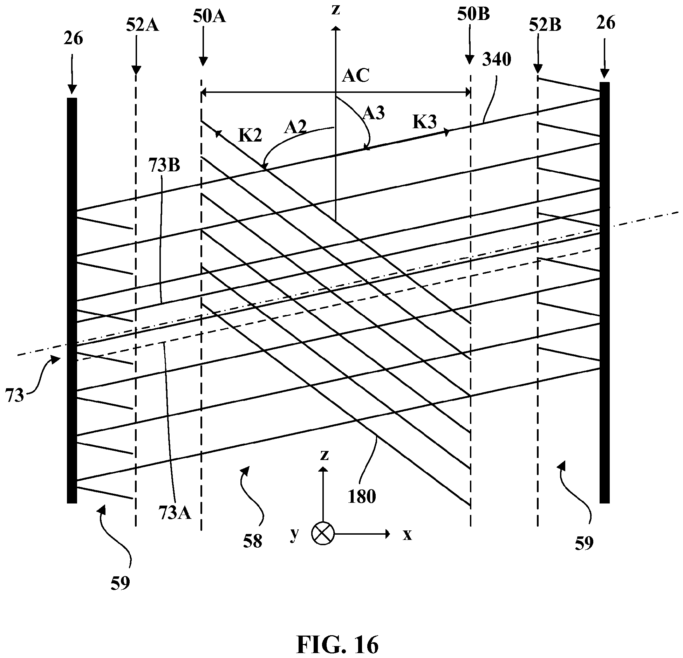

Puis, en référence aux figures 14 et 15, on forme par enroulement de la nappe de travail 49, radialement à l'extérieur de l'ensemble de carcasse enroulé 52, l'ensemble de travail enroulé 50 destiné à former la couche de travail 18. L'ensemble de travail enroulé 50 est délimité axialement par deux bords axiaux 50A, 50B de l'ensemble de travail enroulé 50 et comprend les éléments de renfort filaires de travail 180 s'étendant sensiblement parallèlement les uns aux autres axialement du bord axial 50A à l'autre bord axial 50B de l'ensemble de travail enroulé 50. Chaque élément de renfort filaire de travail 180 s'étend, dans la nappe de travail 49, selon une direction principale K2 de chaque élément de renfort filaire de travail 180 dans la nappe de travail 49. En référence à la figure 16, la direction principale K2 forme, avec la direction circonférentielle z du support 60, un angle initial A2 de chaque élément de renfort filaire de travail 180, en valeur absolue, strictement supérieur à 0°, de préférence allant de 4° à 60° et plus préférentiellement allant de 16° à 47°. Ici, A2=35°.

L'ensemble d'étanchéité enroulé 72, l'ensemble de carcasse enroulé 52 et l'ensemble de travail enroulé 50 forment alors un assemblage 58 de forme sensiblement cylindrique autour de l'axe principal A du support 60.

On a représenté sur la figure 16 un schéma analogue à celui de la figure 13 illustrant l'agencement des éléments de renfort filaires 340 de carcasse et des éléments de renfort filaires 180 de travail à l'issue de l'étape de formation de l'ensemble de travail enroulé 50. Sur cette figure 16, on a représenté les angles initiaux A2 et A3.

La direction principale K2 de chaque élément de renfort filaire de travail 180 et la direction principale K3 de chaque élément de renfort filaire de carcasse 340 forment, avec la direction circonférentielle z du support 60, dans une portion AC de l'assemblage 58 comprise axialement entre les bords axiaux 50A, 50B de l'ensemble de travail enroulé 50, des angles initiaux A2 et A3 d'orientations opposées. En l'espèce, A2=-35° et A3=+75°.

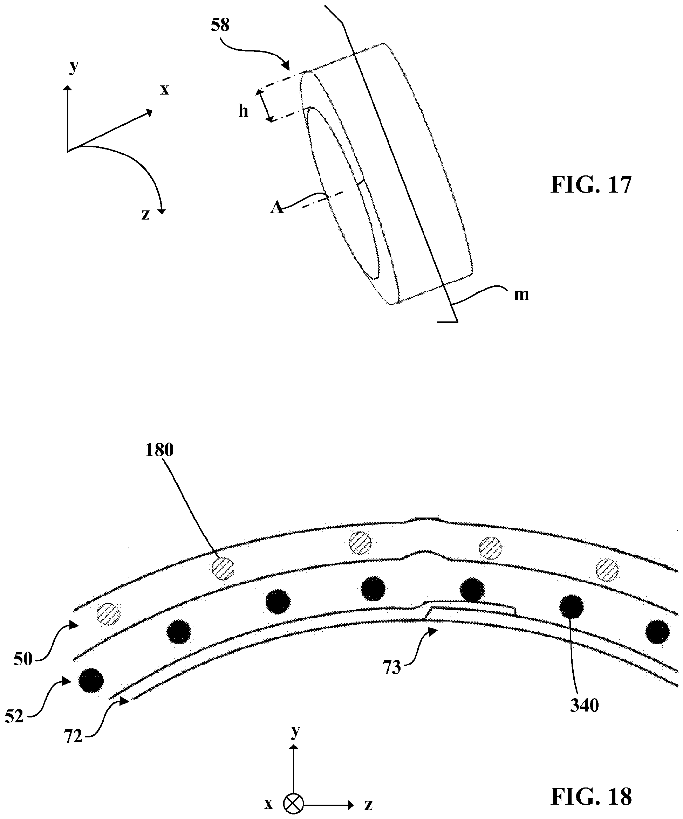

Puis, on déforme l'assemblage 58 de forme sensiblement cylindrique autour de l'axe principal A du support 60 de façon à obtenir l'assemblage 58 de forme sensiblement torique autour de l'axe principal A du support 60. On obtient l'assemblage déformé 58illustré sur les figures 17 et 18. La surface de pose du support 60 présente alors, au niveau du plan médian du support, un rayon égal à 327 mm.

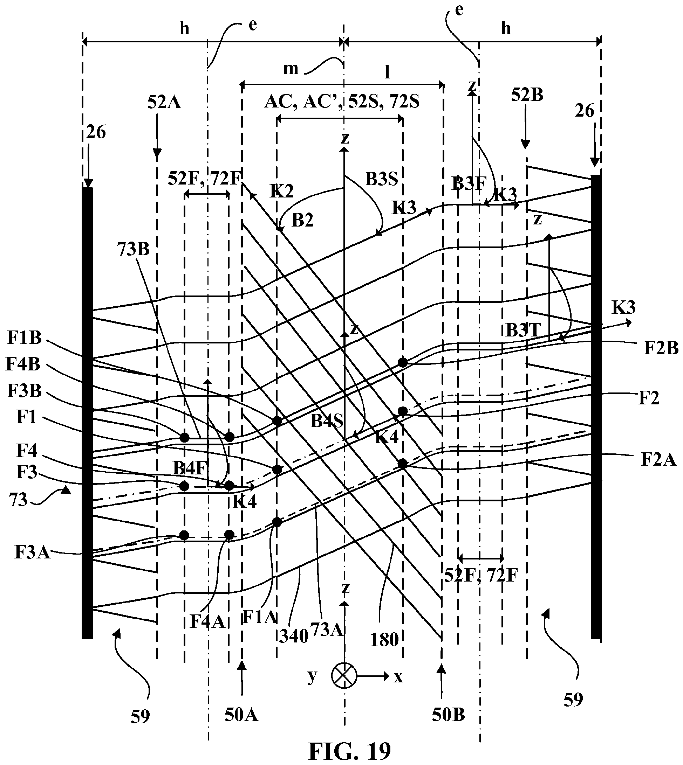

En référence à la figure 19, on déforme l'assemblage 58 de forme sensiblement cylindrique autour de l'axe principal A du support 60 de façon à obtenir un assemblage 58 de forme sensiblement torique autour de l'axe principal A du support 60 de sorte que la direction principale K3 de chaque élément de renfort filaire de carcasse 340 forme, avec la direction circonférentielle z du support 60, un angle final B3S de chaque élément de renfort filaire de carcasse 340, en valeur absolue, strictement inférieur à 80°, dans une portion 52S de l'ensemble de carcasse enroulé 52 s'étendant axialement à l'aplomb radial de l'ensemble de travail enroulé 50. Avantageusement, l'angle final B3S est, en valeur absolue, supérieur ou égal à 10°, de préférence va de 20° à 75° et plus préférentiellement va de 35 à 70°. Ici, B3S=43°. La portion 52S de l'ensemble de carcasse enroulé 52 est destinée à former la portion 34S de la couche de carcasse 34.

La portion 52S de l'ensemble de carcasse enroulé 52 s'étendant axialement à l'aplomb radial de l'ensemble de travail enroulé 50 présente une largeur axiale égale à au moins 40%, de préférence au moins 50% de la largeur axiale I de l'ensemble de travail enroulé 50 et égale à au plus 90%, de préférence au plus 80% de la largeur axiale I de l'ensemble de travail enroulé 50 et, en l'espèce est égale à 60% de la largeur axiale I de l'ensemble de travail enroulé 50. Le plan médian m de l'assemblage 58 coupe cette portion 52S. Plus préférentiellement, cette portion 52S est centrée axialement sur le plan médian m de l'assemblage 58.

On déforme l'assemblage 58 de forme sensiblement cylindrique autour de l'axe principal A du support 60 de façon à obtenir l'assemblage 58 de forme sensiblement torique autour de l'axe principal A du support 60 également de sorte que, la direction principale K3 de chaque élément de renfort filaire de carcasse 340 forme, avec la direction circonférentielle z du support 60, un angle final B3F de chaque élément de renfort filaire de carcasse 340 allant, en valeur absolue, de 80° à 90°, dans une portion 52F de l'ensemble de carcasse enroulé 52 destinée à s'étendre radialement dans chaque flanc 22 du pneumatique 10. Chaque portion 52F de l'ensemble de carcasse enroulé 52 est destinée à former chaque portion 34F de la couche de carcasse 34.

Chaque portion 52F de l'ensemble de carcasse enroulé 52 destinée à s'étendre radialement dans chaque flanc 22 présente une hauteur radiale égale à au moins 5%, de préférence au moins 15% et encore plus préférentiellement au moins 30% de la hauteur radiale H du pneumatique fabriqué et égale à au plus 80%, de préférence au plus 70% et encore plus préférentiellement au plus 60% de la hauteur radiale H du pneumatique fabriqué, et en l'espèce est égale à 41% de la hauteur radiale H du pneumatique fabriqué. Le plan circonférentiel équatorial e de l'assemblage 58 coupe chaque portion 52F de l'ensemble de carcasse enroulé 52 destinée à être située dans chaque flanc 22.

Lors de l'étape de déformation, l'angle final B3T formé par la direction principale K3 de chaque élément de renfort filaire de carcasse 340, avec la direction circonférentielle z du support 60, dans la portion 59 enroulée de l'ensemble de carcasse enroulé 52, est sensiblement identique à l'angle initial A3 avant l'étape de déformation.

On déforme l'assemblage 58 de forme sensiblement cylindrique autour de l'axe principal A du support 60 de façon à obtenir l'assemblage 58 de forme sensiblement torique autour de l'axe principal A du support 60 également de sorte que, la direction principale K2 de chaque élément de renfort filaire de travail 340 forment, avec la direction circonférentielle z du support 60, un angle final B2 de chaque élément de renfort filaire de travail 340, en valeur absolue, strictement supérieur à 10°. Avantageusement, l'angle final B2 va, en valeur absolue, de 15° à 50°, de préférence de 18° à 30° et ici B2=24°.

La direction principale K2 de chaque élément de renfort filaire de travail 180 et la direction principale K3 de chaque élément de renfort filaire de carcasse 340 forment, avec la direction circonférentielle z du support 60, dans la portion AC de l'assemblage 58 comprise axialement entre les bords axiaux 50A, 50B de l'ensemble de travail enroulé 50, des angles finaux B2 et B3S d'orientations opposées. En l'espèce, B2=-24° et B3S=+43°.

On déforme l'assemblage 58 de forme sensiblement cylindrique autour de l'axe principal A du support 60 de façon à obtenir l'assemblage 58 de forme sensiblement torique autour de l'axe principal A du support 60 également de sorte que, postérieurement à l'étape de déformation, la direction principale IK4 de la jonction 73 forme, avec la direction circonférentielle z du support 60, un angle final B4S allant, en valeur absolue, de 20° à 60°, dans une portion 72S de l'ensemble d'étanchéité enroulé 72 s'étendant axialement à l'aplomb radial de l'ensemble de travail enroulé 50. L'angle final B4S est, en valeur absolue, supérieur ou égal à 25°, de préférence supérieur ou égal à 30° et inférieur ou égal à 50°, de préférence inférieur ou égal à 40° et ici B4S= 37°. L'angle B4S est sensiblement égal à l'angle ES.

La portion 72S de l'ensemble d'étanchéité enroulé 72 présente une largeur axiale égale à au moins 40%, de préférence au moins 50% de la largeur axiale I de l'ensemble de travail enroulé 50 et égale à au plus 90%, de préférence au plus 80% de la largeur axiale I de l'ensemble de travail enroulé 50 et ici en l'espèce 60% de la largeur axiale I de l'ensemble de travail enroulé 50. Le plan médian m de l'assemblage 58 coupe cette portion 72S de l'ensemble d'étanchéité enroulé 72. Plus préférentiellement, cette portion 72S de l'ensemble d'étanchéité enroulé 72 est centrée axialement sur le plan médian m de l'assemblage 58.

Dans la portion 72S, la direction principale K4 est confondue avec la courbe de longueur la plus courte (la figure 19 étant schématique, il s'agit d'une droite) passant par :
- un point F1 situé à équidistance selon la direction circonférentielle z de chaque premier point F1B, F1A de chaque bord d'extrémité circonférentielle 73A, 73B situé à l'une des deux extrémités axiales de la portion 72S de l'ensemble d'étanchéité enroulé 72, ces deux premiers points F1B, F1A étant en regard l'un de l'autre selon la direction circonférentielle z, et
- un point F2 situé à équidistance selon la direction circonférentielle z de chaque deuxième point F2B, F2A de chaque bord d'extrémité circonférentielle 73A, 73B situé à l'autre des deux extrémités axiales de la portion 72S de l'ensemble d'étanchéité 72, ces deux deuxièmes points F2A, F2B étant en regard l'un de l'autre selon la direction circonférentielle z.
Les deuxièmes points F2A, F2B sont situés de l'autre côté du plan médian m du support 60 par rapport aux premiers points F1B, F1A.

On déforme l'assemblage 58 de forme sensiblement cylindrique autour de l'axe principal A du support 60 de façon à obtenir l'assemblage 58 de forme sensiblement torique autour de l'axe principal A du support 60 également de sorte que, postérieurement à l'étape de déformation, la direction principale K4 de la jonction 73 forme, avec la direction circonférentielle z du support 60, un angle final B4F allant, en valeur absolue, de 80° à 90°, dans une portion 72F de l'ensemble d'étanchéité enroulé 72 destinée à s'étendre radialement dans chaque flanc 22. Ici, B4F = 90°. Conformément à l'invention, l'angle B4F est, en valeur absolue, strictement supérieur à l'angle B4S. L'angle B4F est sensiblement égal à l'angle EF.

Chaque portion 72F de l'ensemble d'étanchéité 72 présente une hauteur radiale égale à au moins 5%, de préférence au moins 15% et plus préférentiellement au moins 30% de la hauteur radiale H du pneumatique fabriqué et égale à au plus 80%, de préférence au plus 70% et plus préférentiellement au plus 60% de la hauteur radiale H du pneumatique fabriqué et en l'espèce égale à 41% de la hauteur radiale H du pneumatique fabriqué. Le plan circonférentiel équatorial e de l'assemblage 58 coupe chaque portion 72F de l'ensemble d'étanchéité 72.

Dans la portion 72F, la direction principale K4 est confondue avec la courbe de longueur la plus courte (la figure 19 étant schématique, il s'agit d'une droite) passant par :
- un point F3 situé à équidistance selon la direction circonférentielle z de chaque premier point F3A, F3B de chaque bord d'extrémité circonférentielle 73A, 73B situé à l'une de deux extrémités axiales de la portion 72F de l'ensemble d'étanchéité 72 destinée à s'étendre radialement dans chaque flanc 22, ces deux premiers points F3A, F3B étant en regard l'un de l'autre selon la direction circonférentielle z, et
- un point F4 situé à équidistance selon la direction circonférentielle z de chaque deuxième point F4A, F4B de chaque bord d'extrémité circonférentielle 73A, 73B situé à l'autre des deux extrémités axiales de la portion 72F de l'ensemble d'étanchéité 72 destinée à s'étendre radialement dans chaque flanc 22, ces deux deuxièmes points F4A, F4B étant en regard l'un de l'autre selon la direction circonférentielle z.
Les deuxièmes points F4A, F4B sont situés radialement à l'extérieur par rapport aux premiers points F3A, F3B.

Au cours du procédé, on noie plusieurs éléments de renfort filaires de frettage 170, de préférence adhérisés, dans une matrice élastomérique pour former une nappe de frettage.

Puis, on agence, radialement autour de l'assemblage 58 préalablement formé sur le support 60, un ensemble de frettage enroulé destiné à former l'armature de frettage 17. Ici, l'ensemble de frettage enroulé est formé par enroulement hélicoïdal de la nappe de frettage sur une forme torique puis l'ensemble de frettage enroulé est transféré à l'aide d'un anneau de transfert radialement à l'extérieur de l'assemblage préalablement formé. En variante, on pourra directement enrouler circonférentiellement hélicoïdalement la nappe de frettage autour de l'assemblage préalablement formé de façon à former l'ensemble de frettage enroulé.

Dans le mode de réalisation illustré, l'ensemble de frettage enroulé présente une largeur axiale plus petite que la largeur axiale de l'ensemble de travail enroulé 50. Ainsi, l'ensemble de frettage enroulé est axialement le moins large des ensembles de travail enroulé 50 et de frettage enroulé.

L'angle A1 formé par la direction principale K1 de chaque élément de renfort filaire de frettage 170 avec la direction circonférentielle z du support 60 est, en valeur absolue, inférieur ou égal à 10°, de préférence inférieur ou égal à 7° et plus préférentiellement inférieur ou égal à 5° et ici égal à 5°.

La direction principale K1 de chaque élément de renfort filaire de frettage 170, la direction principale K2 de chaque élément de renfort filaire de travail 180 et la direction principale D3 de chaque élément de renfort filaire de carcasse 340 forment, avec la direction circonférentielle z du support 60, dans une portion AC' de l'assemblage 58 et de l'ensemble de frettage enroulé comprise axialement entre les bords axiaux de l'ensemble de frettage enroulé, des angles deux à deux différents en valeur absolue.

La portion AC' de l'assemblage 58 et de l'ensemble de frettage enroulé comprise axialement entre les bords axiaux de l'ensemble de frettage enroulé 50 présente une largeur axiale égale à au moins 40%, de préférence au moins 50% de la largeur axiale L de l'ensemble de travail enroulé 50 et au plus 90%, de préférence au plus 80% de la largeur axiale L de l'ensemble de travail enroulé 50 et en l'espèce ici 60% de la largeur axiale L de l'ensemble de travail enroulé 50. Le plan médian m de l'assemblage 58 coupe cette portion AC'. Plus préférentiellement, cette portion AC' est centrée axialement sur le plan médian m de l'assemblage 58.

Puis, on agence, radialement à l'extérieur de l'ensemble de frettage enroulé, une bande de matériau polymérique destiné à former la bande de roulement 20, de façon à former une ébauche crue du pneumatique 10. Dans une variante, on pourra agencer radialement à l'extérieur de l'ensemble de frettage, la bande de matériau polymérique destiné à former la bande de roulement 20 puis transférer cet ensemble radialement à l'extérieur de l'assemblage 58 préalablement formé sur le support 60. Dans une autre variante, on pourra, après avoir agencé l'ensemble de frettage enroulé radialement autour de l'assemblage 58 préalablement formé sur le support 60, agencer la bande de matériau polymérique destiné à former la bande de roulement 20.

On obtient alors l'ébauche crue du pneumatique formée à partir de l'assemblage 58. On procède alors à une étape de moulage de l'ébauche crue durant laquelle on positionne l'ébauche crue dans un moule de réticulation comprenant une membrane déformable destinée à appliquer une pression sur une surface radialement interne de l'ensemble d'étanchéité enroulé. On expanse radialement et circonférentiellement l'ébauche crue, par exemple par mise sous pression, de la membrane déformable, de façon à plaquer l'ébauche crue contre des surfaces du moule de réticulation.

Puis on procède à une étape de réticulation de l'ébauche crue de façon à faire réticuler les compositions à l'état non réticulées et à obtenir le pneumatique. Préalablement à cette étape de réticulation, on revêt d'une composition anti-adhésive comprenant un silicone:
- une surface radialement et axialement externe de la membrane déformable destinée à venir au contact de la surface radialement interne de l'ensemble d'étanchéité enroulé lors de l'étape de réticulation, ou
- la surface radialement interne de l'ensemble d'étanchéité enroulé destinée à venir au contact d'une surface radialement et axialement externe de la membrane déformable lors de l'étape de réticulation.

On va maintenant décrire une pneumatique et un procédé conforme à un deuxième mode de réalisation selon l'invention. Les éléments analogues à ceux du premier mode de réalisation sont désignés par des références identiques.

A la différence du pneumatique 10 selon le premier mode de réalisation et comme illustré sur les figures 20 à 23, l'armature de travail 16 du pneumatique 10 selon le deuxième mode de réalisation comprend deux couches de travail 18, 18'. En l'espèce, l'armature de travail comprend une première couche de travail 18 radialement la plus interne et une deuxième couche de travail 18' agencée radialement à l'extérieur de la couche de travail 18. Ici, l'armature de travail est constituée des couches de travail 18 et 18'. La couche de travail 18' est délimitée axialement par deux bords axiaux 18'A, 18'B de la couche de travail 18' et comprend des éléments de renfort filaires de travail 180' s'étendant axialement du bord axial 18'A à l'autre bord axial 18'B de la couche de travail 18' les uns sensiblement parallèlement aux autres selon une direction principale D2'.

La direction principale D2 selon laquelle s'étend chaque élément de renfort filaire de travail 180 de la couche de travail 18 et la direction principale D2' selon laquelle s'étend chaque élément de renfort filaire de travail 180' de la couche de travail 18' forment, avec la direction circonférentielle du pneumatique, dans la portion du pneumatique PS délimitée axialement par les bords axiaux 18A, 18B de la couche de travail 18 radialement la plus interne, des angles AT et AT' d'orientations opposées. En l'espèce, AT= -26°et AT'=+26°.

A la différence du pneumatique 10 selon le premier mode de réalisation, la direction principale D3 de chaque élément de renfort filaire de carcasse 340 de la couche de carcasse 34 forme, avec la direction circonférentielle Z du pneumatique 10 un angle AC sensiblement constant sur l'ensemble de la largeur axiale de la couche de carcasse 34 entre les bords axiaux 34A, 34B de la couche de carcasse et allant, en valeur absolue, de 80° à 90°. Ici, AC=90°.

A la différence du pneumatique 10 selon le premier mode de réalisation dans lequel la direction principale de la jonction 23 présente, entre les portions 15F et 15S, des zones de transition où l'angle est sensiblement variable, la portion 15S de la couche d'étanchéité 15 s'étendant axialement à l'aplomb de la couche de travail 18 radialement la plus interne et dans laquelle la direction principale D4 de la jonction 23 forme, avec la direction circonférentielle Z du pneumatique 10, un angle ES allant, en valeur absolue, de 20° à 60° présente une largeur axiale égale à au moins 70%, de préférence au moins 80% de la largeur axiale L de la couche de travail 18 radialement la plus interne et, ici égale à la largeur axiale L de la couche de travail 18 radialement la plus interne.

En outre, chaque portion 15F de la couche d'étanchéité 15 s'étendant radialement dans chaque flanc 22 et dans laquelle la direction principale D4 de la jonction 23 forme, avec la direction circonférentielle Z du pneumatique 10, un angle EF allant, en valeur absolue, de 80° à 90° présente une hauteur radiale égale à la hauteur radiale du flanc du pneumatique 10.

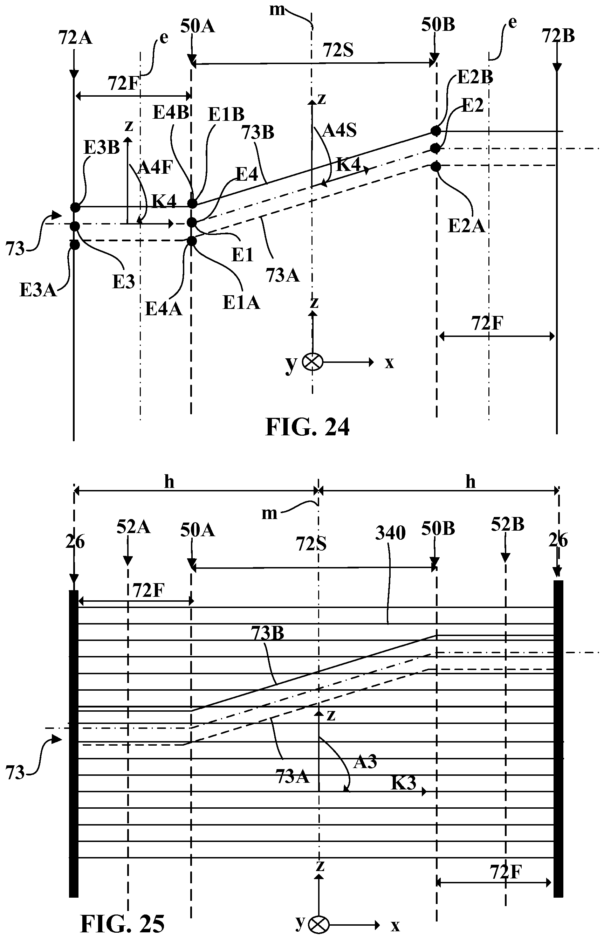

A la différence du premier procédé selon l'invention, le deuxième procédé selon l'invention utilise le fait de réaliser la jonction avec des angles différents et donc avec une direction principale de la jonction ne faisant pas un angle constant. Ainsi, en référence à la figure 24, lors de l'étape de formation de l'ensemble d'étanchéité enroulé 72, on forme la jonction 73 de sorte que la direction principale K4 de la jonction 73 forme, avec la direction circonférentielle z du support 60, un angle A4S initial, en valeur absolue, strictement inférieur à 80°, dans une portion 72S de l'ensemble d'étanchéité enroulé 72 destinée à s'étendre axialement à l'aplomb radial de l'ensemble de travail enroulé 50 radialement le plus interne. En l'espèce A4S va de 23° à 75° et ici A4S=47°.

Lors de l'étape de formation de l'ensemble d'étanchéité enroulé 72, on forme la jonction 73 de sorte que la direction principale K4 de la jonction 73 forme, avec la direction circonférentielle z du support 60, un angle initial A4F allant, en valeur absolue, de 80° à 90° dans une portion 72F de l'ensemble d'étanchéité enroulé 72 destinée à s'étendre radialement dans chaque flanc 22. En l'espèce A4F=90°. Conformément à l'invention, l'angle A4F est, en valeur absolue, strictement supérieur à l'angle A4S.

La portion 72S de l'ensemble d'étanchéité enroulé 72 présente une largeur axiale égale à au moins 70%, de préférence au moins 80% de la largeur axiale L de l'ensemble de travail enroulé 50 radialement le plus interne. Le plan médian m de l'assemblage 58 coupe cette portion 72S de l'ensemble d'étanchéité enroulé 72. Plus préférentiellement, cette portion 72S de l'ensemble d'étanchéité enroulé 72 centrée axialement sur le plan médian m de l'assemblage 58.

Chaque portion 72F de l'ensemble d'étanchéité enroulé 72 présente une hauteur radiale égale à au moins 60%, de préférence au moins 70% de la hauteur radiale H du pneumatique fabriqué 10. Le plan circonférentiel équatorial e de l'assemblage 58 coupe chaque portion 72F de l'ensemble d'étanchéité 72.

Puis, en référence à la figure 25, on forme par enroulement de la nappe de carcasse 51 radialement à l'extérieur de l'ensemble d'étanchéité enroulé 72, l'ensemble de carcasse enroulé 52 destiné à former la couche de carcasse 34. L'ensemble d'étanchéité enroulé 72 et l'ensemble de carcasse enroulé 52 forment alors l'assemblage 58 de forme sensiblement cylindrique autour de l'axe principal A du support 60. La direction principale K3 de chaque élément de renfort filaire de carcasse 340 forme, avec la direction circonférentielle z du support 60, un angle initial A3 allant, en valeur absolue, de 80° à 90° sur l'ensemble de la largeur axiale de de l'ensemble de carcasse enroulé 52 entre les deux bords axiaux 52A, 52B.

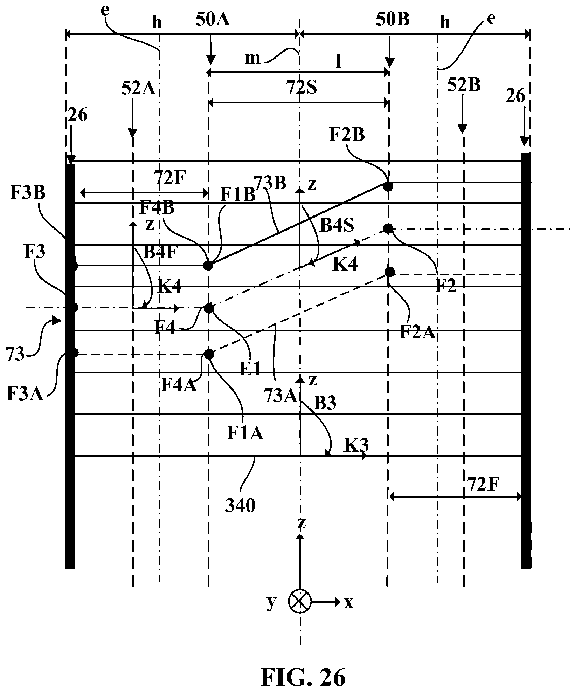

Puis, en référence à la figure 26, préalablement à la formation des ensembles de travail enroulés 50, 50', on déforme l'assemblage 58 de forme sensiblement cylindrique autour de l'axe principal A du support 60 de façon à obtenir l'assemblage 58 de forme sensiblement torique de sorte que, postérieurement à l'étape de déformation, la direction principale K4 de la jonction 73 forme, avec la direction circonférentielle z du support 60, un angle final B4S allant, en valeur absolue, de 20° à 60°, dans la portion 72S de l'ensemble d'étanchéité enroulé 72. En l'espèce, l'angle final B4S est, en valeur absolue, supérieur ou égal à 25°, de préférence supérieur ou égal à 30° et est inférieur ou égal à 50°, de préférence inférieur ou égal à 40°. Ici B4S=37°.

De plus, on déforme l'assemblage 58 de sorte que, postérieurement à l'étape de déformation, la direction principale K4 de la jonction 73 forme, avec la direction circonférentielle z du support 60, un angle final B4F allant, en valeur absolue, de 80° à 90°, dans la portion 72F de l'ensemble d'étanchéité enroulé 72. Ici, B4F=90°. Conformément à l'invention, l'angle B4F est, en valeur absolue, strictement supérieur à l'angle B4S.

En outre, on déforme l'assemblage 58 de sorte que, postérieurement à l'étape de déformation, la direction principale K3 de chaque élément de renfort filaire de carcasse 340 forme, avec la direction circonférentielle z du support 60, un angle final B3 de chaque élément de renfort filaire de carcasse 340 allant, en valeur absolue, de 80° à 90° sur l'ensemble de la largeur axiale de l'ensemble de carcasse enroulé 52 entre les deux bords axiaux 52A, 52B.

Puis, postérieurement à l'étape de déformation de l'assemblage 58, on forme par enroulement de deux nappes de travail 49, 49', radialement à l'extérieur de l'ensemble de carcasse enroulé 52, deux ensembles de travail enroulés 50, 50' destinés à former respectivement chaque couche de travail 18, 18'. En l'espèce, on forme par enroulement de la nappe de travail 49, radialement à l'extérieur de l'assemblage 58 déformé, un premier ensemble de travail enroulé 50 radialement le plus interne. Puis, on forme par enroulement de la nappe de travail 49', radialement à l'extérieur du premier ensemble de travail enroulé 50, un deuxième ensemble de travail enroulé 50' radialement le plus externe.

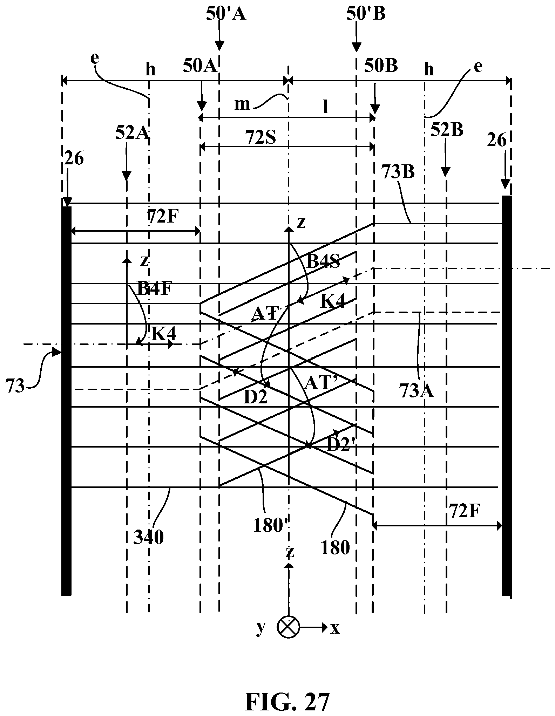

En référence à la figure 27, le premier ensemble de travail enroulé 50 radialement le plus interne est délimité axialement par deux bords axiaux 50A, 50B de l'ensemble de travail enroulé 50 et comprend les éléments de renfort filaires de travail 180 s'étendant axialement du bord axial 50A à l'autre bord axial 50B de l'ensemble de travail enroulé 50 les uns sensiblement parallèlement aux autres. Les éléments de renfort filaire de travail 180 s'étendent, dans la nappe de travail 49, selon une direction principale K2 sensiblement confondue avec la direction principale D2 de chaque élément de renfort filaire de travail 180 dans la nappe de travail 49.

Le deuxième ensemble de travail enroulé 50' radialement le plus externe est délimité axialement par deux bords axiaux 50'A, 50'B de l'ensemble de travail enroulé 50' et comprend les éléments de renfort filaires de travail 180' s'étendant sensiblement parallèlement les uns aux autres. Les éléments de renfort filaire de travail 180' s'étendent, dans la nappe de travail 49', selon une direction principale K2' sensiblement confondue avec la direction principale D2' de chaque élément de renfort filaire de travail 180' dans la nappe de travail 49'.

Chaque direction principale K2, K2' de chaque élément de renfort filaire de travail 180, 180 dans chaque nappe de travail 49, 49' forme, avec la direction circonférentielle z du support 60, l'angle AT, AT' de chaque élément de renfort filaire de travail 180, 180' décrits ci-dessus.

Puis, on réalise les étapes ultérieures de façon identique à celles du premier mode de réalisation.

On a représenté sur la figure 28 la variation du bruit émis et de la longueur circonférentielle Le de la jonction 21 en fonction de l'angle ES. Aux fins de simulation, l'angle EF a été pris égal à l'angle ES. Préalablement et afin de justifier de la pertinence du descripteur FzH10, il est utile de rappeler que la non-uniformité du pneumatique causée par la jonction 21 vient exciter le mode de cavité du pneumatique autour de 220 Hz. L'harmonique pertinente pour une telle fréquence est l'harmonique 10 considérée à une vitesse de 160 km/h pour la dimension du pneumatique décrit ci-dessus.

Le FzH10 est calculé en simulant la force verticale exercée sur le centre de la roue équipée du pneumatique selon l'invention gonflé à une pression nominale sous une charge nominale et roulant à 160 km/h. Puis, on fait une décomposition par harmonique au tour de roue du signal de la force verticale mesurée au centre de la roue.

La figure 28 illustre le fait que l'angle ES conforme à l'invention, à savoir allant de 20° à 60° permet d'obtenir le meilleur compromis entre la réduction du bruit et la réduction de la longueur Le et donc la productivité du procédé de fabrication.

L'invention ne se limite pas aux modes de réalisation décrits précédemment.

En effet, on pourra notamment mettre en oeuvre l'invention en utilisant deux couches de carcasse au lieu d'une unique couche de carcasse.

Concernant l'étape de réticulation, on pourra la mettre en oeuvre en utilisant des membranes, des dispositifs et des procédés tels que décrits dans les dépôts effectués au nom de la déposante sous les numéros suivants PCT/FR2020/051379, PCT/FR2020/051380, FR1913474, FR2001697, PCT/EP2020/065215 et sous le numéro de publication WO2019/258852.

## Revendications

1. Pneumatique (10) comprenant un sommet (12), deux flancs (22), deux bourrelets (24), chaque flanc (22) reliant chaque bourrelet (24) au sommet (12), le pneumatique (10) comprenant une armature de carcasse (32) ancrée dans chaque bourrelet (24) et s'étendant dans chaque flanc (22) et radialement intérieurement au sommet (12), le sommet (12) comprenant :
- une bande de roulement (20) destinée à venir en contact avec un sol lors du roulage du pneumatique (10),
- une armature de sommet (14) agencée radialement entre la bande de roulement (20) et l'armature de carcasse (32), l'armature de carcasse (32) comprenant au moins une couche de carcasse (34), l'armature de sommet (14) comprenant une armature de travail (16) comprenant au moins une couche de travail (18),
le pneumatique (10) comprenant une couche d'étanchéité (15) à un gaz de gonflage, la couche d'étanchéité (15) étant destinée à délimiter une cavité interne fermée avec un support de montage du pneumatique (10) une fois le pneumatique monté sur le support de montage, la couche d'étanchéité (10) comprenant une jonction (21) entre deux bords d'extrémité circonférentielle (23A, 23B) de la couche d'étanchéité (15), la jonction (21) formant une superposition radiale entre un des bords d'extrémité circonférentielle (23A, 23B) de la couche d'étanchéité (15) et l'autre des bords d'extrémité circonférentielle (23A, 23B) de la couche d'étanchéité (15),
**caractérisé en ce que** la jonction (21) s'étendant selon une direction principale (D4) forme, avec la direction circonférentielle (Z) du pneumatique :
- dans une portion (15S) de la couche d'étanchéité (15) s'étendant axialement à l'aplomb radial de la couche de travail (18) ou de la couche de travail radialement la plus interne (18) et présentant une largeur axiale égale à au moins 40% de la largeur axiale de la couche de travail (18) ou de la couche de travail radialement la plus interne (18), un angle (ES) allant, en valeur absolue, de 20° à 60°,
- dans une portion (15F) de la couche d'étanchéité (15) s'étendant radialement dans chaque flanc (22) et présentant une hauteur radiale égale à au moins 5% de la hauteur radiale (H) du pneumatique (10), un angle (EF), en valeur absolue, strictement supérieur à l'angle (ES) de la direction principale (D4) de la jonction (21) dans la portion (15S) de la couche d'étanchéité (15) s'étendant axialement à l'aplomb radial de la couche de travail (18) ou de la couche de travail radialement la plus interne (18).

2. Pneumatique (10) selon l'une quelconque des revendications précédentes, dans lequel la direction principale (D4) de la jonction (21) forme, avec la direction circonférentielle (Z) du pneumatique (10), un angle (ES), en valeur absolue, supérieur ou égal à 25°, de préférence supérieur ou égal à 30°, dans la portion (15S) de la couche d'étanchéité (15) s'étendant axialement à l'aplomb radial de la couche de travail (18) ou de la couche de travail radialement la plus interne (18).

3. Pneumatique (10) selon l'une quelconque des revendications précédentes, dans lequel la direction principale (D4) de la jonction (21) forme, avec la direction circonférentielle (Z) du pneumatique (10), un angle (ES), en valeur absolue, inférieur ou égal à 50°, de préférence inférieur ou égal à 40°, dans la portion (15S) de la couche d'étanchéité (15) s'étendant axialement à l'aplomb radial de la couche de travail (18) ou de la couche de travail radialement la plus interne (18).

4. Pneumatique (10) selon la revendication précédente, dans lequel la direction principale (D4) de la jonction (23) forme, avec la direction circonférentielle (Z) du pneumatique (10), un angle, en valeur absolue, allant de 80° à 90° dans la portion (15F) de la couche d'étanchéité (15) s'étendant radialement dans chaque flanc (22).

5. Pneumatique (10) selon l'une quelconque des revendications précédentes, dans lequel la distance moyenne (Dm) entre chaque bord d'extrémité circonférentielle (23A, 23B), va de 1 à 15 mm, de préférence de 2 à 8 mm, dans la portion (15S) de la couche d'étanchéité (15) s'étendant axialement à l'aplomb radial de la couche de travail (18) ou de la couche de travail radialement la plus interne (18).

6. Pneumatique (10) selon l'une quelconque des revendications précédentes, dans lequel l'épaisseur moyenne (Em) de la couche d'étanchéité (15) va de 0,4 à 1,6 mm, de préférence de 0,9 à 1,4 mm, dans la portion (15S) de la couche d'étanchéité (15) s'étendant axialement à l'aplomb radial de la couche de travail (18) ou de la couche de travail radialement la plus interne (18).

7. Pneumatique (10) selon l'une quelconque des revendications précédentes, dans lequel la ou chaque couche de travail (18) est délimitée axialement par deux bords axiaux (18A, 18B) de la ou chaque couche de travail (18) et comprend des éléments de renfort filaires de travail (180) s'étendant axialement d'un bord axial (18A, 18B) à l'autre bord axial (18A, 18B) de la ou chaque couche de travail (18) les uns sensiblement parallèlement aux autres selon une direction principale (D2) de chaque élément de renfort filaire de travail (180), la direction principale (D2) de chaque élément de renfort filaire de travail (180) de la ou de chaque couche de travail (18) formant, avec la direction circonférentielle (Z) du pneumatique (10), un angle (AT), en valeur absolue, strictement supérieur à 10°, de préférence allant de 15° à 50° et plus préférentiellement de 18° à 30°.

8. Pneumatique (10) selon l'une quelconque des revendications précédentes, dans lequel la ou chaque couche de carcasse (34) est délimitée axialement par deux bords axiaux (34A, 34B) de la ou chaque couche de carcasse (34) et comprend des éléments de renfort filaires de carcasse (340) s'étendant axialement d'un bord axial (34A, 34B) à l'autre bord axial (34A, 34B) de la ou chaque couche de carcasse (34), chaque élément de renfort filaire de carcasse (340) s'étendant selon une direction principale (D3) de chaque élément de renfort filaire de carcasse (340), la direction principale (D3) de chaque élément de renfort filaire de carcasse (340) de la ou chaque couche de carcasse (34) formant, avec la direction circonférentielle (Z) du pneumatique (10):
- un angle (ACS), en valeur absolue, strictement inférieur à 80° dans une portion (34S) de la couche de carcasse (34) s'étendant axialement à l'aplomb radial de la couche de travail (18) ou de la couche de travail radialement la plus interne,
- un angle (ACF), en valeur absolue, allant de 80° à 90° dans au moins une portion (34F) de la couche de carcasse (34) s'étendant radialement dans chaque flanc (22).

9. Pneumatique (10) selon la revendication précédente, dans lequel la direction principale (D3) de chaque élément de renfort filaire de carcasse (340) forme, avec la direction circonférentielle (Z) du pneumatique (10), un angle (ACS), en valeur absolue, supérieur ou égal à 10°, de préférence allant de 20° à 75° et plus préférentiellement allant de 35° à 70°, dans la portion (34S) de la couche de carcasse (34) s'étendant axialement à l'aplomb radial de la couche de travail (18) ou de la couche de travail radialement la plus interne (18).

10. Pneumatique (10) selon l'une quelconque des revendications précédentes, dans lequel l'armature de sommet (14) comprend une armature de frettage (17) agencée radialement à l'extérieur de l'armature de travail (16), l'armature de frettage (17) étant délimitée axialement par deux bords axiaux (17A, 17B) de l'armature de frettage (17) et comprenant au moins un élément de renfort filaire de frettage (170) enroulé circonférentiellement hélicoïdalement de façon à s'étendre axialement d'un bord axial (17A, 17B) à l'autre bord axial (17A, 17B) de l'armature de frettage (17).

11. Procédé de fabrication d'un pneumatique (10) selon l'une quelconque des revendications 1 à 10, dans lequel:
- on forme par enroulement d'une nappe d'étanchéité (70) ou de plusieurs nappes d'étanchéité autour d'un support (60) présentant une forme sensiblement cylindrique autour d'un axe principal (A), un ensemble d'étanchéité enroulé (72) destiné à former la couche d'étanchéité (15), l'ensemble d'étanchéité enroulé (72) comprenant une jonction (73) entre deux bords d'extrémité circonférentielle (73A, 73B) de l'ensemble d'étanchéité enroulé (72), la jonction (73) formant une superposition radiale entre un des bords d'extrémité circonférentielle (73A, 73B) de l'ensemble d'étanchéité enroulé (72) et l'autre des bords d'extrémité circonférentielle (73A, 73B) de l'ensemble d'étanchéité enroulé (72), la direction principale (K4) de la jonction (73) formant, avec la direction circonférentielle (z) du support (60), un angle initial (A4) sensiblement constant, sur l'ensemble de la largeur axiale de l'ensemble d'étanchéité enroulé (72) entre les deux bords axiaux (72A, 72B) de l'ensemble d'étanchéité enroulé (72);
- on forme par enroulement d'une nappe de carcasse (51) ou de plusieurs nappes de carcasse (51), radialement à l'extérieur de l'ensemble d'étanchéité enroulé, un ou plusieurs ensemble(s) de carcasse enroulé(s) (52), le ou les ensemble(s) de carcasse enroulé(s) (52) étant destiné(s) à former la ou les couche(s) de carcasse (34),
- on forme par enroulement d'une nappe de travail (49) ou de plusieurs nappes de travail (50), radialement à l'extérieur du ou des ensemble(s) de carcasse enroulé(s) (52), un ou plusieurs ensemble(s) de travail enroulé(s) (50), le ou les ensemble(s) de travail enroulé(s) (50) étant destiné(s) à former la ou les couche(s) de travail (18), l'ensemble d'étanchéité enroulé (72), le ou les ensemble(s) de carcasse enroulé(s) (52) et le ou les ensemble(s) de travail enroulé(s) (50) formant un assemblage (58) de forme sensiblement cylindrique autour de l'axe principal (A) du support (60),
- on déforme l'assemblage (58) de forme sensiblement cylindrique autour de l'axe principal (A) du support (60) de façon à obtenir un assemblage (58) de forme sensiblement torique autour de l'axe principal (A) du support (60),
**caractérisé en ce qu'on** déforme l'assemblage (58) de forme sensiblement cylindrique de façon à obtenir l'assemblage (58) de forme sensiblement torique de sorte que, postérieurement à l'étape de déformation, la direction principale (K4) de la jonction (73) forme, avec la direction circonférentielle (z) du support (60):
- dans une portion (72S) de l'ensemble d'étanchéité enroulé (72) s'étendant axialement à l'aplomb radial de l'ensemble de travail enroulé (50) ou de l'ensemble de travail enroulé radialement le plus interne (50) et présentant une largeur axiale égale à au moins 40% de la largeur axiale de l'ensemble de travail enroulé (50) ou de l'ensemble de travail enroulé radialement le plus interne (50), un angle final (B4S) allant, en valeur absolue, de 20° à 60°,
- dans une portion (72F) de l'ensemble d'étanchéité enroulé (72) destinée à s'étendre radialement dans chaque flanc (22) et présentant une hauteur radiale égale à au moins 5% de la hauteur radiale (H) du pneumatique fabriqué (10), un angle final (B4F), en valeur absolue, strictement supérieur à l'angle final (B4S) de la direction principale (K4) de la jonction (73) dans la portion (72S) de l'ensemble d'étanchéité enroulé (72) s'étendant axialement à l'aplomb radial de l'ensemble de travail enroulé (50) ou de l'ensemble de travail enroulé radialement le plus interne (50).

12. Procédé selon la revendication précédente, dans lequel l'angle final (B4F) formé par la direction principale (K4) de la jonction (73) avec la direction circonférentielle (z) du support (60) va, en valeur absolue, de 80° à 90° dans la portion (72F) de l'ensemble d'étanchéité enroulé (72) destinée à s'étendre radialement dans chaque flanc (22).

13. Procédé selon la revendication 11 ou 12, dans lequel, le ou chaque ensemble de carcasse enroulé (52) étant délimité axialement par deux bords axiaux (52A, 52B) du ou de chaque ensemble de carcasse enroulé (52) et comprenant des éléments de renfort filaires de carcasse (340) s'étendant sensiblement parallèlement les uns aux autres axialement d'un bord axial (52A, 52B) à l'autre bord axial (52A, 52B) du ou de chaque ensemble de carcasse enroulé (50), chaque élément de renfort filaire de carcasse (340) s'étendant, dans le ou chaque nappe de carcasse (51), selon une direction principale (K3) de chaque élément de renfort filaire de carcasse (340) dans la ou chaque nappe de carcasse (51), la direction principale (K3) de chaque élément de renfort filaire de carcasse (340) formant, avec la direction circonférentielle (Z) du support (60), un angle initial (A3) de chaque élément de renfort filaire de carcasse (340), on déforme l'assemblage (58) de forme sensiblement cylindrique de façon à obtenir l'assemblage (58) de forme sensiblement torique de sorte que la direction principale (K3) de chaque élément de renfort filaire de carcasse (340) forme, avec la direction circonférentielle (z) du support (60) :
- un angle final (B3S) de chaque élément de renfort filaire de carcasse (340), en valeur absolue, strictement inférieur à 80°, dans une portion (52S) du ou de chaque ensemble de carcasse enroulé (52) s'étendant axialement à l'aplomb radial de l'ensemble de travail enroulé (50) ou de l'ensemble de travail enroulé radialement le plus interne (50),
- un angle final (B3F) de chaque élément de renfort filaire de carcasse (340) allant, en valeur absolue, de 80° à 90°, dans une portion (52F) du ou de chaque ensemble de carcasse enroulé (52) destiné à s'étendre radialement dans chaque flanc (22).

14. Procédé selon l'une quelconque des revendications 11 à 13, dans lequel, le ou chaque ensemble de travail enroulé (50) étant délimité axialement par deux bords axiaux (50A, 50B) du ou de chaque ensemble de travail enroulé (50) et comprenant des éléments de renfort filaires de travail (180) s'étendant sensiblement parallèlement les uns aux autres axialement d'un bord axial (50A, 50B) à l'autre bord axial (50A, 50B) du ou de chaque ensemble de travail enroulé (50), chaque élément de renfort filaire de travail (180) s'étendant, dans la ou chaque nappe de travail (49), selon une direction principale (K2) de chaque élément de renfort filaire de travail (180) dans la ou chaque nappe de travail (49), la direction principale (K2) de chaque élément de renfort filaire de travail (180) dans la ou chaque nappe de travail (49) formant, avec la direction circonférentielle (Z) du support (60), un angle initial (A2) de chaque élément de renfort filaire de travail (180), on déforme l'assemblage (58) de forme sensiblement cylindrique de façon à obtenir l'assemblage (58) de forme sensiblement torique de sorte que la direction principale (K2) de chaque élément de renfort filaire de travail (180) forme, avec la direction circonférentielle (z) du support (60), un angle final (B2) de chaque élément de renfort filaire de travail (180), en valeur absolue, strictement supérieur à 10°, de préférence allant de 15° à 50° et plus préférentiellement de 18° à 30°.

15. Procédé de fabrication d'un pneumatique (10) selon l'une quelconque des revendications 1 à 10, dans lequel:
- on forme par enroulement d'une nappe d'étanchéité (70) ou de plusieurs nappes d'étanchéité autour d'un support (60) présentant une forme sensiblement cylindrique autour d'un axe principal (A), un ensemble d'étanchéité enroulé (72) destiné à former la couche d'étanchéité (15), l'ensemble d'étanchéité enroulé (72) comprenant une jonction (73) entre deux bords d'extrémité circonférentielle (73A, 73B) de l'ensemble d'étanchéité enroulé (72), la jonction (73) formant une superposition radiale entre un des bords d'extrémité circonférentielle (73A, 73B) de l'ensemble d'étanchéité enroulé (72) et l'autre des bords d'extrémité circonférentielle (73A, 73B) de l'ensemble d'étanchéité enroulé (72),
- on forme par enroulement d'une nappe de carcasse (51) ou de plusieurs nappes de carcasse (51), radialement à l'extérieur de l'ensemble d'étanchéité enroulé (72), un ou plusieurs ensemble(s) de carcasse enroulé(s) (52), le ou les ensemble(s) de carcasse enroulé(s) (52) étant destiné(s) à former la ou les couche(s) de carcasse (34),
l'ensemble d'étanchéité enroulé (72) et le ou les ensemble(s) de carcasse enroulé(s) (52) formant un assemblage (58) de forme sensiblement cylindrique autour de l'axe principal (A) du support (60),
- on déforme l'assemblage (58) de forme sensiblement cylindrique autour de l'axe principal (A) du support (60) de façon à obtenir un assemblage (58) de forme sensiblement torique autour de l'axe principal (A) du support (60),
- puis, postérieurement à l'étape de déformation de l'assemblage (58), on forme par enroulement d'une nappe de travail (49) ou de plusieurs nappes de travail (50), radialement à l'extérieur du ou des ensemble(s) de carcasse enroulé(s) (52), un ou plusieurs ensemble(s) de travail enroulé(s) (50) destiné(s) à former la ou les couche(s) de travail (18),
**caractérisé en ce que** :
- lors de l'étape de formation de l'ensemble d'étanchéité enroulé (72), on forme la jonction (73) de sorte que la direction principale (K4) de la jonction (73) forme, avec la direction circonférentielle (z) du support (60):
- dans une portion (72S) de l'ensemble d'étanchéité enroulé (72) destinée à s'étendre axialement à l'aplomb radial de l'ensemble de travail enroulé (50) ou de l'ensemble de travail enroulé radialement le plus interne (50), un angle initial (A4S), en valeur absolue, strictement inférieur à 80°,
- dans une portion (72F) de l'ensemble d'étanchéité enroulé (72) destinée à s'étendre radialement dans chaque flanc (22), un angle initial (A4F), en valeur absolue, strictement supérieur à l'angle initial (A4S) de la direction principale (K4) de la jonction (73) dans la portion (72S) de l'ensemble d'étanchéité enroulé (72) destinée à s'étendre axialement à l'aplomb radial de l'ensemble de travail enroulé (50) ou de l'ensemble de travail enroulé radialement le plus interne (50), et
- on déforme l'assemblage (58) de forme sensiblement cylindrique de façon à obtenir l'assemblage (58) de forme sensiblement torique de sorte que, postérieurement à l'étape de déformation, la direction principale (K4) de la jonction (73) forme, avec la direction circonférentielle (z) du support (60):
- dans la portion (72S) de l'ensemble d'étanchéité enroulé (72) destinée à s'étendre axialement à l'aplomb radial de l'ensemble de travail enroulé (50) ou de l'ensemble de travail enroulé radialement le plus interne (50) et présentant une largeur axiale égale à au moins 70% de la largeur axiale de l'ensemble de travail enroulé (50) ou de l'ensemble de travail enroulé radialement le plus interne (50), un angle final (B4S), en valeur absolue, allant de 20° à 60°,
- dans la portion (72F) de l'ensemble d'étanchéité enroulé (72) destinée à s'étendre radialement dans chaque flanc (22) et présentant une hauteur radiale égale à au moins 60% de la hauteur radiale (H) du pneumatique fabriqué (10), un angle final (B4F), en valeur absolue, strictement supérieur à l'angle final (B4S) de la direction principale (K4) de la jonction (73) dans la portion (72S) de l'ensemble d'étanchéité enroulé (72) destinée à s'étendre axialement à l'aplomb radial de l'ensemble de travail enroulé (50) ou de l'ensemble de travail enroulé radialement le plus interne (50).

## Patentansprüche

1. Reifen (10), umfassend einen Scheitel (12), zwei Flanken (22) und zwei Wülste (24), wobei die Flanken (22) die Wülste (24) jeweils mit dem Scheitel (12) verbinden, wobei der Reifen (10) eine Karkassenbewehrung (32) umfasst, die in jeder Wulst (24) verankert ist und sich in jede Flanke (22) und radial innen zum Scheitel (12) erstreckt, wobei der Scheitel (12) Folgendes umfasst:
- einen Laufstreifen (20), der dazu bestimmt ist, beim Rollen des Reifens (10) mit einem Boden in Kontakt zu treten,
- eine Scheitelbewehrung (14) die radial zwischen dem Laufstreifen (20) und der Karkassenbewehrung (32) angeordnet ist, wobei die Karkassenbewehrung (32) mindestens eine Karkassenschicht (34) umfasst, wobei die Scheitelbewehrung (14) eine Arbeitsbewehrung (16) umfasst, die mindestens eine Arbeitsschicht (18) umfasst,
wobei der Reifen (10) eine Dichtungsschicht (15) für ein Aufblasgas umfasst, wobei die Dichtungsschicht (15) dazu bestimmt ist, einen geschlossenen inneren Hohlraum mit einem Montageträger des Reifens (10) zu begrenzen, wenn der Reifen auf dem Montageträger montiert ist, wobei die Dichtungsschicht (10) eine Verbindung (21) zwischen zwei Umfangsendkanten (23A, 23B) der Dichtungsschicht (15) umfasst, wobei die Verbindung (21) eine radiale Überlagerung zwischen einer der Umfangsendkanten (23A, 23B) der Dichtungsschicht (15) und der anderen der Umfangsendkanten (23A, 23B) der Dichtungsschicht (15) bildet,
**dadurch gekennzeichnet, dass** die Verbindung (21), die sich entlang einer Hauptrichtung (D4) erstreckt, zusammen mit der Umfangsrichtung (Z) des Reifens:
- in einem Abschnitt (15S) der Dichtungsschicht (15), der sich axial im radialen Lot der Arbeitsschicht (18) oder der radial innersten Arbeitsschicht (18) erstreckt und eine axiale Breite von mindestens 40 % der axialen Breite der Arbeitsschicht (18) oder der radial innersten Arbeitsschicht (18) aufweist, einen Winkel (ES) bildet, der in absoluten Werten 20° bis 60° beträgt,
- in einem Abschnitt (15F) der Dichtungsschicht (15), der sich radial in jeder Flanke (22) erstreckt und eine radiale Höhe von mindestens 5 % der radialen Höhe (H) des Reifens (10) aufweist, einen Winkel (EF) bildet, der in absoluten Werten strikt größer ist als der Winkel (ES) der Hauptrichtung (D4) der Verbindung (21) im Abschnitt (15S) der Dichtungsschicht (15), der sich axial im radialen Lot der Arbeitsschicht (18) oder der radial innersten Arbeitsschicht (18) erstreckt.

2. Reifen (10) nach einem der vorangehenden Ansprüche, wobei die Hauptrichtung (D4) der Verbindung (21) mit der Umfangsrichtung (Z) des Reifens (10) im Abschnitt (15S) der Dichtungsschicht (15), der sich axial im radialen Lot der Arbeitsschicht (18) oder der radial innersten Arbeitsschicht (18) erstreckt, einen Winkel (ES) bildet, der in absoluten Werten 25° oder mehr, vorzugsweise 30° oder mehr, beträgt.

3. Reifen (10) nach einem der vorangehenden Ansprüche, wobei die Hauptrichtung (D4) der Verbindung (21) mit der Umfangsrichtung (Z) des Reifens (10) im Abschnitt (15S) der Dichtungsschicht (15), der sich axial im radialen Lot der Arbeitsschicht (18) oder der radial innersten Arbeitsschicht (18) erstreckt, einen Winkel (ES) bildet, der in absoluten Werten 50° oder weniger, vorzugsweise 40° oder weniger, beträgt.

4. Reifen (10) nach dem vorangehenden Anspruch, wobei die Hauptrichtung (D4) der Verbindung *(23)* mit der Umfangsrichtung (Z) des Reifens (10) im Abschnitt (15F) der Dichtungsschicht (15), der sich radial in jeder Flanke (22) erstreckt, einen Winkel bildet, der in absoluten Werten 80° bis 90° beträgt.

5. Reifen (10) nach einem der vorangehenden Ansprüche, wobei der mittlere Abstand (Dm) zwischen jeder Umfangsendkante (23A, 23B) im Abschnitt (15S) der Dichtungsschicht (15), der sich axial im radialen Lot der Arbeitsschicht (18) oder der radial innersten Arbeitsschicht (18) erstreckt, 1 bis 15 mm, vorzugsweise 2 bis 8 mm, beträgt.

6. Reifen (10) nach einem der vorangehenden Ansprüche, wobei die mittlere Dicke (Em) der Dichtungsschicht (15) im Abschnitt (15S) der Dichtungsschicht (15), der sich axial im radialen Lot der Arbeitsschicht (18) oder der radial innersten Arbeitsschicht (18) erstreckt, 0,4 bis 1,6 mm, vorzugsweise 0,9 bis 1,4 mm, beträgt.

7. Reifen (10) nach einem der vorangehenden Ansprüche, wobei die oder jede Arbeitsschicht (18) axial durch zwei axiale Kanten (18A, 18B) der bzw. jeder Arbeitsschicht (18) begrenzt ist und drahtförmige Arbeitsverstärkungselemente (180) umfasst, die sich axial von einer axialen Kante (18A, 18B) zur anderen axialen Kante (18A, 18B) der bzw. jeder Arbeitsschicht (18) im Wesentlichen parallel zueinander entlang einer Hauptrichtung (D2) jedes drahtförmigen Arbeitsverstärkungselements (180) erstrecken, wobei die Hauptrichtung (D2) jedes drahtförmigen Arbeitsverstärkungselements (180) der bzw. jeder Arbeitsschicht (18) mit der Umfangsrichtung (Z) des Reifens (10) einen Winkel (AT) bildet, der in absoluten Werten strikt größer als 10° ist und vorzugsweise 15° bis 50° und noch bevorzugter 18° bis 30° beträgt.

8. Reifen (10) nach einem der vorangehenden Ansprüche, wobei die oder jede Karkassenschicht (34) axial durch zwei axiale Kanten (34A, 34B) der bzw. jeder Karkassenschicht (34) begrenzt ist und drahtförmige Karkassenverstärkungselemente (340) umfasst, die sich axial von einer axialen Kante (34A, 34B) zur anderen axialen Kante (34A, 34B) der bzw. jeder Karkassenschicht (34) erstrecken, wobei sich jedes drahtförmige Karkassenverstärkungselement (340) in einer Hauptrichtung (D3) jedes drahtförmigen Karkassenverstärkungselements (340) erstreckt, wobei die Hauptrichtung (D3) jedes drahtförmigen Karkassenverstärkungselements (340) der bzw. jeder Karkassenschicht (34) mit der Umfangsrichtung (Z) des Reifens (10):
- in einem Abschnitt (34S) der Karkassenschicht (34), der sich axial im radialen Lot der Arbeitsschicht (18) oder der radial innersten Arbeitsschicht erstreckt, einen Winkel (ACS) bildet, der in absoluten Werten strikt weniger als 80° beträgt,
- in mindestens einem Abschnitt (34F) der Karkassenschicht (34), der sich radial in jeder Flanke (22) erstreckt, einen Winkel (ACF) bildet, der in absoluten Werten 80° bis 90° beträgt.

9. Reifen (10) nach dem vorangehenden Anspruch, wobei die Hauptrichtung (D3) jedes drahtförmigen Karkassenverstärkungselements (340) mit der Umfangsrichtung (Z) des Reifens (10) im Abschnitt (34S) der Karkassenschicht (34), der sich axial im radialen Lot der Arbeitsschicht (18) oder der radial innersten Arbeitsschicht (18) erstreckt, einen Winkel (ACS) bildet, der in absoluten Werten 10° oder mehr, vorzugsweise 20° bis 75° und noch bevorzugter 35° bis 70° beträgt.

10. Reifen (10) nach einem der vorangehenden Ansprüche, wobei die Scheitelbewehrung (14) eine Schrumpfbewehrung (17) umfasst, die radial außerhalb der Arbeitsbewehrung (16) angeordnet ist, wobei die Schrumpfbewehrung (17) axial durch zwei axiale Kanten (17A, 17B) der Schrumpfbewehrung (17) begrenzt ist und mindestens ein drahtförmiges Schrumpfverstärkungselement (170) umfasst, das in Umfangsrichtung schraubenförmig gewickelt ist, so dass es sich axial von einer axialen Kante (17A, 17B) zur anderen axialen Kante (17A, 17B) der Schrumpfbewehrung (17) erstreckt.

11. Verfahren zur Herstellung eines Reifens (10) nach einem der Ansprüche 1 bis 10, wobei:
- durch Wickeln einer Dichtungslage (70) oder mehrerer Dichtungslagen um einen Träger (60) mit einer im Wesentlichen zylindrischen Form um eine Hauptachse (A) eine gewickelte Dichtungsanordnung (72) gebildet wird, die dazu bestimmt ist, die Dichtungsschicht (15) zu bilden, wobei die gewickelte Dichtungsanordnung (72) eine Verbindung (73) zwischen zwei Umfangsendkanten (73A, 73B) der gewickelten Dichtungsanordnung (72) umfasst, wobei die Verbindung (73) eine radiale Überlagerung zwischen einer der Umfangsendkanten (73A, 73B) der gewickelten Dichtungsanordnung (72) und der anderen der Umfangsendkanten (73A, 73B) der gewickelten Dichtungsanordnung (72) bildet, wobei die Hauptrichtung (K4) der Verbindung (73) mit der Umfangsrichtung (z) des Trägers (60) über die gesamte axiale Breite der gewickelten Dichtungsanordnung (72) zwischen den beiden axialen Kanten (72A, 72B) der gewickelten Dichtungsanordnung (72) einen im Wesentlichen konstanten Anfangswinkel (A4) bildet;
- durch Wickeln einer Karkassenlage (51) oder mehrerer Karkassenlagen (51) radial außerhalb der gewickelten Dichtungsanordnung eine oder mehrere gewickelte Karkassenanordnungen (52) gebildet werden, wobei die gewickelte(n) Karkassenanordnung(en) (52) dazu bestimmt sind, die Karkassenschicht(en) (34) zu bilden,
- durch Wickeln einer Arbeitslage (49) oder mehrerer Arbeitslagen (50) radial außerhalb der gewickelte(n) Karkassenanordnung(en) (52) eine oder mehrere gewickelte Arbeitsanordnungen (50) gebildet werden, wobei die gewickelte(n) Arbeitsanordnung(en) (50) dazu bestimmt ist (sind), die Arbeitsschicht(en) (18) zu bilden, wobei die gewickelte Dichtungsanordnung (72), die gewickelte(n) Karkassenanordnung(en) (52) und die gewickelte(n) Arbeitsanordnung(en) (50) eine im Wesentlichen zylindrisch geformte Baugruppe (58) um die Hauptachse (A) des Trägers (60) bilden,
- die im Wesentlichen zylindrisch geformte Baugruppe (58) um die Hauptachse (A) des Trägers (60) verformt wird, um eine im Wesentlichen torisch geformte Baugruppe (58) um die Hauptachse (A) des Trägers (60) zu erhalten,
**dadurch gekennzeichnet, dass** die im Wesentlichen zylindrisch geformte Baugruppe (58) verformt wird, um die im Wesentlichen torisch geformte Baugruppe (58) zu erhalten, so dass nach dem Verformungsschritt die Hauptrichtung (K4) der Verbindung (73) mit der Umfangsrichtung (z) des Trägers (60):
- in einem Abschnitt (72S) der gewickelten Dichtungsanordnung (72), der sich axial im radialen Lot der gewickelten Arbeitsanordnung (50) oder der radial innersten gewickelten Arbeitsanordnung (50) erstreckt und eine axiale Breite von mindestens 40 % der axialen Breite der gewickelten Arbeitsanordnung (50) oder der radial innersten gewickelten Arbeitsanordnung (50) aufweist, einen Endwinkel (B4S) bildet, der in absoluten Werten 20° bis 60° beträgt,
- in einem Abschnitt (72F) der gewickelten Dichtungsanordnung (72), der dazu bestimmt ist, sich radial in jeder Flanke (22) zu erstrecken, und eine radiale Höhe von mindestens 5 % der radialen Höhe (H) des gefertigten Reifens (10) aufweist, einen Endwinkel (B4F) bildet, der in absoluten Werten strikt größer ist als der Endwinkel (B4S) der Hauptrichtung (K4) der Verbindung (73) im Abschnitt (72S) der gewickelten Dichtungsanordnung (72), der sich axial im radialen Lot der gewickelten Arbeitsanordnung (50) oder der radial innersten gewickelten Arbeitsanordnung (50) erstreckt.

12. Verfahren nach dem vorangehenden Anspruch, wobei der Endwinkel (B4F), der durch die Hauptrichtung (K4) der Verbindung (73) mit der Umfangsrichtung (z) des Trägers (60) gebildet wird, im Abschnitt (72F) der gewickelten Dichtungsanordnung (72), der dazu bestimmt ist, sich radial in jeder Flanke (22) zu erstrecken, in absoluten Werten 80° bis 90° beträgt.

13. Verfahren nach Anspruch 11 oder 12, wobei die oder jede gewickelte Karkassenanordnung (52) axial durch zwei axiale Kanten (52A, 52B) der bzw. jeder gewickelten Karkassenanordnung (52) begrenzt ist und drahtförmige Karkassenverstärkungselemente (340) umfasst, die sich im Wesentlichen parallel zueinander axial von einer axialen Kante (52A, 52B) zur anderen axialen Kante (52A, 52B) der bzw. jeder gewickelten Karkassenanordnung (50) erstrecken, wobei sich jedes drahtförmige Karkassenverstärkungselement (340) in der bzw. jeder Karkassenlage (51) in einer Hauptrichtung (K3) jedes drahtförmigen Karkassenverstärkungselements (340) in der bzw. jeder Karkassenlage (51) erstreckt, wobei die Hauptrichtung (K3) jedes drahtförmigen Karkassenverstärkungselements (340) mit der Umfangsrichtung (Z) des Trägers (60) einen Anfangswinkel (A3) jedes drahtförmigen Karkassenverstärkungselements (340) bildet, wobei die im Wesentlichen zylindrisch geformte Baugruppe (58) verformt wird, um die im Wesentlichen torisch geformte Baugruppe (58) zu erhalten, so dass die Hauptrichtung (K3) jedes drahtförmigen Karkassenverstärkungselements (340) mit der Umfangsrichtung (z) des Trägers (60):
- in einem Abschnitt (52S) der bzw. jeder gewickelten Karkassenanordnung (52), der sich axial im radialen Lot der gewickelten Arbeitsanordnung (50) oder der radial innersten gewickelten Arbeitsanordnung (50) erstreckt, einen Endwinkel (B3S) jedes drahtförmigen Karkassenverstärkungselements (340) bildet, der in absoluten Werten strikt kleiner als 80° ist,
- in einem Abschnitt (52F) der bzw. jeder gewickelten Karkassenanordnung (52), der dazu bestimmt ist, sich radial in jeder Flanke (22) zu erstrecken, einen Endwinkel (B3F) jedes drahtförmigen Karkassenverstärkungselements (340) bildet, der in absoluten Werten 80° bis 90° beträgt.

14. Verfahren nach einem der Ansprüche 11 bis 13, wobei die bzw. jede gewickelte Arbeitsanordnung (50) axial durch zwei axiale Kanten (50A, 50B) der bzw. jeder gewickelten Arbeitsanordnung (50) begrenzt ist und drahtförmige Arbeitsverstärkungselemente (180) umfasst, die sich im Wesentlichen parallel zueinander axial von einer axialen Kante (50A, 50B) zur anderen axialen Kante (50A, 50B) der bzw. jeder gewickelten Arbeitsanordnung (50) erstrecken, wobei sich jedes drahtförmige Arbeitsverstärkungselement (180) in der bzw. jeder Arbeitslage (49) in einer Hauptrichtung (K2) jedes drahtförmigen Arbeitsverstärkungselements (180) in der bzw. jeder Arbeitslage (49) erstreckt, wobei die Hauptrichtung (K2) jedes drahtförmigen Arbeitsverstärkungselements (180) in der bzw. jeder Arbeitslage (49) mit der Umfangsrichtung (Z) des Trägers (60) einen Anfangswinkel (A2) jedes drahtförmigen Arbeitsverstärkungselements (180) bildet, wobei die im Wesentlichen zylindrisch geformte Baugruppe (58) verformt wird, um die im Wesentlichen torisch geformte Baugruppe (58) zu erhalten, so dass die Hauptrichtung (K2) jedes drahtförmigen Arbeitsverstärkungselements (180) mit der Umfangsrichtung (z) des Trägers (60) einen Endwinkel (B2) jedes drahtförmigen Arbeitsverstärkungselements (180) bildet, der in absoluten Werten strikt größer als 10° ist und vorzugsweise 15° bis 50° und noch bevorzugter 18° bis 30° beträgt.

15. Verfahren zur Herstellung eines Reifens (10) nach einem der Ansprüche 1 bis 10, wobei:
- durch Wickeln einer Dichtungslage (70) oder mehrerer Dichtungslagen um einen Träger (60) mit einer im Wesentlichen zylindrischen Form um eine Hauptachse (A) eine gewickelte Dichtungsanordnung (72) gebildet wird, die dazu bestimmt ist, die Dichtungsschicht (15) zu bilden, wobei die gewickelte Dichtungsanordnung (72) eine Verbindung (73) zwischen zwei Umfangsendkanten (73A, 73B) der gewickelten Dichtungsanordnung (72) umfasst, wobei die Verbindung (73) eine radiale Überlagerung zwischen einer der Umfangsendkanten (73A, 73B) der gewickelten Dichtungsanordnung (72) und der anderen der Umfangsendkanten (73A, 73B) der gewickelten Dichtungsanordnung (72) bildet,
- durch Wickeln einer Karkassenlage (51) oder mehrerer Karkassenlagen (51) radial außerhalb der gewickelten Dichtungsanordnung (72) eine oder mehrere gewickelte Karkassenanordnungen (52) gebildet werden, wobei die gewickelte(n) Karkassenanordnung(en) (52) dazu bestimmt ist (sind), die Karkassenschicht(en) (34) zu bilden, wobei die gewickelte Dichtungsanordnung (72) und die gewickelte(n) Karkassenanordnung(en) (52) eine im Wesentlichen zylindrisch geformte Baugruppe (58) um die Hauptachse (A) des Trägers (60) bilden,
- die im Wesentlichen zylindrisch geformte Baugruppe (58) um die Hauptachse (A) des Trägers (60) verformt wird, um eine im Wesentlichen torisch geformte Baugruppe (58) um die Hauptachse (A) des Trägers (60) zu erhalten,
- anschließend nach dem Schritt der Verformung der Baugruppe (58) durch Wickeln einer Arbeitslage (49) oder mehrerer Arbeitslagen *(50)* radial außerhalb der gewickelten Karkassenanordnung(en) (52) eine oder mehrere gewickelte Arbeitsanordnungen (50) gebildet werden, die dazu bestimmt sind, die Arbeitsschicht(en) (18) zu bilden,
**dadurch gekennzeichnet, dass**:
- beim Schritt der Bildung der gewickelten Dichtungsanordnung (72) die Verbindung (73) so gebildet wird, dass die Hauptrichtung (K4) der Verbindung (73) mit der Umfangsrichtung (z) des Trägers (60):
- in einem Abschnitt (72S) der gewickelten Dichtungsanordnung (72), der dazu bestimmt ist, sich axial im radialen Lot der gewickelten Arbeitsanordnung (50) oder der radial innersten gewickelten Arbeitsanordnung (50) zu erstrecken, einen Anfangswinkel (A4S) bildet, der in absoluten Werten strikt kleiner als 80° ist,
- in einem Abschnitt (72F) der gewickelten Dichtungsanordnung (72), der dazu bestimmt ist, sich radial in jeder Flanke (22) zu erstrecken, einen Anfangswinkel (A4F) bildet, der in absoluten Werten strikt größer als der Anfangswinkel (A4S) der Hauptrichtung (K4) der Verbindung (73) im Abschnitt (72S) der gewickelten Dichtungsanordnung (72) ist, der dazu bestimmt ist, sich axial im radialen Lot der gewickelten Arbeitsanordnung (50) oder der radial innersten gewickelten Arbeitsanordnung (50) zu erstrecken, und
- die im Wesentlichen zylindrisch geformte Baugruppe (58) verformt wird, um die im Wesentlichen torisch geformte Baugruppe (58) zu erhalten, so dass nach dem Verformungsschritt die Hauptrichtung (K4) der Verbindung (73) mit der Umfangsrichtung (z) des Trägers (60):
- im Abschnitt (72S) der gewickelten Dichtungsanordnung (72), der dazu bestimmt ist, sich axial im radialen Lot der gewickelten Arbeitsanordnung (50) oder der radial innersten gewickelten Arbeitsanordnung (50) zu erstrecken, und eine axiale Breite von mindestens 70 % der axialen Breite der gewickelten Arbeitsanordnung (50) oder der radial innersten gewickelten Arbeitsanordnung (50) aufweist, einen Endwinkel (B4S) bildet, der in absoluten Werten 20° bis 60° beträgt,
- im Abschnitt (72F) der gewickelten Dichtungsanordnung (72), der dazu bestimmt ist, sich radial in jeder Flanke (22) zu erstrecken, und eine radiale Höhe von mindestens 60 % der radialen Höhe (H) des gefertigten Reifens (10) aufweist, einen Endwinkel (B4F) bildet, der in absoluten Werten strikt größer als der Endwinkel (B4S) der Hauptrichtung (K4) der Verbindung (73) im Abschnitt (72S) der gewickelten Dichtungsanordnung (72) ist, der dazu bestimmt ist, sich axial im radialen Lot der gewickelten Arbeitsanordnung (50) oder der radial innersten gewickelten Arbeitsanordnung (50) zu erstrecken.

## Claims

1. Tyre (10) comprising a crown (12), two sidewalls (22), two beads (24), each sidewall (22) connecting each bead (24) to the crown (12), the tyre (10) comprising a carcass reinforcement (32) anchored in each bead (24) and extending in each sidewall (22) and radially inwardly at the crown (12), the crown (12) comprising:
- a tread (20) intended to come into contact with the ground when the tyre (10) is rolling,
- a crown reinforcement (14) arranged radially between the tread (20) and the carcass reinforcement (32), the carcass reinforcement (32) comprising at least one carcass layer (34), the crown reinforcement (14) comprising a working reinforcement (16) comprising at least one working layer (18),
the tyre (10) comprising a sealing layer (15) for sealing against an inflation gas, the sealing layer (15) being intended to delimit an internal cavity closed with a mounting support for the tyre (10) once the tyre has been mounted on the mounting support, the sealing layer (10) comprising a junction (21) between two circumferential end edges (23A, 23B) of the sealing layer (15), the junction (21) forming a radial overlap between one of the circumferential end edges (23A, 23B) of the sealing layer (15) and the other of the circumferential end edges (23A, 23B) of the sealing layer (15), **characterized in that** the junction (21) extending in a main direction (D4) forms, with the circumferential direction (Z) of the tyre:
- in a portion (15S) of the sealing layer (15) extending axially in radial line with the working layer (18) or the radially innermost working layer (18) and having an axial width equal to at least 40% of the axial width of the working layer (18) or of the radially innermost working layer (18), an angle (ES) ranging, in absolute value, from 20° to 60°,
- in a portion (15F) of the sealing layer (15) extending radially in each sidewall (22) and having a radial height equal to at least 5% of the radial height (H) of the tyre (10), an angle (EF), in absolute value, strictly greater than the angle (ES) of the main direction (D4) of the junction (21) in the portion (15S) of the sealing layer (15) extending axially in radial line with the working layer (18) or the radially innermost working layer (18).

2. Tyre (10) according to any one of the preceding claims, in which the main direction (D4) of the junction (21) forms, with the circumferential direction (Z) of the tyre (10), an angle (ES), in absolute value, greater than or equal to 25°, preferably greater than or equal to 30°, in the portion (15S) of the sealing layer (15) extending axially in radial line with the working layer (18) or the radially innermost working layer (18).

3. Tyre (10) according to any one of the preceding claims, in which the main direction (D4) of the junction (21) forms, with the circumferential direction (Z) of the tyre (10), an angle (ES), in absolute value, less than or equal to 50°, preferably less than or equal to 40°, in the portion (15S) of the sealing layer (15) extending axially in radial line with the working layer (18) or the radially innermost working layer (18).

4. Tyre (10) according to the preceding claim, in which the main direction (D4) of the junction (23) forms, with the circumferential direction (Z) of the tyre (10), an angle, in absolute value, ranging from 80° to 90° in the portion (15F) of the sealing layer (15) extending radially in each sidewall (22).

5. Tyre (10) according to any one of the preceding claims, in which the average distance (Dm) between each circumferential end edge (23A, 23B) ranges from 1 to 15 mm, preferably from 2 to 8 mm, in the portion (15S) of the sealing layer (15) extending axially in radial line with the working layer (18) or the radially innermost working layer (18).

6. Tyre (10) according to any one of the preceding claims, in which the average thickness (Em) of the sealing layer (15) ranges from 0.4 to 1.6 mm, preferably from 0.9 to 1.4 mm, in the portion (15S) of the sealing layer (15) extending axially in radial line with the working layer (18) or the radially innermost working layer (18).

7. Tyre (10) according to any one of the preceding claims, in which the or each working layer (18) is delimited axially by two axial edges (18A, 18B) of the or each working layer (18) and comprises working filamentary reinforcing elements (180) extending axially from one axial edge (18A, 18B) to the other axial edge (18A, 18B) of the or each working layer (18) substantially parallel to one another in a main direction (D2) of each working filamentary reinforcing element (180), the main direction (D2) of each working filamentary reinforcing element (180) of the or each working layer (18) forming, with the circumferential direction (Z) of the tyre (10), an angle (AT), in absolute value, strictly greater than 10°, preferably ranging from 15° to 50° and more preferably from 18° to 30°.

8. Tyre (10) according to any one of the preceding claims, in which the or each carcass layer (34) is delimited axially by two axial edges (34A, 34B) of the or each carcass layer (34) and comprises carcass filamentary reinforcing elements (340) extending axially from one axial edge (34A, 34B) to the other axial edge (34A, 34B) of the or each carcass layer (34), each carcass filamentary reinforcing element (340) extending in a main direction (D3) of each carcass filamentary reinforcing element (340), the main direction (D3) of each carcass filamentary reinforcing element (340) of the or each carcass layer (34) forming, with the circumferential direction (Z) of the tyre (10):
- an angle (ACS), in absolute value, strictly less than 80° in a portion (34S) of the carcass layer (34) extending axially in radial line with the working layer (18) or the radially innermost working layer,
- an angle (ACF), in absolute value, ranging from 80° to 90° in at least one portion (34F) of the carcass layer (34) extending radially in each sidewall (22).

9. Tyre (10) according to the preceding claim, in which the main direction (D3) of each carcass filamentary reinforcing element (340) forms, with the circumferential direction (Z) of the tyre (10), an angle (ACS), in absolute value, greater than or equal to 10°, preferably ranging from 20° to 75° and more preferably ranging from 35° to 70°, in the portion (34S) of the carcass layer (34) extending axially in radial line with the working layer (18) or the radially innermost working layer (18).

10. Tyre (10) according to any one of the preceding claims, in which the crown reinforcement (14) comprises a hoop reinforcement (17) arranged radially outside the working reinforcement (16), the hoop reinforcement (17) being delimited axially by two axial edges (17A, 17B) of the hoop reinforcement (17) and comprising at least one hooping filamentary reinforcing element (170) wound circumferentially helically so as to extend axially from one axial edge (17A, 17B) to the other axial edge (17A, 17B) of the hoop reinforcement (17).

11. Method for manufacturing a tyre (10) according to any one of Claims 1 to 10, in which:
- there is formed, by winding a sealing ply (70) or a plurality of sealing plies around a support (60) having a substantially cylindrical shape around a main axis (A), a wound sealing assembly (72) intended to form the sealing layer (15), the wound sealing assembly (72) comprising a junction (73) between two circumferential end edges (73A, 73B) of the wound sealing assembly (72), the junction (73) forming a radial overlap between one of the circumferential end edges (73A, 73B) of the wound sealing assembly (72) and the other of the circumferential end edges (73A, 73B) of the wound sealing assembly (72), the main direction (K4) of the junction (73) forming, with the circumferential direction (z) of the support (60), a substantially constant initial angle (A4) over the whole of the axial width of the wound sealing assembly (72) between the two axial edges (72A, 72B) of the wound sealing assembly (72);
- there is formed, by winding a carcass ply (51) or a plurality of carcass plies (51), radially outside the wound sealing assembly, one or more wound carcass assembly(ies) (52), the wound carcass assembly(ies) (52) being intended to form the carcass layer(s) (34),
- there is formed, by winding a working ply (49) or a plurality of working plies (50), radially outside the wound carcass assembly(ies) (52), one or more wound working assemblies (50), the wound working assembly(ies) (50) being intended to form the working layer(s) (18), the wound sealing assembly (72), the wound carcass assembly(ies) (52) and the wound working assembly(ies) (50) forming an assembly (58) of substantially cylindrical shape around the main axis (A) of the support (60),
- the assembly (58) of substantially cylindrical shape around the main axis (A) of the support (60) is deformed so as to obtain an assembly (58) of substantially toric shape around the main axis (A) of the support (60),
**characterized in that** the assembly (58) of substantially cylindrical shape is deformed so as to obtain the assembly (58) of substantially toric shape so that, after the deformation step, the main direction (K4) of the junction (73) forms, with the circumferential direction (z) of the support (60):
- in a portion (72S) of the wound sealing assembly (72) extending axially in radial line with the wound working assembly (50) or the radially innermost wound working assembly ( 50) and having an axial width equal to at least 40% of the axial width of the wound working assembly (50) or the radially innermost wound working assembly (50), a final angle (B4S) ranging, in absolute value, from 20° to 60°,
- in a portion (72F) of the wound sealing assembly (72) intended to extend radially in each sidewall (22) and having a radial height equal to at least 5% of the radial height (H) of the manufactured tyre (10), a final angle (B4F), in absolute value, strictly greater than the final angle (B4S) of the main direction (K4) of the junction (73) in the portion (72S) of the wound sealing assembly (72) extending axially in radial line with the wound working assembly (50) or the radially innermost wound working assembly (50).

12. Method according to the preceding claim, in which the final angle (B4F) formed by the main direction (K4) of the junction (73) with the circumferential direction (z) of the support (60) ranges, in absolute value, from 80° to 90° in the portion (72F) of the wound sealing assembly (72) intended to extend radially in each sidewall (22).

13. Method according to Claim 11 or 12, in which, the or each wound carcass assembly (52) being axially delimited by two axial edges (52A, 52B) of the or each wound carcass assembly (52) and comprising carcass filamentary reinforcing elements (340) extending substantially parallel to one another axially from one axial edge (52A, 52B) to the other axial edge (52A, 52B) of the or each wound carcass assembly (50), each carcass filamentary reinforcing element (340) extending, in the or each carcass ply (51), in a main direction (K3) of each carcass filamentary reinforcing element (340) in the or each carcass ply (51), the main direction (K3) of each carcass filamentary reinforcing element (340) forming, with the circumferential direction (Z) of the support (60), an initial angle (A3) of each carcass filamentary reinforcing element (340), the assembly (58) of substantially cylindrical shape is deformed so as to obtain the assembly (58) of substantially toric shape so that the main direction (K3) of each carcass filamentary reinforcing element (340) forms, with the circumferential direction (z) of the support (60):
- a final angle (B3S) of each carcass filamentary reinforcing element (340), in absolute value, strictly less than 80°, in a portion (52S) of the or each wound carcass assembly (52) extending axially in radial line with the wound working assembly (50) or the radially innermost wound working assembly (50),
- a final angle (B3F) of each carcass filamentary reinforcing element (340) ranging, in absolute value, from 80° to 90°, in a portion (52F) of the or each wound carcass assembly (52) intended to extend radially into each sidewall (22).

14. Method according to any one of Claims 11 to 13, in which, the or each wound working assembly (50) being axially delimited by two axial edges (50A, 50B) of the or each wound working assembly (50) and comprising working filamentary reinforcing elements (180) extending substantially parallel to one another axially from one axial edge (50A, 50B) to the other axial edge (50A, 50B) of the or each wound working assembly (50), each working filamentary reinforcing element (180) extending, in the or each working ply (49), in a main direction (K2) of each working filamentary reinforcing element (180) in the or each working ply (49), the main direction (K2) of each working filamentary reinforcing element (180) in the or each working ply (49) forming, with the circumferential direction (Z) of the support (60), an initial angle (A2) of each working filamentary reinforcing element (180), the assembly (58) of substantially cylindrical shape is deformed so as to obtain the assembly (58) of substantially toric shape so that the main direction (K2) of each working filamentary reinforcing element (180) forms, with the circumferential direction (z) of the support (60), a final angle (B2) of each working filamentary reinforcing element (180), in absolute value, strictly greater than 10°, preferably ranging from 15° to 50° and more preferably from 18° to 30°.

15. Method for manufacturing a tyre (10) according to any one of Claims 1 to 10, in which:
- there is formed, by winding a sealing ply (70) or a plurality of sealing plies around a support (60) having a substantially cylindrical shape around a main axis (A), a wound sealing assembly (72) intended to form the sealing layer (15), the wound sealing assembly (72) comprising a junction (73) between two circumferential end edges (73A, 73B) of the wound sealing assembly (72), the junction (73) forming a radial overlap between one of the circumferential end edges (73A, 73B) of the wound sealing assembly (72) and the other of the circumferential end edges (73A, 73B) of the wound sealing assembly (72),
- there is formed, by winding a carcass ply (51) or a plurality of carcass plies (51), radially outside the wound sealing assembly (72), one or more wound carcass assembly(ies) (52), the wound carcass assembly(ies) (52) being intended to form the carcass layer(s) (34), the wound sealing assembly (72) and the wound carcass assembly(ies) (52) forming an assembly (58) of substantially cylindrical shape around the main axis (A) of the support (60),
- the assembly (58) of substantially cylindrical shape around the main axis (A) of the support (60) is deformed so as to obtain an assembly (58) of substantially toric shape around the main axis (A) of the support (60),
- then, after the step of deforming the assembly (58), there is formed, by winding a working ply (49) or a plurality of working plies (50), radially outside the wound carcass assembly(ies) (52), one or more wound working assemblies (50) intended to form the working layer(s) (18),
**characterized in that:**
- during the step of forming the wound sealing assembly (72), the junction (73) is formed so that the main direction (K4) of the junction (73) forms, with the circumferential direction (z) of the support (60):
- in a portion (72S) of the wound sealing assembly (72) intended to extend axially in radial line with the wound working assembly (50) or the radially innermost wound working assembly (50), an initial angle (A4S), in absolute value, strictly less than 80°,
- in a portion (72F) of the wound sealing assembly (72) intended to extend radially in each sidewall (22), an initial angle (A4F), in absolute value, strictly greater than the initial angle (A4S) of the main direction (K4) of the junction (73) in the portion (72S) of the wound sealing assembly (72) intended to extend axially in radial line with the wound working assembly (50) or the radially innermost wound working assembly (50), and
- the assembly (58) of substantially cylindrical shape is deformed so as to obtain the assembly (58) of substantially toric shape so that, after the deformation step, the main direction (K4) of the junction (73) forms, with the circumferential direction (z) of the support (60):
- in the portion (72S) of the wound sealing assembly (72) intended to extend axially in radial line with the wound working assembly (50) or the radially innermost wound working assembly (50) and having an axial width equal to at least 70% of the axial width of the wound working assembly (50) or the radially innermost wound working assembly (50), a final angle (B4S), in absolute value, ranging from 20° to 60°,
- in the portion (72F) of the wound sealing assembly (72) intended to extend radially in each sidewall (22) and having a radial height equal to at least 60% of the radial height (H) of the manufactured tyre (10), a final angle (B4F), in absolute value, strictly greater than the final angle (B4S) of the main direction (K4) of the junction (73) in the portion (72S) of the wound sealing assembly (72) intended to extend axially in radial line with the wound working assembly (50) or the radially innermost wound working assembly (50).
